(19) Europäisches Patentamt
European Patent Office
Office européen des brevets

(11) EP 1 087 664 B1

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(21) Anmeldenummer: **99929190.9**

(22) Anmeldetag: **12.06.1999**

(51) Int Cl.[7]: **A01N 43/80**, A01N 43/78
// A01N43:80, A01N61:00,
A01N43:78, A01N61:00

(86) Internationale Anmeldenummer:
**PCT/EP99/04055**

(87) Internationale Veröffentlichungsnummer:
**WO 99/065314 (23.12.1999 Gazette 1999/51)**

(54) **HERBIZIDE MISCHUNGEN MIT SYNERGISTISCHER WIRKUNG**

HERBICIDAL MIXTURES HAVING A SYNERGISTIC EFFECT

MELANGES HERBICIDES A EFFET SYNERGIQUE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.06.1998 DE 19826431**

(43) Veröffentlichungstag der Anmeldung:
**04.04.2001 Patentblatt 2001/14**

(73) Patentinhaber: **BASF AKTIENGESELLSCHAFT**
**67056 Ludwigshafen (DE)**

(72) Erfinder:
- **SIEVERNICH, Bernd**
  **D-67459 Böhl-Iggelheim (DE)**
- **LANDES, Max**
  **D-67161 Gönnheim (DE)**
- **KIBLER, Elmar**
  **D-67454 Hassloch (DE)**
- **VON DEYN, Wolfgang**
  **D-67435 Neustadt (DE)**
- **WALTER, Helmut**
  **D-67283 Obrigheim (DE)**
- **OTTEN, Martina**
  **D-67069 Ludwigshafen (DE)**
- **WESTPHALEN, Karl-Otto**
  **D-67346 Speyer (DE)**
- **VANTIEGHEM, Herve**
  **D-76297 Stutensee (DE)**

(56) Entgegenhaltungen:
**EP-A- 0 900 795**
**WO-A-96/26206**
**WO-A-97/23135**
**WO-A-98/28981**
**WO-A-98/31681**

- **DATABASE WPI Week 9435, 1994 Derwent Publications Ltd., London, GB; AN 283222 XP002117131 "Herbicidal composition used in tablet form." & JP 06 211610 A (NISSAN CHEM. IND. LTD.), 2. August 1994 (1994-08-02)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 087 664 B1

## Beschreibung

Die vorliegende Erfindung betrifft eine synergistische herbizide Mischung, enthaltend

A) mindestens ein 3-heterocyclyl-substituiertes Benzoylderivat der Formel I

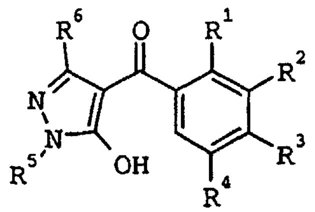

I

in der die Variablen folgende Bedeutung haben:

$R^1$, $R^3$ Wasserstoff, Halogen, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylthio, $C_1$-$C_6$-Alkylsulfinyl oder $C_1$-$C_6$-Alkylsulfonyl;

$R^2$ ein heterocyclischer Rest ausgewählt aus der Gruppe: Thiazol-2-yl, Thiazol-4-yl, Thiazol-5-yl, 4,5-Dihydroisoxazol-3-yl, 4,5-Dihydroisoxazol-4-yl und 4,5-Dihydroisoxazol-5-yl, wobei die sechs genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

$R^4$ Wasserstoff, Halogen oder $C_1$-$C_6$-Alkyl;

$R^5$ $C_1$-$C_6$-Alkyl;

$R^6$ Wasserstoff oder $C_1$-$C_6$-Alkyl;

oder eines seiner umweltverträglichen Salze;

und

B) eine synergistisch wirksame Menge mindestens einer herbiziden Verbindung aus der Gruppe der

B1 AcetylCoA-Carboxylase-Inhibitoren (ACC), z.B.

- Cyclohexenonoximether, wie Alloxydim, Clethodim, Cloproxydim, Cycloxydim, Sethoxydim, Tralkoxydim, Butroxydim, Clefoxydim oder Tepraloxydim;
- Phenoxyphenoxypropionsäureester, wie Clodinafop-propargyl (und ggf. Cloquintocet), Cyhalofop-butyl, Diclofop-methyl, Fenoxaprop-ethyl, Fenoxaprop-P-ethyl, Fenthia-propethyl, Fluazifop-butyl, Fluazifop-P-butyl, Haloxyfop-ethoxyethyl, Haloxyfop-methyl, Haloxyfop-P-methyl, Isoxapyrifop, Propaquizafop, Quizalofop-ethyl, Quizalofop-P-ethyl oder Quizalofop-tefuryl; oder
- Arylaminopropionsäuren, wie Flamprop-methyl oder Flamprop-isopropyl;

B2 Acetolactatsynthase-Inhibitoren (ALS), z.B.

- Imidazolinone, wie Imazapyr, Imazaquin, Imazamethabenz-methyl (Imazame), Imazamoc, Imazapic, Imazethapyr oder Imazamethapyr;
- Pyrimidylether, wie Pyrithiobac-säure, Pyrithiobac-sodium, Bispyribac-sodium, KIH-6127 oder Pyribenzoxym;
- Sulfonamide, wie Florasulam, Flumetsulam oder Metosulam; oder
- Sulfonylharnstoffe, wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxysulfuron, Flazasulfuron, Halosulfuron-methyl, Imazosulfuron, Metsulfuron-methyl, Nicosulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, N-[[[4-methoxy-6-(trifluoromethyl)-1,3,5-triazin-2-yl]amino]carbonyl]-2-(trifluoromethyl)-benzenesulfonamide, Sulfosulfuron oder Idosulfuron;

B3 Amide, z.B.

- Allidochlor (CDAA), Benzoylprop-ethyl, Bromobutide, Chlorthiamid, Diphenamid, Etobenzanid (Benzchlomet), Fluthiamide, Fosamin oder Monalide;

B4 Auxin-Herbizide, z.B.

- Pyridincarbonsäuren, wie Clopyralid oder Picloram; oder
- 2,4-D oder Benazolin;

B5 Auxin-Transport-Hemmer, z.B.

- Naptalame oder Diflufenzopyr;

B6 Carotinoid-Biosynthese-Inhibitoren, z.B.

- Benzofenap, Clomazone (Dimethazone), Diflufenican, Fluorochloridone, Fluridone, Pyrazolynate, Pyrazoxyfen, Isoxaflutole, Isoxachlortole, Mesotrione, Sulcotrione (Chlormesulone), Ketospiradox, Flurtamone, Norflurazon oder Amitrol;

B7 Enolpyruvyl-Shikimat-3-Phosphat-Synthase-Inhibitoren (ESPS), z.B.

- Glyphosate oder Sulfosate;

B8 Glutamin-Synthetase-Inhibitoren, z.B.

- Bilanafos (Bialaphos) oder Glufosinate-ammonium;

B9 Lipidbiosynthese-Inhibitoren, z.B.

- Anilide, wie Anilofos oder Mefenacet;
- Chloracetanilide, wie Dimethenamid, S-Dimethenamid, Acetochlor, Alachlor, Butachlor, Butenachlor, Diethatylethyl, Dimethachlor, Metazachlor, Metolachlor, S-Metolachlor, Pretilachlor, Propachlor, Prynachlor, Terbuchlor, Thenylchlor oder Xylachlor;
- Thioharnstoffe, wie Butylate, Cycloate, Di-allate, Dimepiperate, EPTC, Esprocarb, Molinate, Pebulate, Prosulfocarb, Thiobencarb (Benthiocarb), Tri-allate oder Vernolate; oder
- Benfuresate oder Perfluidone;

B10 Mitose-Inhibitoren, z.B.

- Carbamate, wie Asulam, Carbetamid, Chlorpropham, Orbencarb, Pronamid (Propyzamid), Propham oder Tiocarbazil;
- Dinitroaniline, wie Benefin, Butralin, Dinitramin, Ethalfluralin, Fluchloralin, Oryzalin, Pendimethalin, Prodiamine oder Trifluralin;
- Pyridine, wie Dithiopyr oder Thiazopyr; oder
- Butamifos, Chlorthal-dimethyl (DCPA) oder Maleic hydrazide;

B11 Protoporphyrinogen-IX-oxidase-Inhibitoren, z.B.

- Diphenylether, wie Acifluorfen, Acifluorfen-sodium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;
- Oxadiazole, wie Oxadiargyl oder Oxadiazon;
- cyclische Imide, wie Azafenidin, Butafenacil, Carfentrazone-ethyl, Cinidon-ethyl, Flumiclorac-pentyl, Flumioxazin, Flumipropyn, Flupropacil, Fluthiacet-methyl, Sulfentrazone oder Thidiazimin; oder
- Pyrazole, wie ET-751, JV 485 oder Nipyraclofen;

B12 Photosynthese-Inhibitoren, z.B.

- Propanil, Pyridate oder Pyridafol;
- Benzothiadiazinone, wie Bentazon;
- Dinitrophenole, wie Bromofenoxim, Dinoseb, Dinosebacetat, Dinoterb oder DNOC;
- Dipyridylene, wie Cyperquat-chlorid, Difenzoquat-methylsulfat, Diquat oder Paraquat-dichlorid;
- Harnstoffe, wie Chlorbromuron, Chlorotoluron, Difenoxuron, Dimefuron, Diuron, Ethidimuron, Fenuron, Fluometuron, Isoproturon, Isouron, Linuron, Methabenzthiazuron, Methazole, Metobenzuron, Metoxuron, Monolinuron, Neburon, Siduron oder Tebuthiuron;
- Phenole, wie Bromoxynil oder Ioxynil;
- Chloridazon;
- Triazine, wie Ametryn, Atrazin, Cyanazine, Desmetryn, Dimethamethryn, Hexazinon, Prometon, Prometryn, Propazin, Simazin, Simetryn, Terbumeton, Terbutryn, Terbutylazin oder Trietazin;
- Triazinone, wie Metamitron oder Metribuzin;
- Uracile, wie Bromacil, Lenacil oder Terbacil; oder
- Biscarbamate, wie Desmedipham oder Phemnedipham;

B13 Synergisten, z.B.

- Oxirane, wie Tridiphane;

B14 Wuchsstoffe, z.B.

- Aryloxyalkansäuren, wie 2,4-DB, Clomeprop, Dichlorprop, Dichlorprop-P (2,4-DP-P), Fluoroxypyr, MCPA, MCPB, Mecoprop, Mecoprop-P oder Triclopyr;
- Benzoesäuren, wie Chloramben oder Dicamba; oder
- Chinolincarbonsäuren, wie Quinclorac oder Quinmerac;

B15 Zellwandsynthese-Inhibitoren, z.B.

- Isoxaben oder Dichlobenil;

B16 Verschiedene weitere Herbizide, z.B.

- Dichlorpropionsäuren, wie Dalapon;
- Dihydrobenzofurane, wie Ethofumesate;
- Phenylessigsäuren, wie Chlorfenac (Fenac); oder
- Aziprotryn, Barban, Bensulide, Benzthiazuron, Benzofluor, Buminafos, Buthidazole, Buturon, Cafenstrole, Chlorbufam, Chlorfenprop-methyl, Chloroxuron, Cinmethylin, Cumyluron, Cycluron, Cyprazine, Cyprazole, Dibenzyluron, Dipropetryn, Dymron, Eglinazin-ethyl, Endothall, Ethiozin, Flucabazone, Fluorbentranil, Flupoxam, Isocarbamid, Isopropalin, Karbutilat, Mefluidide, Monuron, Napropamide, Napropanilide, Nitralin, Oxaciclomefone, Phenisopham, Piperophos, Procyazine, Profluralin, Pyributicarb, Secbumeton, Sulfallate (CDEC), Terbucarb, Triaziflam, Triazofenamid oder Trimeturon;

oder deren umweltverträgliche Salze.

Außerdem betrifft die Erfindung herbizide Mittel, enthaltend eine herbizid wirksame Menge einer synergistischen herbiziden Mischung, wie voranstehend definiert, sowie mindestens einen flüssigen und/oder festen Trägerstoff und gewünschtenfalls mindestens einen grenzflächenaktiven Stoff.

Des weiteren betrifft die Erfindung Verfahren zur Herstellung dieser Mittel und Verfahren zur Bekämpfung von unerwünschten Pflanzenwuchs.

Bei Pflanzenschutzmitteln ist es grundsätzlich wünschenswert, die spezifische Wirkung eines Wirkstoffs und die Wirkungssicherheit zu erhöhen. Der Erfindung lag daher die Aufgabe zugrunde, die Wirkung von bekannten herbizid wirksamen 3-heterocyclyl-substituierten Benzoylderivaten der Formel I zu erhöhen.

Aufgabe der Erfindung war es nun, die selektive herbizide Wirkung der 3-heterocyclyl-substituierten Benzoylderivate der Formel I gegen unerwünschte Schadpflanzen zu erhöhen.

Demgemäß wurden die Eingangs definierten Mischungen gefunden. Des weiteren wurden herbizide Mittel gefunden, die diese Mischungen enthalten, sowie Verfahren zur deren Herstellung und Verfahren zur Bekämpfung von unerwünschtem Pflanzenwuchs. Bei letztgenannten Verfahren ist es unerheblich, ob die herbizid wirksamen Verbindungen der Komponenten A) und B) gemeinsam oder getrennt formuliert und ausgebracht werden und in welcher Reihenfolge die Applikation bei getrennter Ausbringung erfolgt.

Die erfindungsgemäßen Mischungen zeigen einen synergistischen Effekt; die Verträglichkeit der herbizid wirksamen Verbindungen der Komponenten A) und B) für bestimmte Kulturpflanzen bleibt dabei im allgemeinen erhalten.

Als Komponente B kommen als AcetylCoA-Carboxylase-Inhibitoren (ACC) beispielsweise Cyclohexenonoximether, Phenoxyphenoxypropionsäureester oder Arylaminopropionsäuren in Betracht. Zu den Acetolactatsynthase-Inhibitoren (ALS) zählen unter anderem Imidazolinone, Pyrimidylether, Sulfonamide oder Sulfonylharnstoffe. Bei den Auxin-Herbiziden sind unter anderem Pyridincarbonsäuren, 2,4-D oder Benazolin von Relevanz. Als Lipidbiosynthese-Inhibitoren werden unter anderem Anilide, Chloracetanilide, Thioharnstoffe, Benfuresate oder Perfluidone verwendet. Bei den Mitose-Inhibitoren kommen unter anderem Carbamate, Dinitroaniline, Pyridine, Butamifos, Chlorthal-dimethyl (DCPA) oder Maleic hydrazide in Betracht. Beispiele für Protoporphyrinogen-IX-oxidase-Inhibitoren sind unter anderem Diphenylether, Oxadiazole, cyclische Imide oder Pyrazole. Als Photosynthese-Inhibitoren kommen unter anderem Propanil, Pyridate, Pyridafol, Benzothiadiazinone, Dinitrophenole, Dipyridylene, Harnstoffe, Phenole, Chloridazon, Triazine, Triazinone, Uracile oder Biscarbamate in Betracht. Zu den Synergisten zählen unter anderem Oxirane. Bei den Wuchsstoffe kommen beispielsweise Aryloxyalkansäuren, Benzoesäuren oder Chinolincarbonsäuren in Betracht. Unter der Gruppe "verschiedene weitere Herbizide" sind unter anderem die Wirkstoffklassen Dichlorpropionsäuren, Dihydrobenzofurane, Phenylessigsäuren sowie einzelne, wie unten angegeben, Herbizide zu verstehen, deren Wirkmechanismus nicht (genau) bekannt ist.

Weiterhin kommen als Komponente B Wirkstoffe aus der Gruppe der Amide, Auxin-Transport-Hemmer, Carotinoid-Biosynthese-Inhibitoren, Enolpyruvyl-Shikimat-3-Phosphat-Synthase-Inhibitoren (ESPS), Glutamin-Synthetase-Inhibitoren und Zellwandsynthese-Inhibitoren in Betracht.

Von besonderer Bedeutung sind nachfolgende Herbizide, die in Kombination mit den 3-heterocyclylsubstituierten Benzolyderivaten der Formel I gemäß der vorliegenden Erfindung verwendet werden können:

B1 AcetylCoA-Carboxylase-Inhibitoren (ACC), z.B.

- Cyclohexenonoximether, wie Alloxydim, Clethodim, Cloproxydim, Cycloxydim, Sethoxydim, Tralkoxydim, Butroxydim, Clefoxydim oder Tepraloxydim;
- Phenoxyphenoxypropionsäureester, wie Clodinafop-propargyl (und ggf. Cloquintocet), Cyhalofop-butyl, Diclofop-methyl, Fenoxaprop-ethyl, Fenoxaprop-P-ethyl, Fenthia-propethyl, Fluazifop-butyl, Fluazifop-P-butyl, Haloxyfop-ethoxyethyl, Haloxyfop-methyl, Haloxyfop-P-methyl, Isoxapyrifop, Propaquizafop, Quizalofop-ethyl, Quizalofop-P-ethyl oder Quizalofop-tefuryl; oder
- Arylaminopropionsäuren, wie Flamprop-methyl oder Flamprop-isopropyl;

B2 Acetolactatsynthase-Inhibitoren (ALS), z.B.

- Imidazolinone, wie Imazapyr, Imazaquin, Imazamethabenzmethyl (Imazame), Imazapic, Imazethapyr oder Imazamethapyr;
- Pyrimidylether, wie Pyrithiobac-säure, Pyrithiobac-sodium, Bispyribac-sodium, KIH-6127 oder Pyribenzoxym;
- Sulfonamide, wie Flumetsulam oder Metosulam; oder
- Sulfonylharnstoffe, wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxysulfuron, Flazasulfuron, Halosulfuron-methyl, Imazosulfuron, Metsulfuron-methyl, Nicosulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, N-[[[4-methoxy-6-(trifluoromethyl)-1,3,5-triazin-2-yl]amino]carbonyl]-2-(trifluoromethyl)-benzenesulfonamide, Sulfosulfuron oder Idosulfuron;

B3 Amide, z.B.

- Allidochlor (CDAA), Benzoylprop-ethyl, Bromobutide, Chlorthiamid, Diphenamid, Etobenzanid (Benzchlomet), Fluthiamide, Fosamin oder Monalide;

B4 Auxin-Herbizide, z.B.

- Pyridincarbonsäuren, wie Clopyralid oder Picloram; oder
- 2,4-D oder Benazolin;

B5 Auxin-Transport-Hemmer, z.B.

- Naptalame oder Diflufenzopyr;

B6 Carotinoid-Biosynthese-Inhibitoren, z.B.

- Benzofenap, Clomazone (Dimethazone), Diflufenican, Fluorochloridone, Fluridone, Pyrazolynate, Pyrazoxyfen, Isoxaflutole, Isoxachlortole, Mesotrione, Sulcotrione (Chlormesulone), Flurtamone, Norflurazon oder Amitrol;

B7 Enolpyruvyl-Shikimat-3-Phosphat-Synthase-Inhibitoren (ESPS), z.B.

- Glyphosate oder Sulfosate;

B8 Glutamin-Synthetase-Inhibitoren, z.B.

- Bilanafos (Bialaphos) oder Glufosinate-ammonium;

B9 Lipid-Biosynthese-Inhibiteren, z.B.

- Anilide, wie Anilofos oder Mefenacet;
- Chloracetanilide, wie Dimethenamid, S-Dimethenamid, Acetochlor, Alachlor, Butachlor, Butenachlor, Diethatylethyl, Dimethachlor, Metazachlor, Metolachlor, S-Metolachlor, Pretilachlor, Propachlor, Prynachlor, Terbuchlor, Thenylchlor oder Xylachlor;
- Thioharnstoffe, wie Butylate, Cycloate, Di-allate, Dimepiperate, EPTC, Esprocarb, Molinate, Pebulate, Prosulfocarb, Thiobencarb (Benthiocarb), Tri-allate oder Vernolate; oder
- Benfuresate oder Perfluidone;

B10 Mitose-Inhibitoren, z.B.

- Carbamate, wie Asulam, Carbetamid, Chlorpropham, Orbencarb, Pronamid (Propyzamid), Propham oder Tiocarbazil;
- Dinitroaniline, wie Benefin, Butralin, Dinitramin, Ethalfluralin, Fluchloralin, Oryzalin, Pendimethalin, Prodiamine oder Trifluralin;
- Pyridine, wie Dithiopyr oder Thiazopyr; oder
- Butamifos, Chlorthal-dimethyl (DCPA) oder Maleic hydrazide;

B11 Protoporphyrinogen-IX-oxidase-Inhibitoren, z.B.

- Diphenylether, wie Acifluorfen, Acifluorfen-sodium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;
- Oxadiazole, wie Oxadiargyl oder Oxadiazon;
- cyclische Imide, wie Azafenidin, Carfentrazone-ethyl, Cinidon-ethyl, Flumiclorac-pentyl, Flumioxazin, Flumipropyn, Flupropacil, Fluthiacet-methyl, Sulfentrazone oder Thidiazimin; oder
- Pyrazole, wie ET-751, JV 485 oder Nipyraclofen;

B12 Photosynthese-Inhibitoren, z.B.

- Propanil, Pyridate;
- Benzothiadiazinone, wie Bentazon;
- Dinitrophenole, wie Bromofenoxim, Dinoseb, Dinosebacetat, Dinoterb oder DNOC;
- Dipyridylene, wie Cyperquat-chlorid, Difenzoquat-methylsulfat, Diquat oder Paraquat-dichlorid;
- Harnstoffe, wie Chlorbromuron, Chlorotoluron, Difenoxuron, Dimefuron, Diuron, Ethidimuron, Fenuron, Fluometuron, Isoproturon, Isouron, Linuron, Methabenzthiazuron, Methazole, Metobenzuron, Metoxuron, Monolinuron, Neburon, Siduron oder Tebuthiuron;
- Phenole, wie Bromoxynil oder Ioxynil;
- Chloridazon;
- Triazine, wie Ametryn, Atrazin, Cyanazine, Desmetryn, Dimethamethryn, Hexazinon, Prometon, Prometryn, Propazin, Simazin, Simetryn, Terbumeton, Terbutryn, Terbutylazin oder Trietazin;
- Triazinone, wie Metamitron oder Metribuzin;
- Uracile, wie Bromacil, Lenacil oder Terbacil; oder
- Biscarbamate, wie Desmedipham oder Phenmedipham;

B13 Synergisten, z.B.

- Oxirane, wie Tridiphane;

B14 Wuchsstoffe, z.B.

- Aryloxyalkansäuren, wie 2,4-DB, Clomeprop, Dichlorprop, Dichlorprop-P (2,4-DP-P), Fluoroxypyr, MCPA, MCPB, Mecoprop, Mecoprop-P oder Triclopyr;
- Benzoesäuren, wie Chloramben oder Dicamba; oder
- Chinolincarbonsäuren, wie Quinclorac oder Quinmerac;

B15 Zellwandsynthese-Inhibitoren, z.B.

- Isoxaben oder Dichlobenil;

B16 Verschiedene weitere Herbizide, z.B.

- Dichlorpropionsäuren, wie Dalapon;
- Dihydrobenzofurane, wie Ethofumesate;
- Phenylessigsäuren, wie Chlorfenac (Fenac); oder
- Aziprotryn, Barban, Bensulide, Benzthiazuron, Benzofluor, Buminafos, Buthidazole, Buturon, Cafenstrole, Chlorbufam, Chlorfenprop-methyl, Chloroxuron, Cinmethylin, Cumyluron, Cycluron, Cyprazine, Cyprazole, Dibenzyluron, Dipropetryn, Dymron, Eglinazin-ethyl, Endothall, Ethiozin, Flucabazone, Fluorbentranil, Flupoxam, Isocarbamid, Isopropalin, Karbutilat, Mefluidide, Monuron, Napropamide, Napropanilide, Nitralin, Oxaciclomefone, Phenisopham, Piperophos, Procyazine, Profluralin, Pyributicarb, Secbumeton, Sulfallate (CDEC), Terbucarb, Triazofenamid oder Trimeturon;

oder deren umweltverträgliche Salze.

Die 3-heterocyclyl-substituierten Benzoylderivate der Formel I sind aus WO 96/26206, WO 97/41116, WO 97/41117 und WO 97/41118 bekannt.

Sie können in Form der reinen Enantiomere als auch als Racemate oder Diastereomerengemische vorliegen bzw. verwendet werden.

Die 3-heterocyclyl-substituierten Benzoylderivate der Formel I sowie die herbizid wirksamen Verbindungen aus den Gruppen B1 bis B16 können auch in Form ihrer umweltverträglichen Salze vorliegen. Im allgemeinen kommen die Salze derjenigen Kationen oder die Säureadditionssalze derjenigen Säuren in Betracht, deren Kationen, beziehungsweise Anionen, die herbizide Wirkung der Wirkstoffe nicht negativ beeinträchtigen.

Es kommen als Kationen, insbesondere Ionen der Alkalimetalle, vorzugsweise Lithium, Natrium und Kalium, der Erdalkalimetalle, vorzugsweise Calcium und Magnesium, und der Übergangsmetalle, vorzugsweise Mangan, Kupfer, Zink und Eisen, sowie Ammonium, wobei hier gewünschtenfalls ein bis vier Wasserstoffatome durch $C_1$-$C_4$-Alkyl, Hydroxy-$C_1$-$C_4$-alkyl, $C_1$-$C_4$-Alkoxy-$C_1$-$C_4$-alkyl, Hydroxy-$C_1$-$C_4$-alkoxy-$C_1$-$C_4$-alkyl, Phenyl oder Benzyl ersetzt sein können, vorzugsweise Ammonium, Dimethylammonium, Diisopropylammonium, Tetramethylammonium, Tetrabutylammonium, 2-(2-Hydroxyeth-1-oxy)eth-1-ylammonium, Di(2-hydroxyeth-1-yl)ammonium, Trimethylbenzylammonium, des weiteren Phosphoniumionen, Sulfoniumionen, vorzugsweise Tri($C_1$-$C_4$-alkyl)sulfonium und Sulfoxoniumionen, vorzugsweise Tri($C_1$-$C_4$-alkyl)sulfoxonium, in Betracht.

Anionen von brauchbaren Säureadditionssalzen sind in erster Linie Chlorid, Bromid, Fluorid, Hydrogensulfat, Sulfat, Dihydrogenphosphat, Hydrogenphosphat, Nitrat, Hydrogencarbonat, Carbonat, Hexafluorosilikat, Hexafluorophosphat, Benzoat sowie die Anionen von $C_1$-$C_4$-Alkansäuren, vorzugsweise Formiat, Acetat, Propionat und Butyrat.

Die herbizid wirksamen Verbindungen aus den Gruppen B1 bis B16 sind z.B. in

- "Herbizide", Hock, Fedtke, Schmidt, 1. Auflage, Thieme 1995 (s. "Quinclorac" S. 238, "Molinat" S. 32, "Butachlor" S. 32, "Pretilachlor" S. 32, "Dithiopyr" S. 32, "Mefenacet" S. 32, "Fenoxapropethyl" S. 216, "Dimepiperate" S. 32, "Pyrazolynate" S. 146, "Pyrazoxyfen" S. 146, "Bensulfuronmethyl" S. 31, "Pyrazosulfuron-ethyl" S. 31, "Cinosulfuron" S. 31, "Benfuresate" S. 233, "Bromobutide" S. 243, "Dymron" S. 243, "Dimethyametryn" S. 118, "Esprocarb" S. 229, "Pyributicarb" S. 32, "Cinemthylin" S. 32, "Propanil" S. 32, "2,4-D" S. 30, "Bentazon" S. 30, "Azimsulfuron (DPX-A-8947)" S. 175, "Mecoprop-P" S. 237, "Chlorpropham" S. 205, "Ethoxyfen" S. 30, "Haloxyfop-P-methyl" S. 38, "Haloxyfop-ethoxyethyl" S. 38, "Flumiclorac-pentyl" S. 35, "Flupropacil" S. 143, "Nipyraclofen" S. 145, "Metosulam" S. 33, "Ethametsulfuron-methyl" S. 36, "Thifensulfuron-methyl" S. 35, "Pyrithiobac-säure" S.181);

- "Agricultural Chemicals", Book II Herbicides, 1993 (s. "Thiobencarb" S. 85, "Benzofenap" S. 221, "Napropanilid" S. 49, "Piperophos" S. 102, "Anilofos" S. 241, "Imazosulfuron (TH-913)" S. 150, "Etobenzamid (HW-52)" S. 54, "Sulcotrione (ICIA-0051)" S. 268, "Poast" S. 253, "Focus" S. 222, "Dimethenamid" S. 48, "Sulfosate" S. 236, "2,4-DB" S. 10, "Dichlorprop-P" S. 6, "Flupoxam" S. 44, "Prosulfocarb" S. 84, "Quinmerac" S. 233, "Metazachlor" S. 64, "Flurtamone" S. 265, "Bromofenoxim" S. 228, "Fomesafen" S. 248, "Imazamethabenz-methyl" S. 153, "Clodinafop-propargyl" S. 214, "Fenoxaprop-P-ethyl" S. 208, "Fluazifop-P-butyl" S. 207, "Quizalofop-P-ethyl" S. 210, "Quizalofop-terfuryl" S. 211, "Flumioxazin" S. 43, "Flumipropyn" S. 267, "Sulfentrazone" S. 261, "Thiazopyr" S. 226, "Pyrithiobac-sodium" S. 266, "Flumetsulam" S. 227, "Amidosulfuron" S. 151, "Halosulfuron-methyl" S. 148, "Rimsulfuron" S. 138, "Tribenuron-methyl" S. 139, "Triflusulfuron-methyl" S. 137, "Primisulfuron-methyl" S. 147);

- "Agricultural Chemicals", Book II Herbicides, 13th Edition (s. "Carfenstole" S. 284, "Sulfosulfuron" S. 145, "Ethoxysulfuron" S. 149, "Pyribenzoxym" S. 279, "Diflufenzopyr" S. 90, "ET-751" S. 278, "Carfentrazone-ethyl" S. 267, "Fluthiacet-methyl" S. 277, "Imazapic" S. 160, "Butenachlor" S. 54, "Tiocarbazil" S. 84, "Fluthiamide" S. 62, "Isoxaflutole" S. 283, "Butroxydim" S. 259,)

- "Short Review of Herbicides & PGRs 1991, Hodogaya Chemicals (s. "Furyloxyfen" S. 142, "Triazofenamid" S. 268, "Thenylchlorid (NSK-850)" S. 52, "Cumyluron (JC-940)" S.90, "Pendimethalin (AC-92553)" S. 58, "Buthidazole" S. 88, "Cyprazole" S.38, "Allidochlor" S. 48, "Benzoylprop-ethyl" S. 38, "Chlorthiamid" S. 150, "Diphenamid" S. 34, "Flamprop-methyl" S. 40, "Fosamin" S. 232, "Isoxaben" S. 42, "Monalide" S. 32, "Naptalam" S. 36, "Pronamid" S. 34, "Bialaphos" S. 234, "Glufosinate-ammonium" S. 234, "Glyphosate" S. 232, "Amitrol" S.254, "Clomeprop S. 20, "Dichlorprop" S. 6, "Fenoprop" S. 8, "Fluroxypyr" S.156, "MCPA" S. 4, "MCPB" S. 8, "Mecoprop" S. 6, "Napropamide" S. 16, "Triclopyr" S. 154, "Chloramben" S. 28, "Dicamba" S. 26, "Clomazone" S. 268, "Diflufenican" S. 42, "Fluorochloridone" S. 266, "Fluridone" S. 156, "Asulam" S. 112, "Barban" S. 100, "Butylate" S. 106, "Carbetamide" S. 36, "Chlorobufam" S. 100, "Cycloate" S. 108, "Desmedipham" S. 104, "Di-allate" S. 106, "EPTC" S. 108, "Orbencarb" S. 112, "Pebulate" S. 106, "Phenisopham" S. 118, "Phenmedipham" S. 104, "Propham" S. 100, "Sulfallate" S. 110, "Terbucarb" S. 102, "Tri-allate" S. 108, "Vernolate" S. 108, "Acetochlor" S. 48, "Alachlor" S. 46, "Diethathyl-ethyl" S. 48, "Dimethachlor" S. 50, "Metolachlor" S. 46, "Propachlor" S. 44, "Pyrnachlor" S. 44, "Terbuchlor" S. 48, "Xylachlor" S. 52, "Alloxydim" S. 260, "Clethodim" S. 270, "Cloproxydim" S. 268, "Tralkoxydim" S. 270, "Dalapon" S. 212, "Ethofumesate" S. 124, "Benefin" S. 54, "Butralin" S. 58, "Dinitramin" S. 56, "Ethalfluralin" S. 60, "Fluchloralin" S. 54, "Isopropalin" S. 58, "Nitralin" S. 58, "Oryzalin" S. 60, "Prodiamine" S. 62, "Profluralin" S. 54, "Trifluralin" S. 54, "Dinoseb" S. 128, "Dinoseb-Acetat" S. 128, "Dinoterb" S. 128, "DNOC" S. 126, "Acifluorfen-sodium" S. 142, "Aclonifen" S. 146, "Bifenox" S. 140, "Chlornitrofen" S. 138, "Difenoxuron" S. 76, "Fluorodifen" S. 138, "Fluoroglycofen-ethyl" S. 146, "Lactofen" S. 144, "Nitrofen" S. 136, "Nitrofluorfen" S. 140, "Oxyfluorfen" S. 140, "Cyperquat-chlorid" S. 158, "Difenzoquat-methyl sulfat" S. 160, "Diquat" S. 158, "paraquat-dichlorid" S. 158, "Benzthiazuron" S. 82, "Buturon" S. 66, "Chlorbromuron" S. 72, "Chloroxuron" S. 76, "Chlorotoluron" S. 74, "Cycluron" S. 84, "Dimefuron" S. 88, "Diuron" S. 70, "Ethidimuron" S. 86, "Fenuron" S. 64, "Fluometuron" S. 68, "Isoproturon" S. 80, "Isouron" S. 88, "Karbutilat" S. 76, "Linuron" S. 72, "Methabenzthiazuron" S. 82, "Metoxuron" S. 72, "Monolinuron" S. 66, "Monuron" S. 64, "Neburon" S. 72, "Siduron" S. 68, "Tebuthiuron" S. 86, "Trimeturon" S. 64, "Isocarbamid" S. 168, "Imazamethapyr" S. 172, "Imazapyr" S. 170, "Imazaquin" S. 170, "Imazethapyr" S. 172, "Methazole" S. 162, "Oxadiazon" S. 162, "Tridiphane" S. 266, "Bromoxynil" S. 148, "Ioxynil" S. 148, "Diclofop-methyl" S. 16, "Fenthiaprop-ethyl" S. 20, "Fluazifop-butyl" S. 18, "Haloxyfop-methyl" S. 18, "Isoxapyrifop" S. 22, "Propaquizafop" S. 24, "Quizalofop-ethyl" S. 20, "Chlorfenac" S. 258, "Chlorophenprop-methyl" S. 258, "Chloridazon" S. 174, "Maleic hydrazide" S. 162, "Norflurazon" S. 174, "Pyridate" S. 176, "Clopyralid" S. 154, "Picloram" S. 154, "Chlorimuron-ethyl" S. 92, "Chlorsulfuron" S. 92, "Flazasulfuron" S. 96, "Metsulfuron-methyl" S.92, "Nicosulfuron" S. 96, "Sulfometuron-methyl" S. 92, "Triasulfuron" S. 94, "Ametryn" S. 198, "Atrazin" S. 188, "Aziprotryne" S. 206, "Cyanazine" S. 192, "Cyprazine" S. 192, "Desmetryne" S. 200, "Dipropetryn" S. 202, "Eglinazin-ethyl" S. 208, "Hexazinon" S. 208, "Procyazine" S. 192, "Prometone" S. 196, "Prometryn" S. 196, "Propazin" S. 188, "Secbumeton" S. 196, "Simazine" S. 188, "Simetryn" S. 196, "Terbumeton" S. 204, "Terbutryn" S. 198, "Terbutylazin" S. 190, "Trietazine" S. 188, "Ethiozin" S. 210, "Metamitron" S. 206, "Metribuzin" S. 202, "Bromacil" S. 180, "Lenacii" S. 180, "Terbacil" S. 180, "Benazolin" S. 262, "Bensulide" S. 228, "Benzofluor" S. 266, "Butamifos" S. 228, "DCPA" S. 28, "Dichlobenil" S. 148, "Endothal" S. 264, "Mefluidide" S. 306, "Perfluidone" S. 260, "Terbuchlor" S. 48);

- "Global Herbicide Directory" First Edition, 1994 (s. "Oxadiargyl" S. 96);

- "European Directory of Agrochemical Products" Volume 2 - Herbicides" Fourth Edition, (s. "Buminafos" S. 255);

beschrieben.

Weiterhin ist die Verbindung "DEH-112" aus der europäischen Patentanmeldung EP-A 302 203 bekannt. Die Verbindung "Tepraloxydim" ist in DE-A 33 36 140 beschrieben; die Verbindung "Cinidon-ethyl" in DE-A 36 03 789 und die Verbindung "Fluorbentranil" in EP-A 84 893. Weitere Verbindungen sind bekannt aus "Brighton crop Protection conference - Weeds - 1993 (s. "Thidiazimin" S. 29, "AC-322140" S. 41, "KIH-6127" S. 47, "Prosulfuron" S. 53, "KIH-2023" S. 61, "Metobenzuron" S. 67). Die Verbindung "Carfenstrole (CH-900)" ist in EP-A 332 133 genannt und die Verbindung N-[[[4-methoxy-6-(trifluoromethyl)-1,3,5-triazin-2-yl]amino]carbonyl]-2-(trifluoromethyl)-benzenesulfonamide ist in PCT/EP 96/03996 beschrieben.

Die Zuordnung der Wirkstoffe zu den jeweiligen Wirkmechanismen basiert auf dem momentanen Kenntnisstand. Falls für einen Wirkstoff mehrere Wirkmechanismen zum Tragen kommen, so wurde dieser Stoff nur einem mode of action zugeordnet.

In Hinblick auf die synergistische herbizide Wirkung der erfindungsgemäßen Mischungen sind die 3-heterocyclyl-substituierten Benzoylderivate der Formel I bevorzugt, in denen die Variablen folgende Bedeutung haben, und zwar für sich allein oder in Kombination:

$R^1$ Halogen, $C_1$-$C_6$-Alkyl, $C_1$-$C_6$-Alkylthio, $C_1$-$C_6$-Alkylsulfinyl oder $C_1$-$C_6$-Alkylsulfonyl;
insbesondere bevorzugt Halogen, wie Chlor oder Brom, $C_1$-$C_6$-Alkyl, wie Methyl oder Ethyl, oder $C_1$-$C_6$-Alkylsulfonyl, wie Methylsulfonyl oder Ethylsulfonyl;
außerordentlich bevorzugt Chlor, Methyl oder Methylsulfonyl;

$R^2$ ein heterocyclischer Rest ausgewählt aus der Gruppe: 4,5-Dihydroisoxazol-3-yl, wobei der genannte Rest gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein kann;
insbesondere bevorzugt 4,5-Dihydroisoxazol-3-yl, 5-Methyl-4,5-dihydroisoxazol-3-yl, 5-Ethyl-4,5-dihydroisoxazol-3-yl oder 4,5-Dimethyl-4,5-dihydroisoxazol-3-yl; ebenso bevorzugt ist ein heterocyclischer Rest ausgewählt aus der Gruppe: Thiazol-2-yl, Thiazol-4-yl, Thiazol-5-yl, 4,5-Dihydroisoxazol-4-yl und 4,5-Dihydroisoxazol-5-yl, wobei die sechs genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

$R^3$ Halogen, $C_1$-$C_6$-Alkyl, $C_1$-$C_6$-Alkylthio, $C_1$-$C_6$-Alkylsulfinyl oder $C_1$-$C_6$-Alkylsulfonyl;
insbesondere bevorzugt Halogen, wie Chlor oder Brom, $C_1$-$C_6$-Alkylthio, wie Methylthio oder Ethylthio, $C_1$-$C_6$-Alkylsulfinyl, wie Methylsulfinyl oder Ethylsulfinyl, oder $C_1$-$C_6$-Alkylsulfonyl, wie Methylsulfonyl oder Ethylsulfonyl;
außerordentlich bevorzugt Chlor, Methylsulfonyl oder Ethylsulfonyl;

$R^4$ Wasserstoff oder Methyl;
insbesondere bevorzugt Wasserstoff;

$R^5$ $C_1$-$C_6$-Alkyl, wie Methyl, Ethyl, Propyl, 1-Methylethyl, Butyl, 1-Methylpropyl oder 2-Methylpropyl;
insbesondere bevorzugt Methyl, Ethyl oder 1-Methylethyl;

$R^6$ Wasserstoff oder $C_1$-$C_6$-Alkyl, wie Methyl oder Ethyl;
insbesondere bevorzugt Wasserstoff oder Methyl;

Außerordentlich bevorzugt sind die 3-heterocyclyl-substituierten Benzoylderivate der Formel Ia, insbesondere die Verbindungen Ia.1 bis Ia.51, die in folgender Tabelle 1 aufgeführt sind:

Tabelle 1

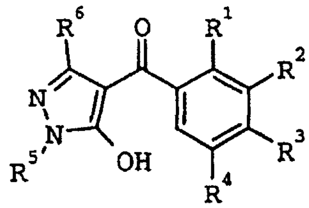

Ia

| Nr. | $R^1$ | $R^2$ | $R^3$ | $R^4$ | $R^5$ | $R^6$ |
|---|---|---|---|---|---|---|
| Ia.1 | Cl | 4,5-Dihydro-isoxazol-3-yl | $SO_2CH_3$ | H | $CH_3$ | $CH_3$ |
| Ia.2 | Cl | 4,5-Dihydro-isoxazol-3-yl | Cl | H | $CH_3$ | $CH_3$ |
| Ia.3 | Cl | 4,5-Dihydro-isoxazol-3-yl | $SO_2CH_3$ | H | $CH_3$ | H |
| Ia.4 | Cl | 4,5-Dihydro-5-methylisoxazol-3-yl | $SO_2CH_3$ | H | $CH_3$ | H |
| Ia.5 | Cl | 4,5-Dihydro-5,5-dimethylisoxazol-3-yl | $SO_2CH_3$ | H | $CH_3$ | H |
| Ia.6 | Cl | 4,5-Dihydro-5-ethylisoxazol-3-yl | $SO_2CH_3$ | H | $CH_3$ | H |
| Ia.7 | Cl | 4,5-Dihydro-5,5-diethylisoxazol-3-yl | $SO_2CH_3$ | H | $CH_3$ | H |
| Ia.8 | Cl | 4,5-Dihydro-5-chlormethylisoxazol-3-yl | $SO_2CH_3$ | H | $CH_3$ | H |
| Ia.9 | Cl | 4,5-Dihydro-isoxazol-3-yl | $SCH_3$ | H | $CH_3$ | H |
| Ia.10 | Cl | 4,5-Dihydro-5-ethoxyisoxazol-3-yl | $SO_2CH_3$ | H | $CH_3$ | H |
| Ia.11 | Cl | 4,5-Dihydro-5-methoxyisoxazol-3-yl | $SO_2CH_3$ | H | $CH_3$ | H |
| Ia.12 | Cl | 4,5-Dihydro-4,5-dimethylisoxazol-3-yl | $SO_2CH_3$ | H | $CH_3$ | H |
| Ia.13 | Cl | 4,5-Dihydro-5-thioethylisoxazol-3-yl | $SO_2CH_3$ | H | $CH_3$ | H |
| Ia.14 | Cl | 4,5-Dihydro-5-trifluormethylisoxazol-3-yl | $SO_2CH_3$ | H | $CH_3$ | H |
| Ia.15 | $SCH_3$ | 4,5-Dihydro-isoxazol-3-yl | $SCH_3$ | H | $CH_3$ | H |
| Ia.16 | Cl | 4,5-Dihydro-isoxazol-3-yl | $SO_2CH_3$ | H | $C_2H_5$ | H |
| Ia.17 | Cl | 4,5-Dihydro-isoxazol-3-yl | Cl | H | $C_2H_5$ | H |
| Ia.18 | Cl | 4,5-Dihydro-5-methylisoxazol-3-yl | $SO_2CH_3$ | H | $C_2H_5$ | H |
| Ia.19 | Cl | 4,5-Dihydro-5,5-dimethylisoxazol-3-yl | $SO_2CH_3$ | H | $C_2H_5$ | H |

| Nr. | $R^1$ | $R^2$ | $R^3$ | $R^4$ | $R^5$ | $R^6$ |
|---|---|---|---|---|---|---|
| Ia.20 | Cl | 4,5-Dihydro-5-ethylisoxazol-3-yl | $SO_2CH_3$ | H | $C_2H_5$ | H |
| Ia.21 | Cl | 4,5-Dihydro-5,5-diethylisoxazol-3-yl | $SO_2CH_3$ | H | $C_2H_5$ | H |
| Ia.22 | Cl | 4,5-Dihydro-isoxazol-3-yl | $SCH_3$ | H | $C_2H_5$ | H |
| Ia.23 | Cl | 4,5-Dihydro-5-chlormethylisoxazol-3-yl | $SO_2CH_3$ | H | $C_2H_5$ | H |
| Ia.24 | Cl | 4,5-Dihydro-isoxazol-3-yl | $SOCH_3$ | H | $C_2H_5$ | H |
| Ia.25 | Cl | 4,5-Dihydro-5-ethoxyisoxazol-3-yl | $SO_2CH_3$ | H | $C_2H_5$ | H |
| Ia.26 | Cl | 4,5-Dihydro-4,5-dimethylisoxazol-3-yl | $SO_2CH_3$ | H | $C_2H_5$ | H |
| Ia.27 | Cl | 4,5-Dihydro-5-thioethylisoxazol-3-yl | $SO_2CH_3$ | H | $C_2H_5$ | H |
| Ia.28 | Cl | 4,5-Dihydro-5-trifluormethylisoxazol-3-yl | $SO_2CH_3$ | H | $C_2H_5$ | H |
| Ia.29 | $SCH_3$ | 4,5-Dihydro-isoxazol-3-yl | $SCH_3$ | H | $C_2H_5$ | H |
| Ia.30 | Cl | 4,5-Dihydro-isoxazol-3-yl | $SO_2CH_3$ | H | i-$C_4H_9$ | H |
| Ia.31 | $CH_3$ | 4,5-Dihydro-isoxazol-3-yl | $SO_2CH_3$ | H | $CH_3$ | $CH_3$ |
| Ia.32 | $CH_3$ | 4,5-Dihydro-isoxazol-3-yl | Cl | H | $CH_3$ | $CH_3$ |
| Ia.33 | $CH_3$ | 4,5-Dihydro-isoxazol-3-yl | $SO_2CH_3$ | H | $CH_3$ | H |
| Ia.34 | $CH_3$ | 4,5-Dihydro-5-methylisoxazol-3-yl | $SO_2CH_3$ | H | $CH_3$ | H |
| Ia.35 | $CH_3$ | 4,5-Dihydro-5,5-dimethylisoxazol-3-yl | $SO_2CH_3$ | H | $CH_3$ | H |
| Ia.36 | $CH_3$ | 4,5-Dihydro-5-ethylisoxazol-3-yl | $SO_2CH_3$ | H | $CH_3$ | H |
| Ia.37 | $CH_3$ | 4,5-Dihydro-5,5-diethylisoxazol-3-yl | $SO_2CH_3$ | H | $CH_3$ | H |
| Ia.38 | $CH_3$ | 4,5-Dihydro-isoxazol-3-yl | $SO_2CH_3$ | H | $CH_3$ | H |
| Ia.39 | $CH_3$ | 4,5-Dihydro-4,5-dimethylisoxazol-3-yl | $SO_2CH_3$ | H | $CH_3$ | H |
| Ia.40 | $CH_3$ | 4,5-Dihydro-isoxazol-3-yl | $SO_2CH_3$ | H | $C_2H_5$ | H |
| Ia.41 | $CH_3$ | 4,5-Dihydro-isoxazol-3-yl | Cl | H | $C_2H_5$ | H |
| Ia.42 | $CH_3$ | 4,5-Dihydro-5-methylisoxazol-3-yl | $SO_2CH_3$ | H | $C_2H_5$ | H |
| Ia.43 | $CH_3$ | 4,5-Dihydro-5,5-dimethylisoxazol-3-yl | $SO_2CH_3$ | H | $C_2H_5$ | H |
| Ia.44 | $CH_3$ | 4,5-Dihydro-5-ethylisoxazol-3-yl | $SO_2CH_3$ | H | $C_2H_5$ | H |
| Ia.45 | $CH_3$ | 4,5-Dihydro-5-diethylisoxazol-3-yl | $SO_2CH_3$ | H | $C_2H_5$ | H |
| Ia.46 | $CH_3$ | 4,5-Dihydro-4,5-dimethylisoxazol-3-yl | $SO_2CH_3$ | H | $C_2H_5$ | H |
| Ia.47 | $CH_3$ | 4,5-Dihydro-isoxazol-3-yl | $SO_2CH_3$ | H | i-$C_4H_9$ | H |
| Ia.48 | Cl | 2-Thiazolyl | $SO_2CH_3$ | H | $CH_3$ | $CH_3$ |
| Ia.49 | Cl | 2-Thiazolyl | $SO_2CH_3$ | H | $CH_3$ | H |
| Ia.50 | Cl | 2-Thiazolyl | $SO_2CH_3$ | H | $C_2H_5$ | H |
| Ia.51 | $CH_3$ | 2-Thiazolyl | $SO_2CH_3$ | H | $CH_3$ | $CH_3$ |

- Ebenso außerordentlich bevorzugt sind die Verbindungen Ib, insbesondere die Verbindungen Ib.1 bis Ib.51, die sich von den Verbindungen Ia.1 bis Ia.51 lediglich dadurch unterscheiden, daß sie als Natriumsalz vorliegen:

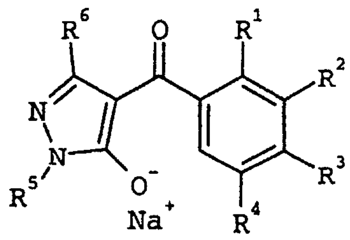

Ib

- Ebenso außerordentlich bevorzugt sind die Verbindungen Ic, insbesondere die Verbindungen Ic.1 bis Ic.51, die sich von den Verbindungen Ia.1 bis Ia.51 lediglich dadurch unterscheiden, daß sie als Lithiumsalz vorliegen:

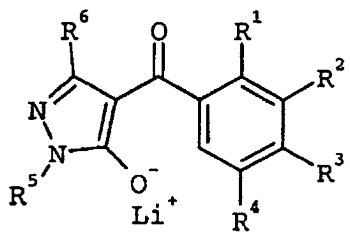

Ic

- Ebenso außerordentlich bevorzugt sind die Verbindungen Id, insbesondere die Verbindungen Id.1 bis Id.51, die sich von den Verbindungen Ia.1 bis Ia.51 lediglich dadurch unterscheiden, daß sie als Kaliumsalz vorliegen:

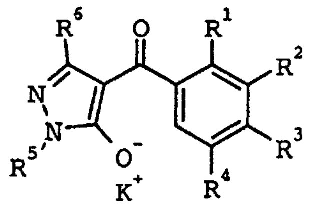

Id

- Ebenso außerordentlich bevorzugt sind die Verbindungen Ie, insbesondere die Verbindungen Ie.1 bis Ie.51, die sich von den Verbindungen Ia.1 bis Ia.51 lediglich dadurch unterscheiden, daß sie als Ammoniumsalz vorliegen:

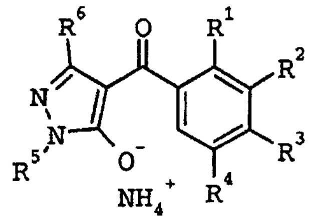

Ie

- Insbesondere außerordentlich bevorzugt sind die Verbindungen Ia, insbesondere die Verbindungen Ia.1 bis Ia.51.

- Weiterhin außerordentlich bevorzugt sind die 3-heterocyclyl-substituierten Benzoylderivate der Formel I, wobei $R^2$ ein heterocyclischer Rest ausgewählt aus der Gruppe:

  Thiazol-2-yl, Thiazol-4-yl und Thiazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

bedeutet.

Insbesonders außerordentlich bevorzugt sind hierbei die 3-heterocyclyl-substituierten Benzoylderivate der Formel I, wobei

$R^4$ Wasserstoff;

bedeutet.

- Weiterhin außerordentlich bevorzugt sind die 3-heterocyclyl-substituierten Benzoylderivate der Formel I, wobei

  $R^2$ ein heterocyclischer Rest ausgewählt aus der Gruppe: 4,5-Dihydroisoxazol-3-yl, 4,5-Dihydroisoxazol-4-yl und 4,5-Dihydroisoxazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

  bedeutet.
  Insbesonders außerordentlich bevorzugt sind hierbei die 3-heterocyclyl-substituierten Benzoylderivate der Formel I, wobei

  $R^2$ 4,5-Dihydroisoxazol-3-yl, das gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein kann;
  $R^4$ Wasserstoff;

  bedeutet.
  Insbesonderst außerordentlich bevorzugt sind hierbei die 3-heterocyclyl-substituierten Benzoylderivate der Formel I, wobei

  $R^1$ Halogen oder $C_1$-$C_6$-Alkyl;
  $R^3$ $C_1$-$C_6$-Alkylsulfonyl;

  bedeutet.
  Außerordentlichst bevorzugt ist 4-[2-Chlor-3-(4,5-dihydroisoxazol-3-yl)-4-methylsulfonyl-benzoyl]-1-methyl-5-hydroxy-1H-pyrazol.
  Ebenso außerordentlichst bevorzugt ist 4-[2-Methyl-3-(4,5-dihydroisoxazol-3-yl)-4-methylsulfonyl-benzoyl]-1-methyl-5-hydroxy-1H-pyrazol.

In Hinblick auf die synergistische herbizide Wirkung der erfindungsgemäßen Mischungen sind als Komponente B) Verbindungen aus den Gruppen B1 bis B14 oder B16 bevorzugt, vorzugsweise aus den Gruppen B1 bis B14.
Insbesondere sind Verbindungen aus den nachfolgend genannten Wirkstoffklassen bevorzugt, bzw. folgende Verbindungen außerordentlich bevorzugt:

B1 AcetylCoA-carboxylase-Inhibitoren (ACC) :

- Cyclohexenonoximether, insbesondere Cycloxydim, Sethoxydim oder Tralkoxydim, vorzugsweise Sethoxydim oder Tralkoxydim; oder
- Phenoxyphenoxypropionsäureester, insbesondere Clodinafop-propargyl (und ggf. Cloquintocet), Fenoxaprop-ethyl oder Fenoxaprop-P-ethyl, vorzugsweise Clodinafop-propargyl (und ggf. Cloquintocet) oder Fenoxaprop-p-ethyl;

B2 Acetolactatsynthase-Inhibitoren (ALS):

- Imidazolinone, insbesondere Imazapyr, Imazaquin, Imazamethabenz, Imazethapyr oder Imazamoc, vorzugsweise Imazapyr;
- Pyrimidylether, insbesondere Pyrithiobac-sodium;
- Sulfonamide, insbesondere Florasulam, Flumetsulam oder Metosulam, vorzugsweise Metosulam; oder
- Sulfonylharnstoffe, insbesondere Halosulfuron-methyl, Nicosulfuron, Primisulfuron-methyl, Prosulfuron, Rimsulfuron, Thifensulfuron-methyl, Tribenuron-methyl, N-[[[4-methoxy-6-(trifluoromethyl)-1,3,5-triazin-2-yl]amino]carbonyl]-2-(trifluoromethyl)-benzenesulfonamide oder Sulfosulfuron;

B3 Amide:

- Fluthiamide;

B4 Auxin-Herbizide:

- Pyridincarbonsäuren, insbesondere Clopyralid; oder
- 2,4-D;

B5 Auxin-Transport-Hemmer:

- Diflufenzopyr;

B6 Carotinoid-Biosynthese-Inhibitoren:

- Isoxaflutole, Mesotrione, Isoxachloride, Ketospiradox oder Sulcotrione (Chlormesulone), insbesondere Isoxaflutole oder Sulcotrione;

B7 Enolpyruvyl-Shikimat-3-Phosphat-Synthase-Inhibitoren (ESPS):

- Glyphosate oder Sulfosate;

B8 Glutamin-Synthetase-Inhibitoren:

- Glufosinate-ammonium;

B9 Lipidbiosynthese-Inhibitoren:

- Chloracetanilide, insbesondere Dimethenamid, S-Dimethenamid, Acetochlor, Metolachlor oder S-Metolachlor,
- Thioharnstoffe, insbesondere Benthiocarb;

B10 Mitose-Inhibitoren:

- Dinitroaniline, insbesondere Pendimethalin;

B11 Protoporphyrinogen-IX-oxidase-Inhibitoren:

- Diphenylether, insbesondere Acifluorfen oder Acifluorfen-sodium;
- Oxadiazole, insbesondere Oxadiargyl; oder
- cyclische Imide, insbesondere Butafenacil, Carfentrazone-ethyl, Cinidon-ethyl oder Flumiclorac-pentyl, vorzugsweise Carfentrazone-ethyl, Cinidon-ethyl oder Flumidorac-pentyl;
- Pyrazole, insbesondere JV 485;

B12 Photosynthese-Inhibitoren:

- Pyridate oder Pyridafol, insbesondere Pyridate;
- Benzothiadiazinone, insbesondere Bentazon;
- Dipyridylene, insbesondere Paraquat-dichlorid;
- Harnstoffe, insbesondere Diuron oder Isoproturon, vorzugsweise Diuron;
- Phenole, insbesondere Bromoxynil;
- Chloridazon;
- Triazine, insbesondere Atrazin oder Terbutylazin; oder
- Triazinone, insbesondere Metribuzin;

B13 Synergisten:

- Oxirane, insbesondere Tridiphane;

B14 Wuchsstoffe:

- Aryloxyalkansäuren, insbesondere Fluoroxypyr, MCPA oder Mecoprop-P;
- Benzoesäuren, insbesondere Dicamba; oder

- Chinolincarbonsäuren, insbesondere Quinclorac;

B16 Verschiedene weitere Herbizide:

- Triaziflam;

Ebenso sind als Komponente B) Verbindungen aus den Gruppen B1, B2, B4 bis B12 und B14 bevorzugt.

Insbesondere sind Verbindungen aus den nachfolgend genannten Wirkstoffklassen bevorzugt, bzw. folgende Verbindungen außerordentlich bevorzugt:

B1 AcetylCoA-Carboxylase-Inhibitoren (ACC):

- Cyclohexenonoximether, insbesondere Cycloxydim oder Sethoxydim;
- Phenoxyphenoxypropionsäureester, insbesondere Clodinafop-propargyl (und ggf. Cloquintocet), Fenoxaprop-ethyl oder Fenoxaprop-P-ethyl, vorzugsweise Clodinafop-propargyl (und ggf. Cloquintocet);

B2 Acetolactatsynthase-Inhibitoren (ALS):

- Imidazolinone, insbesondere Imazapyr, Imazaquin, Imazamethabenz oder Imazethapyr, vorzugsweise Imazapyr;
- Pyrimidylether, insbesondere Pyrithiobac-sodium;
- Sulfonamide, insbesondere Flumetsulam oder Metosulam, vorzugsweise Metosulam; oder
- Sulfonylharnstoffe, insbesondere Halosulfuron-methyl, Nicosulfuron oder N-[[[4-methoxy-6-(trifluoromethyl)-1,3,5-triazin-2-yl]amino]carbonyl]-2-(trifluoromethyl)-benzenesulfonamide, vorzugsweise Nicosulfuron oder N-[[[4-methoxy-6-(trifluoromethyl)-1,3,5-triazin-2-yl]amino]carbonyl]-2-(trifluoromethyl)-benzenesulfonamide;

B4 Auxin-Herbizide:

- 2,4-D;

B5 Auxin-Transport-Hemmer:

- Diflufenzopyr;

B6 Carotinoid-Biosynthese-Inhibitoren:

- Isoxaflutole oder Sulcotrione, vorzugsweise Isoxaflutole;

B7 Enolpyruvyl-Shikimat-3-Phosphat-Synthase-Inhibitoren (ESPS):

- Glyphosate;

B8 Glutamin-Synthetase-Inhibitoren:

- Glufosinate-ammonium;

B9 Lipidbiosynthese-Inhibitoren:

- Chloracetanilide, insbesondere Dimethenamid, S-Dimethenamid, Acetochlor, Metolachlor oder S-Metolachlor;
- Thioharnstoffe, insbesondere Benthiocarb;

B10 Mitose-Inhibitoren:

- Dinitroaniline, insbesondere Pendimethalin;

B11 Protoporphyrinogen-IX-oxidase-Inhibitoren:

- Diphenylether, insbesondere Acifluorfen;

- cyclische Imide, insbesondere Carfentrazone-ethyl oder Cinidon-ethyl, vorzugsweise Carfentrazone-ethyl;

B12 Photosynthese-Inhibitoren:

- Pyridate;
- Benzothiadiazinone, insbesondere Bentazon;
- Dipyridylene, insbesondere Paraquat-dichlorid;
- Harnstoffe, insbesondere Diuron oder Isobroturon, vorzugsweise Diuron;
- Phenole, insbesondere Bromoxynil;
- Chloridazon;
- Triazine, insbesondere Atrazin oder Terbutylazin; oder
- Triazinone, insbesondere Metribuzin;

B14 Wuchsstoffe:

- Aryloxyalkansäuren, insbesondere MCPA;
- Benzoesäuren, insbesondere Dicamba;
- Chinolincarbonsäuren, insbesondere Quinclorac;

In Hinblick auf die synergistische herbizide Wirkung der erfindungsgemäßen Mischungen sind folgende Ausführungsformen besonders bevorzugt:

• In einer besonderen Ausführungsform enthält die erfindungsgemäße synergistische herbizide Mischung als

Komponente A) ein 3-heterocyclyl-substituiertes Benzoylderivat der Formel I, wobei

$R^2$ ein heterocyclischer Rest ausgewählt aus der Gruppe: 4,5-Dihydroisoxazol-3-yl, wobei der genannte Rest gegebenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein kann;
insbesondere 4,5-Dihydroisoxazol-3-yl, 5-Methyl-4,5-dihydroisoxazol-3-yl, 5-Ethyl-4,5-dihydroisoxazol-3yl oder 4,5-Dimethyl-4,5-dihydroisoxazol-3-yl;

bedeutet;
und als
Komponente B) mindestens eine herbizide Verbindung aus den Gruppen B1, B2, B4 bis B12 und B14; insbesondere Clodinafop (und ggf. Cloquintocet), Diflufenzopyr, Imazethapyr, Flumetsulam, Pyrithiobac-sodium, Nicosulfuron, N-[[[4-methoxy-6-(trifluoromethyl)-1,3,5-triazin-2-yl]amino]carbonyl]-2-(trifluoromethyl)-benzenesulfonamide, Clopyralid, 2,4-D, Isoxaflutole, Glyphosate, Glufosinate-ammonium, Dimethenamid, S-Dimethenamid, Acetochlor, Metolachlor, S-Metolachlor, Pendimethalin, Carfentrazone-ethyl, Pyridate, Bentazon, Diuron, Bromoxynil, Atrazin, Terbutylazin, Metribuzin oder Dicamba.

Außerordentlich bevorzugt sind hierbei Mischungen, die als Komponente A) 4-[2-Chlor-3-(4,5-dihydroisoxazol-3-yl)-4-methylsulfonyl-benzoyl]-1-methyl-5-hydroxy-1H-pyrazol enthalten.
Ebenso außerordentlich bevorzugt sind hierbei Mischungen, die als Komponente A) 4-[2-Methyl-3-(4,5-dihydroisoxazol-3-yl)-4-methylsulfonyl-benzoyl]-1-methyl-5-hydroxy-1H-pyrazol enthalten.

• In einer weiteren besonderen Ausführungsform enthält die erfindungsgemäße synergistische herbizide Mischung als

Komponente A) ein 3-heterocyclyl-substituiertes Benzoylderivat der Formel I, wobei

$R^2$ ein heterocyclischer Rest ausgewählt aus der Gruppe: Thiazol-2-yl, Thiazol-4-yl, Thiazol-5-yl, 4,5-Dihydroisoxazol-4-yl und 4,5-Dihydroisoxazol-5-yl, wobei die fünf genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

bedeutet;
und als

Komponente B) mindestens eine herbizide Verbindung aus den Gruppen B1, B2, B4 bis B12 und B14; insbesondere Clodinafop (und ggf. Cloquintocet), Diflufenzopyr, Imazethapyr, Flumetsulam, Pyrithiobac-sodium, Nicosulfuron, N-[[[4-methoxy-6-(trifluoromethyl)-1,3,5-triazin-2-yl]amino]carbonyl]-2-(trifluoromethyl)-benzenesulfonamide, Clopyralid, 2,4-D, Isoxaflutole, Glyphosate, Glufosinate-ammonium, Dimethenamid, S-Dimethenamid, Acetochlor, Metolachlor, S-Metolachlor, Pendimethalin, Carfentrazone-ethyl, Pyridate, Bentazon, Diuron, Bromoxynil, Atrazin, Terbutylazin, Metribuzin oder Dicamba.

- In einer weiteren besonderen Ausführungsform enthält die erfindungsgemäße synergistische herbizide Mischung als Komponente A) ein 3-heterocyclyl-substituiertes Benzoylderivat der Formel I, wobei

  $R^2$ ein heterocyclischer Rest ausgewählt aus der Gruppe 4,5-Dihydroisoxazol-3-yl, 4,5-Dihydroisoxazol-4-yl und 4,5-Dihydroisoxazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

  bedeutet;
  und als Komponente B) mindestens eine herbizide Verbindung aus den Gruppen B1, B2, B4 bis B12 oder B14;

  - Vorzugsweise enthält die erfindungsgemäße synergistische herbizide Mischung als Komponente B) mindestens eine herbizide Verbindung aus folgenden Gruppen:

    B1 AcetylCoA-Carboxylase-Inhibitoren (ACC):
    Cyclohexenonoximether oder Phenoxypropionsäureester;

    B2 Acetolactatsynthase-Inhibitoren (ALS):
    Imidazolinone, Pyrimidylether, Sulfonamide oder Sulfonylharnstoffe;

    B4 Auxin-Herbizide:
    Pyridincarbonsäuren oder 2,4-D;

    B5 Auxin-Transport-Hemmer;

    B6 Carotinoid-Biosynthese-Inhibitoren;

    B7 Enolpyruvyl-Shikimat-3-Phosphat-Synthase-Inhibitoren;

    B8 Glutamin-Synthetase-Inhibitoren;

    B9 Lipidbiosynthese-Inhibitoren:
    Chloracetanilide oder Thioharnstoffe,

    B10 Mitose-Inhibitoren:
    Dinitroaniline;

    B11 Protophorphyrinogen-IX-oxidase-Inhibitoren:
    Diphenylether, Oxadiazole, cyclische Imide oder Pyrazole;

    B12 Photosynthese-Inhibitoren:
    Pyridate, Pyridafol, Benzothiadiazinone, Dipyridylene, Harnstoffe, Phenole, Chloridazon, Triazine oder Triazinone, insbesondere Pyridate, Benzothindiazinone, Dipyridylene, Harnstoffe, Phenole,Chleridazon, Triazine oder Triazinone;

    B14 Wuchsstoffe:
    Aryloxyalkansäuren, Benzoesäuren oder Chinolincarbonsäuren.

    Insbesondere enthält die erfindungsgemäße synergistische herbizide Mischung als Komponente B) mindestens eine herbizide Verbindung aus der Gruppe:

Cycloxydim, Sethoxydim, Clodinafop (und ggf. Cloquintocet), Fenoxaprop-ethyl, Fenoxaprop-P-ethyl, Imazopyr, Imazaquin, Imazamethabenz, Imazethapyr, Pyrithiobac-sodium, Metosulam, Halosulfuron-methyl, Nicosulfuron, N-[[[4-Methoxy-6-(trifluoromethyl)-1,3,5-triazin-2-yl]-amino]carbonyl]-2-(trifluoromethyl)-benzenesulfonamide, Flufenacet, 2,4-D, Diflufenzopyr, Isoxaflutole, Sulcotrione, Glyphosate, Glufosinate-ammonium, Dimethenamid, S-Metolachlor, Benthiocarb, Pendimethalin, Acifluorfen, Carfentrazone-ethyl, Cinidon-ethyl, Pyridate, Bentazon, Paraquat-dichlorid, Diuron, Isoproturon, Bromoxynil, Chloridazon, Atrazin, Metribuzin, MCPA, Dicamba und Quinclorac.

- Ebenso vorzugsweise enthält die erfindungsgemäße synergistische herbizide Mischung als Komponente B) mindestens eine herbizide Verbindung aus den Gruppen B1, B2, B4 bis B11 und B14;
  Insbesondere enthält die erfindungsgemäße synergistische herbizide Mischung mindestens eine herbizide Verbindung aus folgenden Gruppen:

  B1 AcetylCoA-Carboxylase-Inhibitoren (ACC):
  Cyclohexenonoximether oder Phenoxypropionsäureester;

  B2 Acetolactatsynthase-Inhibitoren (ALS) :
  Imidazolinone, Pyrimidylether, Sulfonamide oder Sulfonylharnstoffe;

  B4 Auxin-Herbizide:
  2,4-D;

  B5 Auxin-Transport-Hemmer;

  B6 Carotinoid-Biosynthese-Inhibitoren;

  B7 Enolpyruvyl-Shikimat-3-Phosphat-Synthase-Inhibitoren;

  B8 Glutamin-Synthetase-Inhibitoren;

  B9 Lipidbiosynthese-Inhibitoren:
  Chloracetanilide oder Thioharnstoffe;

  B10 Mitose-Inhibitoren:
  Dinitroaniline;

  B11 Protoporphyrinogen-IX-oxidase-Inhibitoren:
  Diphenylether, Oxadiazole, cyclische Imide oder Pyrazole;

  B14 Wuchsstoffe:
  Aryloxyalkansäure, Benzoesäuren oder Chinolincarbonsäuren.

  Besonders bevorzugt enthält die synergistische herbizide Mischung mindestens eine herbizide Verbindung aus der Gruppe:

  Cycloxydim, Sethoxydim, Clodinafop (und ggf. Cloquintocet), Fenoxaprop-ethyl, Fenoxaprop-P-ethyl, Imazapyr, Imazaquin, Imazamethabenz, Imazethapyr, Pyrithio-bac-sodium, Metosulam, Halosulfuron-methyl, Nicosulfuron, N-[[[4-Methoxy-6-(trifluoromethyl)-1,3,5-triazin-2-yl]-amino]carbonyl]-2-(trifluoromethyl)-benzenesulfonamide, Flufenacet, 2,4-D, Diflufenzopyr, Isoxaflutole, Sulcotrione, Glyphosate, Glufosinate-ammonium, Dimethenamid, S-Metolachlor, Benthiocarb, Pendimethalin, Acifluorfen, Carfentrazone-ethyl, Cinidon-ethyl, MCPA, Dicamba und Quinclorac.

- Ebenso vorzugsweise enthält die erfindungsgemäße synergistische herbizide Mischung als Komponente B) mindestens eine herbizide Verbindung aus der Gruppe B12;
  Insbesondere enthält die erfindungsgemäße synergistische herbizide Mischung mindestens eine herbizide Verbindung aus der Gruppe:

  Propanil, Pyridate, Benzothiadiazinone, Dinitrophenole, Dipyridylene, Harnstoffe, Phenole, Chloridazon,

Triazine, Triazinone, Uracile und Biscarbamate.

Besonders bevorzugt enthält die erfindungsgemäße synergistische herbizide Mischung mindestens eine herbizide Verbindung aus der Gruppe:

Pyridate, Bentazon, Paraquat-dichlorid, Diuron, Isoproturon, Bromoxynil, Chloridazon, Atrazin oder Metribuzin.

Ebenso insbesondere enthält die erfindungsgemäß herbizide Mischung mindestens eine herbizide Verbindung aus der Gruppe:

Propanil, Pyridate, Dinitrophenole, Dipyridylene, Chloridazon, Triazinone, Uracile und Biscarbamate.

Besonders bevorzugt enthält die erfindungsgemäße synergistische herbizide Mischung mindestens eine Verbindung aus der Gruppe:

Pyridate, Paraquat-dichlorid, Chloridazon oder Metribuzin.

- In einer weiteren besonderen Ausführungsform enthält die erfindungsgemäße synergistische herbizide Mischung als Komponente A) ein 3-heterocyclyl-substituiertes Benzoylderivat der Formel I, wobei

  $R^2$ ein heterocyclischer Rest ausgewählt aus der Gruppe Thiazol-2-yl, Thiazol-4-yl und Thiazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

  bedeutet;
  und als Komponente B) mindestens eine herbizide Verbindung aus den Gruppen B1, B2, B4 bis B12 oder B14;

  - Vorzugsweise enthält die erfindungsgemäße synergistische herbizide Mischung als Komponente B) mindestens eine herbizide Verbindung aus folgenden Gruppen:

    B1 AcetylCoA-Carboxylase-Inhibitoren (ACC):
    Cyclohexenonoximether oder Phenoxypropionsäureester;

    B2 Acetolactatsynthase-Inhibitoren (ALS):
    Imidazolinone, Pyrimidylether, Sulfonamide oder Sulfonylharnstoffe;

    B4 Auxin-Herbizide;
    Pyridincarbonsäuren oder 2,4-D;

    B5 Auxin-Transport-Hemmer;

    B6 Carotinoid-Biosynthese-Inhibitoren;

    B7 Enolpyruvyl-Shikimat-3-Phosphat-Synthase-Inhibitoren;

    B8 Glutamin-Synthetase-Inhibitoren;

    B9 Lipidbiosynthese-Inhibitoren:
    Chloracetanilide oder Thioharnstoffe,

    B10 Mitose-Inhibitoren:
    Dinitroaniline;

    B11 Protophorphyrinogen-IX-oxidase-Inhibitoren:
    Diphenylether, Oxadiazole, cyclische Imide oder Pyrazole;

B12 Photosynthese-Inhibitoren:
Pyridate, Pyridafol, Benzothiadiazinone, Dipyridylene, Harnstoffe, Phenole, Chloridazon, Triazine oder Triazinone, insbesondere Pyridate, Benzothindiazinone, Dipyridylene, Harnstoffe, Phenole, Chloridazon, Triazine oder Triazinone;

B14 Wuchsstoffe:
Aryloxyalkansäuren, Benzoesäuren oder Chinolincarbonsäuren.

Insbesondere enthält die erfindungsgemäße synergistische herbizide Mischung als Komponente B) mindestens eine herbizide Verbindung aus der Gruppe:

Cycloxydim, Sethoxydim, Clodinafop (und ggf. Cloquintocet), Fenoxaprop-ethyl, Fenoxaprop-P-ethyl, Imazopyr, Imazaquin, Imazamethabenz, Imazethapyr, Pyrithio-bacsodium, Metosulam, Halosulfuron-methyl, Nicosulfuron, N-[[[4-Methoxy-6-(trifluoromethyl)-1,3,5-triazin-2-yl]-amino]carbonyl]2-(trifluoromethyl)-benzenesulfonamide, Flufenacet, 2,4-D, Diflufenzopyr, Isoxaflutole, Sulcotrione, Glyphosate, Glufosinate-ammonium, Dimethenamid, S-Metolachlor, Benthiocarb, Pendimethalin, Acifluorfen, Carfentrazone-ethyl, Cinidon-ethyl, Pyridate, Bentazon, Paraquat-dichlorid, Diuron, Isoproturon, Bromoxynil, Chloridazon, Atrazin, Metribuzin, MCPA, Dicamba und Quinclorac.

- Ebenso vorzugsweise enthält die erfindungsgemäße synergistische herbizide Mischung als Komponente B) mindestens eine herbizide Verbindung aus den Gruppen B1, B2, B4 bis B11 und B14;
  Insbesondere enthält die erfindungsgemäße synergistische herbizide Mischung mindestens eine herbizide Verbindung aus folgenden Gruppen:

B1 AcetylCoA-Carboxylase-Inhibitoren (ACC) :
Cyclohexenonoximether oder Phenoxypropionsäureester;

B2 Acetolactatsynthase-Inhibitoren (ALS):
Imidazolinone, Pyrimidylether, Sulfonamide oder Sulfonylharnstoffe;

B4 Auxin-Herbizide:
2,4-D;

B5 Auxin-Transport-Hemmer;

B6 Carotinoid-Biosynthese-Inhibitoren;

B7 Enolpyruvyl-Shikimat-3-Phosphat-Synthase-Inhibitoren;

B8 Glutamin-Synthetase-Inhibitoren;

B9 Lipidbiosynthese-Inhibitoren:
Chloracetanilide oder Thioharnstoffe;

B10 Mitose-Inhibitoren:
Dinitroaniline;

B11 Protoporphyrinogen-IX-oxidase-Inhibitoren:
Diphenylether, Oxadiazole, cyclische Imide oder Pyrazole;

B14 Wuchsstoffe:
Aryloxyalkansäure, Benzoesäuren oder Chinolincarbonsäuren.

Besonders bevorzugt enthält die synergistische herbizide Mischung mindestens eine herbizide Verbindung aus der Gruppe:

Cycloxydim, Sethoxydim, Clodinafop (und ggf. Cloquintocet), Fenoxaprop-ethyl, Fenoxaprop-P-ethyl, Imazapyr, Imazaquin, Imazamethabenz, Imazethapyr, Pyrithio-bacsodium, Metosulam, Halosulfuron-methyl, Nicosulfuron, N-[[[4-Methoxy-6-(trifluoromethyl)-1,3,5-triazin-2-yl]-amino]carbonyl]-2-(trifluoromethyl)-benzenesulfonamide, Flufenacet, 2,4-D, Diflufenzopyr, Isoxaflutole, Sulcotrione, Glyphosate, Glufosinate-ammonium, Dimethenamid, S-Metolachlor, Benthiocarb, Pendimethalin, Acifluorfen, Carfentrazone-ethyl, Cinidon-ethyl, MCPA, Dicamba und Quinclorac.

- Ebenso vorzugsweise enthält die erfindungsgemäße synergistische herbizide Mischung als Komponente B) mindestens eine herbizide Verbindung aus der Gruppe B12;

  Insbesondere enthält die erfindungsgemäße synergistische herbizide Mischung mindestens eine herbizide Verbindung aus der Gruppe:

  Propanil, Pyridate, Benzothiadiazinone, Dinitrophenole, Dipyridylene, Harnstoffe, Phenole, Chloridazon, Triazine, Triazinone, Uracile und Biscarbamate.

  Besonders bevorzugt enthält die erfindungsgemäße synergistische herbizide Mischung mindestens eine herbizide Verbindung aus der Gruppe:

  Pyridate, Bentazon, Paraquat-dichlorid, Diuron, Isoproturon, Bromoxynil, Chloridazon, Atrazin oder Metribuzin.

  Ebenso insbesondere enthält die erfindungsgemäß herbizide Mischung mindestens eine herbizide Verbindung aus der Gruppe:

  Propanil, Pyridate, Dinitrophenole, Dipyridylene, Chloridazon, Triazinone, Uracile und Biscarbamate.

  Besonders bevorzugt enthält die erfindungsgemäße synergistische herbizide Mischung mindestens eine Verbindung aus der Gruppe:

  Pyridate, Paraquat-dichlorid, Chloridazon oder Metribuzin.

• In einer weiteren besonderen Ausführungsform enthält die synergistische herbizide Mischung als Komponente A ein 3-heterocyclyl-sustituiertes Benzoylderivat der Formel I und als Komponente B eine herbizide Verbindung. Für besonders bevorzugte Ausführungsformen gelten in Analogie die voranstehend beschriebenen Bevorzugungen.

• In einer weiteren besonderen Ausführungsform enthält die synergistische herbizide Mischung als Komponente A ein 3-heterocyclyl-substituiertes Benzoylderivat der Formel I und als Komponente B zwei herbizide Verbindungen.

  Für besonders bevorzugte Ausführungsformen gelten in Analogie die voranstehend beschriebenen Bevorzugungen.

  In einer weiteren besonders bevorzugten Ausführungsform enthält die synergistische herbizide Mischung als Komponente B eine herbizide Verbindung, wobei bzgl. bevorzugten Ausgestaltungen die voranstehenden Bevorzugungen gelten, und eine herbizide Verbindung aus den Gruppen B12 und B14.

Die vorliegende Erfindung ist auch auf herbizide Mittel gerichtet, die eine herbizid wirksame Menge einer synergistischen herbiziden Mischung (enthaltend die Komponenten A) und B) wie voranstehend beschrieben), mindestens einen flüssigen und/oder festen Trägerstoff und gewünschtenfalls mindestens einen grenzflächenaktiven Stoff enthalten.

Die erfindungsgemäßen synergistischen herbiziden Mischungen und herbiziden Mittel können in Kulturen wie Mais, Getreide, Reis und Soja, Unkräuter und Schadgräser sehr gut bekämpfen, ohne die Kulturpflanze zu schädigen; ein Effekt, der vor allem auch bei niedrigen Aufwandmengen auftritt.

Unter Berücksichtigung der Vielseitigkeit der Applikationsmethoden können die erfindungsgemäßen synergistischen herbiziden Mischungen und herbiziden Mittel noch in einer weiteren Zahl von Kulturpflanzen zur Beseitigung unerwünschter Pflanzen eingesetzt werden. In Betracht kommen beispielsweise folgende Kulturen: Allium cepa, Ananas comosus, Arachis hypogaea, Asparagus officinalis, Beta vulgaris spp. altissima, Beta vulgaris spp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus können die erfindungsgemäßen synergistischen herbiziden Mischungen und herbiziden Mittel auch in Kulturen, die durch Züchtung, einschließlich gentechnischer Methoden, gegen die Wirkung von Herbiziden tolerant sind, verwandt werden.

Die erfindungsgemäßen Mischungen, bzw. die sie enthaltenden herbiziden Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden.

Die Anwendungsformen richten sich nach den Verwendungszwecken; sie sollten in jedem Fall möglichst die feinste Verteilung der erfindungsgemäßen Wirkstoffe gewährleisten.

Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphthaline oder deren Derivate, alkylierte Benzole oder deren Derivate, Alkohole wie Methanol, Ethanol, Propanol, Butanol, Cyclohexanol, Ketone wie Cyclohexanon, stark polare Lösungsmittel, wie N-Methylpyrrolidon oder Wasser in Betracht.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als grenzflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der synergistischen herbiziden Mischung bzw. der einzelnen Wirkstoffe mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der erfindungsgemäßen Mischungen in den anwendungsfertigen Zubereitungen können in weiten Bereichen variiert werden. Im allgemeinen enthalten die Formulierungen 0,01 bis 95 Gew.-%, vorzugsweise 0,5 bis 90 Gew.-%, der erfindungsgemäßen Mischung.

Die Wirkstoffe der Komponenten A) und B) können gemeinsam, aber auch getrennt formuliert werden und/oder gemeinsam oder getrennt auf die Pflanzen, deren Lebensraum und/oder Samen ausgebracht werden. Bevorzugt werden die Wirkstoffe gleichzeitig appliziert. Es ist aber auch möglich diese getrennt auszubringen.

Außerdem kann es von Nutzen sein, die erfindungsgemäßen synergistischen herbiziden Mischungen bzw. herbiziden Mittel noch mit weiteren Pflanzenschutzmitteln gemeinsam oder getrennt anzuwenden, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Applikation der erfindungsgemäßen Mischungen und herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erfindungsgemäßen herbiziden Mittel werden bei der Nachauflaufbehandlung den Pflanzen vornehmlich

durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"- und "Ultra-low-Volume"-Verfahren ist ebenso möglich wie ihre Applikation in Form von sogenannten Granulaten.

Die synergistischen herbiziden Mischungen enthalten in der Regel die Komponenten A) und B) in solchen Gewichtsanteilen, daß der synergistische Effekt auftritt. Vorzugsweise liegen die Mischungsverhältnisse von Komponente A) und Komponente B) in Bereich von 1:0,002 bis 1:800, bevorzugt von 1:0,003 bis 1:160, besonders bevorzugt von 1:0,02 bis 1:160.

- Insbesondere enthalten die erfindungsgemäßen Mischungen ein 3-heterocyclyl-substituiertes Benzoylderivat der Formel I und eine herbizide Verbindung aus der Gruppe B1 (AcetylCoA-Carboxylase-Inhibitoren (ACC)) im Gewichtsverhältnis von 1:0,1 bis 1:80, bevorzugt von 1:0,17 bis 1:16.

  - Besonders bevorzugt enthalten die erfindungsgemäßen Mischungen ein 3-heterocyclyl-substituiertes Benzoylderivat der Formel I und eine herbizide Verbindung aus der Gruppe der Cyclohexenonoximether, vorzugsweise Cycloxydim, Sethoxydim oder Tralkoxydim, insbesondere Sethoxydim oder Tralkoxydim, im Gewichtsverhältnis von 1:0,4 bis 1:80, bevorzugt von 1:0,67 bis 1:16.

  - Ebenso besonders bevorzugt enthalten die erfindungsgemäßen Mischungen ein 3-heterocyclyl-substituiertes Benzoylderivat der Formel I und eine herbizide Verbindung aus der Gruppe der Phenoxyphenoxypropionsäureester, im Gewichtsverhältnis von 1:0.1 bis 1:60, bevorzugt von 1:0,17 bis 1:12.

    Außerordentlich bevorzugt enthalten diese Clodinafop-propargyl als Komponente B) im Gewichtsverhältnis von 1:0,1 bis 1:20, bevorzugt von 1:0,17 bis 1:4.

    Ebenso außerordentlich bevorzugt enthalten diese Fenoxaprop-ethyl als Komponente B) im Gewichtsverhältnis von 1:0,2 bis 1:60, bevorzugt von 1:0,34 bis 1:12.

    Ebenso außerordentlich bevorzugt enthalten diese Fenoxaprop-P-ethyl als Komponente B) im Gewichtsverhältnis von 1:0,1 bis 1:30, bevorzugt von 1:0,16 bis 1:6.

- Ebenso insbesondere enthalten die erfindungsgemäßen Mischungen ein 3-heterocyclyl-substituiertes Benzoylderivat der Formel I und eine herbizide Verbindung aus der Gruppe B2 (Acetolactatsynthase-Inhibitoren) im Gewichtsverhältnis von 1:0,004 bis 1:160, bevorzugt von 1:0,006 bis 1:32.

  - Besonders bevorzugt enthalten die erfindungsgemäßen Mischungen ein 3-heterocyclyl-substituiertes Benzoylderivat der Formel I und eine herbizide Verbindung aus der Gruppe der Imidazolinone im Gewichtsverhältnis von 1:0,08 bis 1:160, bevorzugt von 1:0,13 bis 1:32.

    Außerordentlich bevorzugt enthalten diese Imazapyr als Komponente B) im Gewichtsverhältnis von 1:0,12 bis 1:80, bevorzugt von 1:0,2 bis 1:16.

    Ebenso außerordentlich bevorzugt enthalten diese Imazaquin als Komponente B) im Gewichtsverhältnis von 1:0,2 bis 1:60, bevorzugt on 1:0,33 bis 1:12.

    Ebenso außerordentlich bevorzugt enthalten diese Imazamethabenz als Komponente B) im Gewichtsverhältnis von 1:0,4 bis 1:160 bevorzugt von 1:0,66 bis 1:32.

    Ebenso außerordentlich bevorzugt enthalten diese Imazethapyr als Komponente B) im Gewichtsverhältnis von 1:0,12 bis 1:30, bevorzugt von 1:0,2 bis 1:6.

  - Ebenso besonders bevorzugt enthalten die erfindungsgemäßen Mischungen ein 3-heterocyclyl-substituiertes Benzoylderivat der Formel I und eine herbizide Verbindung aus der Gruppe der Pyrimidylether, insbesondere Pyrithiobac-sodium, im Gewichtsverhältnis von 1:0,008 bis 1:24, bevorzugt von 1:0,013 bis 1:4,8.

  - Ebenso besonders bevorzugt enthalten die erfindungsgemäßen Mischungen ein 3-heterocyclyl-substituiertes Benzoylderivat der Formel I und eine herbizide Verbindung aus der Gruppe der Sulfonamide im Gewichtsverhältnis von 1:0,004 bis 1:45, bevorzugt von 1:0,006 bis 1:9.

    Außerordentlich bevorzugt enthalten diese Flumetsulam als Komponente B) im Gewichtsverhältnis von 1:0,1 bis 1:45, bevorzugt von 1:0,17 bis 1:9.

    Ebenso außerordentlich bevorzugt enthalten diese Metosulam als Komponente B) im Gewichtsverhältnis von 1:0,004 bis 1:12, bevorzugt von 1:0,006 bis 1:2,4.

  - Ebenso besonders bevorzugt enthaltenen die erfindungsgemäßen Mischungen ein 3-heterocyclyl-substituiertes Benzoylderivat der Formel I und eine herbizide Verbindung aus der Gruppe der Sulfonylharnstoffe im

Gewichtsverhältnis von 1:0,004 bis 1:24, bevorzugt von 1:0,006 bis 1:4,8.

Außerordentlich bevorzugt enthalten diese Halosulfuron-methyl, Rimsulfuron oder N-[[[4-methoxy-6-(trifluoromethyl)-1,3,5-triazin-2-yl]amino]carbonyl]-2-(trifluoromethyl)-benzenesulfonamide als Komponente B) im Gewichtsverhältnis von 1:0,02 bis 1:24, bevorzugt von 1:0,03 bis 1:4,8.

Ebenso außerordentlich bevorzugt enthalten diese als Komponente B) Nicosulfuron im Gewichtsverhältnis von 1:0,02 bis 1:24, bevorzugt von 1:0,03 bis 1:4,8.

Ebenso außerordentlich bevorzugt enthalten diese als Komponente B) Primisulfuron-methyl oder Prosulfuron im Gewichtsverhältnis von 1:0,04 bis 1:24, bevorzugt von 1:0,06 bis 1:4,8.

Ebenso außerordentlich bevorzugt enthalten diese Thifensulfuron-methyl, Tribenuron-methyl oder Sulfosulfuron als Komponente B) im Gewichtsverhältnis von 1:0,04 bis 1:12, bevorzugt von 1:0,06 bis 1:2,4.

- Ebenso insbesondere enthalten die erfindungsgemäßen Mischungen ein 3-heterocyclyl-substituiertes Benzoylderivat der Formel I und eine herbizide Verbindung aus der Gruppe B3 (Amide), insbesondere Fluthiamide im Gewichtsverhältnis von 1:1 bis 1:400, bevorzugt von 1:0,6 bis 1:80.

- Ebenso insbesondere enthalten die erfindungsgemäßen Mischungen ein 3-heterocyclyl-substituiertes Benzoylderivat der Formel I und eine herbizide Verbindung aus der Gruppe B4 (Auxin-Herbizide) im Gewichtsverhältnis von 1:0,1 bis 1:150, bevorzugt von 1:0,67 bis 1:30.

  - Besonders bevorzugt enthalten die erfindungsgemäßen Mischungen ein 3-heterocyclyl-substituiertes Benzoylderivat der Formel I und eine herbizide Verbindung aus der Gruppe der Pyridincarbonsäuren, insbesondere Clopyralid, im Gewichtsverhältnis von 1:0,1 bis 1:150, bevorzugt von 1:0,67 bis 1:30.

  - Ebenso besonders bevorzugt enthalten die erfindungsgemäßen Mischungen ein 3-heterocyclyl-substituiertes Benzoylderivat der Formel I und 2,4-D im Gewichtsverhältnis von 1:0,2 bis 1:150, bevorzugt von 1:0,33 bis 1:30.

- Ebenso insbesondere enthalten die erfindungsgemäßen Mischungen ein 3-heterocyclyl-substituiertes Benzoylderivat der Formel I und eine herbizide Verbindung aus der Gruppe B5 (Auxin-Transport-Hemmer), bevorzugt Diflufenzopyr, im Gewichtsverhältnis von 1:0,06 bis 1:20, bevorzugt von 1:0,1 bis 1:4.

- Ebenso insbesondere enthalten die erfindungsgemäßen Mischungen ein 3-heterocyclyl-substituiertes Benzoylderivat der Formel I und eine herbizide Verbindung aus der Gruppe B6 (Carotinoid-Biosynthese-Inhibitoren), im Gewichtsverhältnis von 1:0,1 bis 1:120, bevorzugt von 1:0,17 bis 1:24.

  - Besonders bevorzugt enthalten die erfindungsgemäßen Mischungen ein 3-heterocyclyl-substituiertes Benzoylderivat der Formel I und Isoxaflutole oder Isoxachlortole im Gewichtsverhältnis von 1:0,1 bis 1:40, bevorzugt von 1:0,17 bis 1:8.

  - Ebenso besonders bevorzugt enthalten die erfindungsgemäßen Mischungen ein 3-heterocyclyl-substituiertes Benzoylderivat der Formel I und Mesotrione oder Ketospiradox im Gewichtsverhältnis von 1:0,1 bis 1:60, bevorzugt von 1:0,16 bis 1:12.

  - Ebenso besonders bevorzugt enthalten die erfindungsgemäßen Mischungen ein 3-heterocyclyl-substituiertes Benzoylderivat der Formel I und Sulcotrione im Gewichtsverhältnis von 1:0,4 bis 1:120, bevorzugt von 1:0,66 bis 1:24.

- Ebenso insbesondere enthalten die erfindungsgemäßen Mischungen ein 3-heterocyclyl-substituiertes Benzoylderivat der Formel I und eine herbizide Verbindung aus der Gruppe B7 (Enolpyruvyl-Shikimat-3-Phosphat-Synthase-Inhibitoren (ESPS)), bevorzugt Glyphosate oder Sulfosate, im Gewichtsverhältnis von 1:1,4 bis 1:216, bevorzugt von 1:2,4 bis 1:43,2.

- Ebenso insbesondere enthalten die erfindungsgemäßen Mischungen ein 3-heterocyclyl-substituiertes Benzoylderivat der Formel I und eine herbizide Verbindung aus der Gruppe B8 (Glutamin-Synthetase-Inhibitoren), bevorzugt Glufosinate-ammonium, im Gewichtsverhältnis von 1:0,04 bis 1:120, bevorzugt von 1:0,06 bis 1:24.

- Ebenso insbesondere enthalten die erfindungsgemäßen Mischungen ein 3-heterocyclyl-substituiertes Benzoylderivat der Formel I und eine herbizide Verbindung aus der Gruppe B9 (Lipidbiosynthese-Inhibitoren) im Gewichtsverhältnis von 1:0,24 bis 1:800, bevorzugt von 1:0,40 bis 1:160.

- Besonders bevorzugt enthalten die erfindungsgemäßen Mischungen ein 3-Heterocyclyl-substituiertes Benzoylderivat der Formel I und eine herbizide Verbindung aus der Gruppe der Chloracetanilide im Gewichtsverhältnis von 1:0,24 bis 1:800, bevorzugt von 1:0,4 bis 1:160.

  Außerordentlicht bevorzugt enthalten die erfindungsgemäßen Mischungen ein 3-heterocyclyl-substituiertes Benzoylderivat der Formel I und Dimethenamid oder S-Dimethenamid im Gewichtsverhältnis von 1:0,24 bis 1:400, bevorzugt von 1:0,4 bis 1:80.

  Ebenso außerordentlich bevorzugt enthalten die erfindungsgemäßen Mischungen ein 3-heterocyclyl-substituiertes Benzoylderivat der Formel I und Acetochlor im Gewichtsverhältnis von 1:1 bis 1:800, bevorzugt 1: 1,67 bis 1:160.

  Ebenso außerordentlich bevorzugt enthalten die erfindungsgemäßen Mischungen ein 3-heterocyclyl-substituiertes Benzoylderivat der Formel I und Metolachlor oder S-Metolachlor im Gewichtsverhältnis von 1:0,24 bis 1:800, bevorzugt von 1:0,40 bis 1:160.

- Besonders bevorzugt enthalten die erfindungsgemäßen Mischungen ein 3-heterocyclyl-substituiertes Benzoylderivat der Formel I und eine herbizide Verbindung aus der Gruppe der Thioharnstoffe im Gewichtsverhältnis 1:0,4 bis 1:800, bevorzugt von 1:0,66 bis 1:160.

  Außerordentlich bevorzugt enthalten die erfindungsgemäßen Mischungen ein 3-heterocyclyl-substituiertes Benzoylderivat der Formel I und Benthiocarb im Gewichtsverhältnis von 1:4 bis 1:800, bevorzugt von 1: 6,6 bis 1:160.

• Ebenso insbesondere enthalten die erfindungsgemäßen Mischungen ein 3-heterocyclyl-substituiertes Benzoylderivat der Formel I und eine herbizide Verbindung aus der Gruppe B10 (Mitose-Inhibitoren), bevorzugt ein Dinitroanilin, insbesondere Pendimethalin, im Gewichtsverhältnis von 1:1,5 bis 1:600, bevorzugt von 1:2,5 bis 1:120.

• Ebenso insbesondere enthalten die erfindungsgemäßen Mischungen ein 3-heterocyclyl-substituiertes Benzoylderivat der Formel I und eine herbizide Verbindung aus der Gruppe B11 (Protoporphyrinogen-IX-oxidase-Inhibitoren) im Gewichtsverhältnis von 1:0,002 bis 1:120, bevorzugt von 1:0,003 bis 1:24.

- Besonders bevorzugt enthalten die erfindungsgemäßen Mischungen ein 3-heterocyclyl-substituiertes Benzoylderivat der Formel I und eine herbizide Verbindung aus der Gruppe der Diphenylether, insbesondere Acifluorfen oder Acifluorfen-sodium, im Gewichtsverhältnis von 1:0,2 bis 1:60, bevorzugt von 1:0,33 bis 1:12.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Oxadiazole, insbesondere Oxadiargyl, im Gewichtsverhältnis von 1:0,2 bis 1:120, bevorzugt von 1:0,33 bis 1:24.

- Ebenso besonders bevorzugt enthalten die erfindungsgemäßen Mischungen ein 3-heterocyclyl-substituiertes Benzoylderivat der Formel I und eine herbizide Verbindung aus der Gruppe der cyclische Imide im Gewichtsverhältnis von 1:0,002 bis 1:60, bevorzugt von 1:0,003 bis 1:12.

  Außerordentlich bevorzugt enthalten die erfindungsgemäßen Mischungen ein 3-heterocyclyl-substituiertes Benzoylderivat der Formel I und Carfentrazone-ethyl im Gewichtsverhältnis von 1:0,002 bis 1:7, bevorzugt von 1:0,003 bis 1:1,4.

  Ebenso außerordentlich bevorzugt enthalten die erfindungsgemäßen Mischungen ein 3-heterocyclyl-substituiertes Benzoylderivat der Formel I und Cinidon-ethyl oder Flumicloracpentyl im Gewichtsverhältnis von 1: 0,012 bis 1:7, bevorzugt von 1:0,02 bis 1:1,4.

  Ebenso außerordentlich bevorzugt enthalten die erfindungsgemäßen Mischungen ein 3-heterocyclyl-substituiertes Benzoylderivat der Formel I und Butafenacil im Gewichtsverhältnis von 1:0,02 bis 1:60, bevorzugt von 1:0,03 bis 1:12.

  Ebenso außerordentlich bevorzugt enthalten die erfindungsgemäßen Mischungen ein 3-heterocyclyl-substituiertes Benzoylderivat der Formel I und JV 485 im Gewichtsverhältnis von 1:0,2 bis 1:60, bevorzugt von 1:0,3 bis 1:12.

• Insbesondere enthalten die erfindungsgemäßen Mischungen ein 3-heterocyclyl-substituiertes Benzoylderivat der Formel I und eine herbizide Verbindung aus der Gruppe B12 (Photosynthese-Inhibitoren) im Gewichtsverhältnis von 1:0,12 bis 1:800, bevorzugt von 1:0,2 bis 1:160.

- Besonders bevorzugt enthalten die erfindungsgemäßen Mischungen ein 3-heterocyclyl-substituiertes Benzoylderivat der Formel I und Pyridate oder Pyridafol im Gewichtsverhältnis von 1:1 bis 1:300, bevorzugt von 1:1,67 bis 1:60.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Benzothiadiazinone, insbesondere Bentazon, im Gewichtsverhältnis von 1:1,92 bis 1:288, bevorzugt von 1:3,2 bis 1:57,6.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Dipyridylene, insbesondere Paraquat-dichlorid, in einem Gewichtsverhältnis von 1:0,4 bis 1:160, bevorzugt von 1:0,66 bis 1:32.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Harnstoffe, insbesondere Diuron oder Isoproturon, im Gewichtsverhältnis von 1:1 bis 1:320, bevorzugt von 1:1,67 bis 1:64.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Phenole, insbesondere Bromoxynil, im Gewichtsverhältnis von 1:0,4 bis 1:140, bevorzugt von 1:0,67 bis 1:28.

- Ebenso besonders bevorzugt enthalten die erfindungsgemäßen Mischungen ein 3-heterocyclyl-substituiertes Benzoylderivat der Formel I und Chloridazon in einem Gewichtsverhältnis von 1:2 bis 1:800, bevorzugt von 1:3,3 bis 1:160.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Triazine, insbesondere Atrazin oder Terbutylazin, im Gewichtsverhältnis von 1:1 bis 1:800, bevorzugt von 1:1,67 bis 1:160.

- Ebenso besonders bevorzugt enthalten die erfindungsgemäßen Mischungen ein 3-heterocyclyl-substituiertes Benzoylderivat der Formel I und eine herbizide Verbindung aus der Gruppe der Triazinone, insbesondere Metribuzin, im Gewichtsverhältnis von 1:0,12 bis 1:60, bevorzugt von 1:0,2 bis 1:12.

• Ebenso insbesondere enthalten die erfindungsgemäßen Mischungen ein 3-heterocyclyl-substituiertes Benzoylderivat der Formel I und eine herbizide Verbindung aus der Gruppe B13 (Synergisten), bevorzugt ein Oxiran, insbesondere Tridiphane, im Gewichtsverhältnis von 1:2 bis 1:300, bevorzugt von 1:3,33 bis 1:60.

• Ebenso insbesondere enthalten die erfindungsgemäßen Mischungen ein 3-heterocyclyl-substituiertes Benzoylderivat der Formel I und eine herbizide Verbindung aus der Gruppe B14 (Wuchsstoffe) im Gewichtsverhältnis von 1:0,1 bis 1:240, bevorzugt von 1:0,167 bis 1:48.

  - Besonders bevorzugt enthalten die erfindungsgemäßen Mischungen ein 3-heterocyclyl-substituiertes Benzoylderivat der Formel I und eine herbizide Verbindung aus der Gruppe der Aryloxyalkansäuren im Gewichtsverhältnis von 1:0,2 bis 1:240, bevorzugt von 1:0,33 bis 1:48.

    Außerordentlich bevorzugt enthalten diese Fluoroxypyr als Komponente B) im Gewichtsverhältnis von 1:0,2 bis 1:80, bevorzugt von 1:0,33 bis 1:16.

    Ebenso außerordentlich bevorzugt enthalten diese MCPA oder Mecoprop-P als Komponente B) im Gewichtsverhältnis von 1:1,6 bis 1:240, bevorzugt von 1:2,67 bis 1:48.

  - Ebenso besonders bevorzugt enthalten die erfindungsgemäßen Mischungen ein 3-heterocyclyl-substituiertes Benzoylderivat der Formel I und eine herbizide Verbindung aus der Gruppe der Benzoesäuren, insbesondere Dicamba, im Gewichtsverhältnis von 1:0,3 bis 1:160, bevorzugt von 1:0,5 bis 1:32.

  - Ebenso besonders bevorzugt enthalten die erfindungsgemäßen Mischungen ein 3-heterocyclyl-substituiertes Benzoylderivat der Formel I und eine herbizide Verbindung aus der Gruppe der Chinolincarbonsäuren, insbesondere Quinclorac, im Gewichtsverhältnis von 1:0,1 bis 1:120, bevorzugt von 1:0,16 bis 1:24.

• Ebenso insbesondere enthalten die erfindungsgemäßen Mischungen ein 3-heterocyclyl-substituiertes Benzoylderivat der Formel I und eine herbizide Verbindung aus der Gruppe B16 (verschiedene weitere Herbizide), insbesondere Triaziflam, in einem Gewichtsverhältnis von 1:0,2 bis 1:150, bevorzugt von 1:0,3 bis 1:30.

- Ebenso insbesondere enthalten die erfindungsgemäßen Mischungen ein 3-heterocyclyl-substituiertes Benzoylderivat der Formel I und zwei herbizide Verbindungen aus den Gruppen B1 bis B16, wobei das Gewichtsverhältnis des 3-heterocyclyl-substituierten Benzoylderivats der Formel I zu der jeweils einzelnen herbiziden Komponente von B) in den Bereichen liegt, die voranstehend beschrieben wurden.

  - Besonders bevorzugt enthalten die erfindungsgemäßen Mischungen ein 3-heterocyclyl-substituiertes Benzoylderivat der Formel I, eine herbizide Verbindung aus der Gruppe B2 und eine herbizide Verbindung aus der Gruppe B14 in einem Gewichtsverhältnis von 1:0,004:0,1 bis 1:160:240, bevorzugt von 1:0,006:0,16 bis 1:32:48.

  - Besonders bevorzugt enthalten die erfindungsgemäßen Mischungen ein 3-heterocyclyl-substituiertes Benzoylderivat der Formel I, eine herbizide Verbindung aus der Gruppe B5 und eine herbizide Verbindung aus der Gruppe B14 in einem Gewichtsverhältnis von 1:0,06:0,1 bis 1:20:240, bevorzugt von 1:0,1:0,16 bis 1:4:48.

  - Ebenso bevorzugt enthalten die erfindungsgemäßen Mischungen ein 3-heterocyclyl-substituiertes Benzoylderivat der Formel I, eine herbizide Verbindung aus der Gruppe B9 und eine herbizide Verbindung aus der Gruppe B12 in einem Gewichtsverhältnis von 1:0,24:0,12 bis 1:80:800, bevorzugt von 1:0,48:0,2 bis 1:16:160.

  - Ebenso bevorzugt enthalten die erfindungsgemäßen Mischungen ein 3-heterocyclyl-substituiertes Benzoylderivat der Formel I, eine herbizide Verbindung aus der Gruppe B12 und eine herbizide Verbindung ebenfalls aus der Gruppe B12 in einem Gewichtsverhältnis von 1:0,12:0,12 bis 1:800:800, bevorzugt von 1:0,2:0,2 bis 1:160:160.

  - Ebenso bevorzugt enthalten die erfindungsgemäßen Mischungen ein 3-heterocyclyl-substituiertes Benzoylderivat der Formel I, eine herbizide Verbindung aus der Gruppe B12 und eine herbizide Verbindung aus der Gruppe B14 in einem Gewichtsverhältnis von 1:0,12:0,1 bis 1:800:240, bevorzugt von 1:0,2:0,16 bis 1:160:48.

Die Aufwandmenge an reiner synergetischer herbizider Mischung, d.h. ohne Formulierungshilfsmittel, beträgt je nach Bekämpfungsziel, Jahreszeit, Zielpflanzen und Wachstumsstadium 2 bis 5000 g/ha, vorzugsweise 2 bis 4500 g/ha, insbesondere 8 bis 4500 g/ha aktive Substanz (a.S.).

Die Aufwandmenge an 3-heterocyclyl-substituiertem Benzoylderivat der Formel I beträgt 0,1 bis 250 g/ha, in der Regel 5 bis 250 g/ha, vorzugsweise 25 bis 150 g/ha aktive Substanz (a.S.).

Die bevorzugten Aufwandmengen der einzelnen Wirkstoffklassen bzw. der Wirkstoffe der Komponente B sind in Tabelle 2 zusammengestellt.

Tabelle 2

| Komponente B | Wirkstoffklasse | Wirkstoff | Aufwandmenge (g/ha) |
|---|---|---|---|
| B1 AcetylCoA–Carboxylase–Inhibitoren | | | 25–400 |
| | Cyclohexenonoximether | | 100–400 |
| | | Cycloxydim | 100–400 |
| | | Sethoxydim | 100–400 |
| | | Tralkoxydim | 100–400 |
| | Phenoxyphenoxypropionsäureester | | 25–300 |
| | | Clodinafpop–P–propargyl[a] | 25–100 |
| | | Fenoxaprop-ethyl | 50–300 |
| | | Fenoxaprop–P–ethyl | 25–150 |
| B2 Acetolactatsynthase–Inhibitoren (ALS) | | | 1-800 |
| | Imidazolinone | | 20-800 |
| | | Imazapyr | 30–400 |
| | | Imazaquin | 50–300 |
| | | Imazamethabenz | 100–800 |
| | | Imazaethopyr | 30-150 |
| | | Imazamox | 20-120 |
| | Pyrimidylether | | 2–120 |
| | | Pyrithiobac–sodium | 2–120 |

| Komponente B | Wirkstoffklasse | Wirkstoff | Aufwandmenge (g/ha) |
|---|---|---|---|
| | Sulfonamide | | 1–225 |
| | | Florasulam | 1-20 |
| | | Flumetsulam | 25–225 |
| | | Metosulam | 1-60 |
| | Sulfonylharnstoffe | | 1–120 |
| | | Halosulfuron–methyl | 5–120 |
| | | Nicosulfuron | 1–120 |
| | | Primisulfuron–methyl | 10–120 |
| | | Prosulfuron | 10–120 |
| | | Rimsulfuron | 5–120 |
| | | Thifensulfuron–methyl | 10–60 |
| | | Tribenuron–methyl | 10–60 |
| | | N–[[[4–methoxy–6–(trifluoromethyl)–1,3,5–triazin–2–yl]amino]carbonyl]–2–(trifluoro-methyl)–benzenesulfonamide | 5–120 |
| | | Sulfosulfuron | 10–60 |
| B3 Amide | | | 250–2000 |
| | – | Fluthiamide | 250–2000 |
| B4 Auxin–Herbizide | | | 25–750 |

| Komponente B | | Wirkstoffklasse | Wirkstoff | Aufwandmenge (g/ha) |
|---|---|---|---|---|
| | | Pyridincarbonsäuren | | 25–750 |
| | | | Clopyralid | 25–750 |
| | | – | 2,4–D | 50–750 |
| B5 | Auxin–Transport–Hemmer | | | 15–100 |
| | | – | Diflufenzopyr | 15–100 |
| B6 | Carotinoid–Biosynthese–Inhibitoren | | | 25–600 |
| | | – | Isoxaflutole | 25–200 |
| | | – | Sulcotrione | 100–600 |
| | | – | Mesotrione | 25–300 |
| | | – | Isoxachlortole | 25–200 |
| | | – | Ketospiradox | 25–300 |
| B7 | Enolpyruvyl–Shikimat–3–Phosphat–Synthase–Inhibitoren (ESPS) | | | 360–1080 |
| | | – | Glyphosate | 360–1080 |
| | | – | Sulfosate | 360–1080 |
| B8 | Glutamin–Synthetase–Inhibitoren | | | 10–600 |
| | | – | Glufosinate–ammonium | 10–600 |
| B9 | Lipidbiosynthese–Inhibitoren | | | 60–4000 |
| | | Chloracetanilide | | 60–4000 |

| Komponente B | Wirkstoffklasse | Wirkstoff | Aufwandmenge (g/ha) |
|---|---|---|---|
| | | Dimethenamid | 60–2000 |
| | | S–Dimethenamid | 60–2000 |
| | | Acetochlor | 250–4000 |
| | | Metolachlor | 60–4000 |
| | | S–Metolachlor | 60–4000 |
| | Thioharnstoffe | | 100–4000 |
| | | Benthiocarb | 1000–4000 |
| B10 Mitose–Inhibitoren | | | 375–3000 |
| | Dinitroaniline | | 375–3000 |
| | | Pendimethalin | 375–3000 |
| B11 Protophorphyrinogen–IX–oxidase–Inhibitoren | | | 0,5–600 |
| | Diphenylether | | 50–300 |
| | | Acifluorfen | 50–300 |
| | | Acifluorfen–sodium | 50–300 |
| | Oxadiazole | | 50–600 |
| | | Oxadiargyl | 50–600 |
| | cyclische Imide | | 0,5–300 |
| | | Carfentrazone–ethyl | 0,5–35 |

| Komponente B | Wirkstoffklasse | Wirkstoff | Aufwandmenge (g/ha) |
|---|---|---|---|
| | | Cinidon–ethyl | 3–35 |
| | | Flumiclorac–pentyl | 3–35 |
| | | Butafenacil | 5–300 |
| | | JV 485 | 50–300 |
| B12 Photosynthese–Inhibitoren | | | 30–4000 |
| | – | Pyridate | 250–1500 |
| | | Pyridafol | 250–1500 |
| | Benzothiadiazinone | | 480–1440 |
| | | Bentazon | 480–1440 |
| | Dipyridylene | | 100-800 |
| | | Paraquat-dichlorid | 100–800 |
| | Harnstoffe | | 250–1600 |
| | | Diuron | 250–1600 |
| | | Isoprotoron | 250–1600 |
| | Phenole | | 100–700 |
| | | Bromoxynil | 100–700 |
| | Chloridazon | - | 500–4000 |
| | Triazine | | 250–4000 |
| | | Atrazin | 250–4000 |

| Komponente B | Wirkstoffklasse | Wirkstoff | Aufwandmenge (g/ha) |
|---|---|---|---|
| | | Terbutylazin | 250–4000 |
| | Triazinone | | 30–300 |
| | | Metribuzin | 30–300 |
| B13 Synergisten | | | 500–1500 |
| | Oxirane | | 500–1500 |
| | | Tridiphane | 500–1500 |
| B14 Wuchsstoffe | | | 25–1200 |
| | Aryloxyalkansäuren | | 50–1200 |
| | | Fluoroxypyr | 50–400 |
| | | MCPA | 400–1200 |
| | | Mecoprop–P | 400–1200 |
| | Benzoesäuren | | 75–800 |
| | | Dicamba | 75–800 |
| | Chinolincarbonsäuren | | 25–600 |
| | | Quinclorac | 25–600 |
| B16 Verschiedene weitere Herbizide | - | Triaziflam | 50-750 |

[a] Es können gegebenenfalls noch 10-50 g/ha Cloquintocet zugegeben werden.

Anwendungsbeispiele

Die Applikation der erfindungsgemäßen Mischungen erfolgte im Vorauflaufverfahren oder im Nachauflaufverfahren (Blattbehandlung). Die herbiziden Verbindungen der Komponente B wurden in der Formulierung, in der sie als Handelsprodukt vorliegen, ausgebracht.

Es handelte sich teils um Gewächshausversuche und teils um Freilandversuche auf Kleinparzellen (auf einem Standort mit sandigem Lehm (pH 6.2 bis 7.0) bzw. sandigem Ton (pH 5.0 bis 6.7) als Boden).

Die Schadpflanzen hatten unterschiedliche Größen und Entwicklungsstadien, im Durchschnitt hatten sie 5 bis 20 cm je nach Wuchsform.

Die herbizid wirksamen Verbindungen der Komponenten A) und B) wurden nacheinander oder gemeinsam, letzteres teils als Tankmischung, teils in Fertigformulierung, ausgebracht. Und zwar in Form von Emulsionen, wäßrigen Lösungen oder Suspensionen, wobei als Verteilungsmittel Wasser (300 - 400 l/ha) diente. Bei den Freilandversuchen erfolgte die Ausbringung mit Hilfe einer fahrbaren Parzellenspritzmaschine.

Die Versuchsperiode erstreckte sich über 3 bis 8 Wochen, wobei die Bestände auch noch zu späteren Zeiten beobachtet wurden.

Die Schädigung durch die herbiziden Mittel wurde anhand einer Skala von 0 % bis 100 % im Vergleich zu unbehandelten Kontrollparzellen bewertet. Dabei bedeutet 0 keine Schädigung und 100 eine völlige Zerstörung der Pflanzen.

In den folgenden Beispielen wird die Wirkung der erfindungsgemäß verwendbaren herbiziden Mittel gezeigt, ohne die Möglichkeit weiterer Anwendungen auszuschließen.

Bei diesen Beispielen wurde nach der Methode von S. R. Colby (Calculating synergistic and antagonistic responses of herbicid combinations, Weeds 15, 20 ff (1967)) derjenige Wert E errechnet, der bei einer nur additiven Wirkung der Einzelwirkstoffe zu erwarten ist.

Die Berechnung erfolgt nach

$$E = X + Y - \frac{XY}{100}$$

wobei

X = Prozentsatz der herbiziden Wirkung von Komponente A) bei einer Aufwandmenge a;

Y = Prozentsatz der herbiziden Wirkung von Komponente B) bei einer Aufwandmenge b;

E = zu erwartende herbizide Wirkung der Komponenten A) + B) bei Aufwandmengen a + b (in %);

bedeuten.

Ist der beobachtete Wert höher als der nach Colby errechnete Wert E, so liegt eine synergistische Wirkung vor.

Die erfindungsgemäßen herbiziden Mischungen haben eine höhere herbizide Wirkung, als nach Colby auf Grund der beobachteten Wirkungen der Einzelkomponenten bei alleiniger Anwendung zu erwarten wäre.

Die Ergebnisse der Tests sind in den folgenden Tabellen 3 bis 80 aufgeführt.

Bei diesen Untersuchungen wurden folgende Pflanzen verwendet.

| Lateinischer Name | Deutscher Name |
|---|---|
| Abutilon theophrasti | Schönmalve |
| Alopecuros myocuroides | Ackerfuchsschwanz |
| Amaranthus retroflexus | krummer Fuchsschwanz |
| Anthemis mixta | Hundskamille |
| Bidens pilosa | behaarter Zweizahn |
| Brachiaria plantaginea | - |
| Chenopodium album | weißer Gänsefuß |
| Cyperus iria | - |
| Cyperus species | Zyperngrasarten |

(fortgesetzt)

| Lateinischer Name | Deutscher Name |
|---|---|
| Digitaria adscendens | Fingerhirse |
| Digitaria sanguinalis | Blutfingerhirse |
| Echinochloa crus-galli | Hühnerhirse |
| Galium aparine | Klettenlabkraut |
| Geranium carolinianum | Storchschnabel |
| Ipomoea acuminata | spitzblättrige Trichterwinde |
| Ipemoea lacunosa | - |
| Ipomoea purpurea var. diversifolia | - |
| Ipomoea ssp. | Windearten |
| Lolium perenne | deutsches Weidelgras |
| Panicum miliaceum | Rispenhirse |
| Phalaris spec. | - |
| Richardia brasiliensis | - |
| Setaria faberi | Faber's Borstenhirse |
| Setaria viridis | grüne Borstenhirse |
| Sorghum bicolor | Sorghumhirse |
| Sorghum halepense | Bartgras |
| Stellaria media | Vogelmiere |
| Triticum aestivum | Winterweizen |
| Veronica ssp. | Ehrenpreisarten |
| Zea mays | Mais |

Tabelle 3:

| Herbizide Wirkung von Verbindung Ia.3 und "Cycloxydim" (B1) auf Chenopodium album im Freiland (Nachauflaufbehandlung) | | | |
|---|---|---|---|
| Aufwandmenge (g/ha a.S.) | | Schädigung (%) | Colby-Wert E |
| Ia.3 | Cycloxydim | | |
| 50 | --- | 92 | --- |
| --- | 100 | 0 | --- |
| 50 | 100 | 98 | 92 |

Tabelle 4:

| Herbizide Wirkung von Verbindung Ia.3 und "Cycloxydim" (B1) auf Digitaria sanguinalis im Freiland (Nachauflaufbehandlung) | | | |
|---|---|---|---|
| Aufwandmenge (g/ha a.S.) | | Schädigung (%) | Colby-Wert E |
| Ia.3 | Cycloxydim | | |
| 50 | --- | 57 | --- |
| --- | 100 | 81 | --- |

Tabelle 4: (fortgesetzt)

| Herbizide Wirkung von Verbindung Ia.3 und "Cycloxydim" (B1) auf Digitaria sanguinalis im Freiland (Nachauflaufbehandlung) | | | |
|---|---|---|---|
| Aufwandmenge (g/ha a.S.) | | Schädigung (%) | Colby-Wert E |
| Ia.3 | Cycloxydim | | |
| 50 | 100 | 98 | 92 |

Tabelle 5:

| Herbizide Wirkung von Verbindung Ia.3 und "Sethoxydim" (B1) auf Abutilon theophrasti im Freiland (Nachauflaufbehandlung) | | | |
|---|---|---|---|
| Aufwandmenge (g/ha a.S.) | | Schädigung (%) | Colby-Wert E |
| Ia.3 | Sethoxydim | | |
| 50 | --- | 85 | --- |
| --- | 160 | 0 | --- |
| 50 | 160 | 94 | 85 |

Tabelle 6:

| Herbizide Wirkung von Verbindung Ia.3 und "Sethoxydim" (B1) auf Setaria viridis im Freiland (Nachauflaufbehandlung) | | | |
|---|---|---|---|
| Aufwandmenge (g/ha a.S.) | | Schädigung (%) | Colby-Wert E |
| Ia.3 | Sethoxydim | | |
| 100 | --- | 75 | --- |
| --- | 160 | 93 | --- |
| 100 | 160 | 99 | 98 |

Tabelle 7:

| Herbizide Wirkung von Verbindung Ia.3 und "Clodinafop-propargyl + Cloquintocet" (B1) auf Alopecurus myocuroides im Freiland (Nachauflaufbehandlung) | | | |
|---|---|---|---|
| Aufwandmenge (g/ha a.S.) | | Schädigung (%) | Colby-Wert E |
| Ia.3 | Clodinafop-propargyl + Cloquintocet | | |
| 7.5 | --- | 10 | --- |
| --- | 40 | 63 | --- |
| 75 | 40 | 94 | 67 |

Tabelle 8:

| Herbizide Wirkung von Verbindung Ia.3 und "Fenoxaprop-ethyl" (B1) auf Alopecurus myosuroides im Freiland (Nachauflaufbehandlung) | | | |
|---|---|---|---|
| Aufwandmenge (g/ha a.S.) | | Schädigung (%) | Colby-Wert E |
| Ia.3 | Fenoxaprop-ethyl | | |
| 75 | --- | 10 | --- |

Tabelle 8: (fortgesetzt)

| Herbizide Wirkung von Verbindung Ia.3 und "Fenoxaprop-ethyl" (B1) auf Alopecurus myosuroides im Freiland (Nachauflaufbehandlung) | | | |
|---|---|---|---|
| Aufwandmenge (g/ha a.S.) | | Schädigung (%) | Colby-Wert E |
| Ia.3 | Fenoxaprop-ethyl | | |
| --- | 83 | 82 | --- |
| 75 | 83 | 94 | 84 |

Tabelle 9:

| Herbizide Wirkung von Verbindung Ia.3 und "Fenoxaprop-ethyl" (B1) auf Galium aparine im Freiland (Nachauflaufbehandlung) | | | |
|---|---|---|---|
| Aufwandmenge (g/ha a.S.) | | Schädigung (%) | Colby-Wert E |
| Ia.3 | Fenoxaprop-ethyl | | |
| 75 | --- | 63 | --- |
| --- | 83 | 0 | --- |
| 75 | 83 | 75 | 63 |

Tabelle 10:

| Herbizide Wirkung von Verbindung Ia.3 und "Fenoxaprop-P-ethyl" (B1) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.3 | Fenoxaprop-ethyl | | |
| 15.6 | --- | 80 | --- |
| --- | 31.2 | 0 | --- |
| 15.6 | 31.2 | 95 | 80 |

Tabelle 11:

| Herbizide Wirkung von Verbindung Ia.33 und "Imazapyr" (B2) auf Alopecurus myocuroides im Gewächshaus (Nachauflaufbehandlung) | | | |
|---|---|---|---|
| Aufwandmenge (g/ha a.S.) | | Schädigung (%) | Colby-Wert E |
| Ia.33 | Imazapyr | | |
| 15.6 | --- | 40 | --- |
| --- | 250 | 90 | --- |
| 15.6 | 250 | 95 | 94 |

Tabelle 12:

| Herbizide Wirkung von Verbindung Ia.33 und "Imazapyr" (B2) auf Ipomoea ssp. im Gewächshaus (Nachauflaufbehandlung) | | | |
|---|---|---|---|
| Aufwandmenge (g/ha a.S.) | | Schädigung (%) | Colby-Wert E |
| Ia.33 | Imazapyr | | |
| 3.9 | --- | 50 | --- |

Tabelle 12: (fortgesetzt)

| Herbizide Wirkung von Verbindung Ia.33 und "Imazapyr" (B2) auf Ipomoea ssp. im Gewächshaus (Nachauflaufbehandlung) | | | |
|---|---|---|---|
| Aufwandmenge (g/ha a.S.) | | Schädigung (%) | Colby-Wert E |
| Ia.33 | Imazapyr | | |
| --- | 62.5 | 85 | --- |
| 3.9 | 62.5 | 95 | 93 |

Tabelle 13:

| Herbizide Wirkung von Verbindung Ia.3 und "Imazaquin" (B2) auf Bidens pilosa im Freiland (Nachauflaufbehandlung) | | | |
|---|---|---|---|
| Aufwandmenge (g/ha a.S.) | | Schädigung (%) | Colby-Wert E |
| Ia.3 | Imazaquin | | |
| 75 | --- | 30 | --- |
| --- | 150 | 45 | --- |
| 75 | 150 | 95 | 62 |

Tabelle 14:

| Herbizide Wirkung von Verbindung Ia.3 und "Imazamethabenz" (B2) auf Stellaria media im Freiland (Nachauflaufbehandlung) | | | |
|---|---|---|---|
| Aufwandmenge (g/ha a.S.) | | Schädigung (%) | Colby-Wert E |
| Ia.3 | Imazamethabenz | | |
| 75 | --- | 91 | --- |
| --- | 525 | 0 | --- |
| 75 | 525 | 99 | 91 |

Tabelle 15:

| Herbizide Wirkung von Verbindung Ia.3 und "Imazethapyr" (B2) auf Ipomoea acuminata im Freiland (Nachauflaufbehandlung) | | | |
|---|---|---|---|
| Aufwandmenge (g/ha a.S.) | | Schädigung (%) | Colby-Wert E |
| Ia.3 | Imazethapyr | | |
| 75 | --- | 25 | --- |
| --- | 70 | 33 | --- |
| 75 | 70 | 95 | 50 |

Tabelle 16:

| Herbizide Wirkung von Verbindung Ia.3 und "Imazethapyr" (B2) auf Ipomoea purpurea var. diversifolia im Freiland (Nachauflaufbehandlung) | | | |
|---|---|---|---|
| Aufwandmenge (g/ha a.S.) | | Schädigung (%) | Colby-Wert E |
| Ia.3 | Imazethapyr | | |
| 75 | --- | 93 | --- |

Tabelle 16: (fortgesetzt)

| Herbizide Wirkung von Verbindung Ia.3 und "Imazethapyr" (B2) auf Ipomoea purpurea var. diversifolia im Freiland (Nachauflaufbehandlung) | | | |
|---|---|---|---|
| Aufwandmenge (g/ha a.S.) | | Schädigung (%) | Colby-Wert E |
| Ia.3 | Imazethapyr | | |
| --- | 70 | 58 | --- |
| 75 | 70 | 99 | 97 |

Tabelle 17:

| Herbizide Wirkung von Verbindung Ia.33 und "Pyrithiobac-sodium" (B2) auf Echinocloa crus-galli im Gewächshaus (Nachauflaufbehandlung) | | | |
|---|---|---|---|
| Aufwandmenge (g/ha a.S.) | | Schädigung (%) | Colby-Wert E |
| Ia.33 | Pyrithiobac-sodium | | |
| 1.9 | --- | 55 | --- |
| --- | 7.8 | 10 | --- |
| 1.9 | 7.8 | 75 | 59 |

Tabelle 18:

| Herbizide Wirkung von Verbindung Ia.33 und "Metosulam" (B2) auf Veronica ssp. im Gewächshaus (Nachauflaufbehandlung) | | | |
|---|---|---|---|
| Aufwandmenge (g/ha a.S.) | | Schädigung (%) | Colby-Wert E |
| Ia.33 | Metosulam | | |
| 62.5 | --- | 20 | --- |
| --- | 1.9 | 40 | --- |
| 62.5 | 1.9 | 75 | 52 |

Tabelle 19:

| Herbizide Wirkung von Verbindung Ia.33 und "Halosulfuron-methyl" (B2) auf Alopecurus myocuroides im Gewächshaus (Nachauflaufbehandlung) | | | |
|---|---|---|---|
| Aufwandmenge (g/ha a.S.) | | Schädigung (%) | Colby-Wert E |
| Ia.33 | Halosulfuron-methyl | | |
| 62.5 | --- | 40 | --- |
| --- | 31.2 | 45 | --- |
| 62.5 | 31.2 | 85 | 67 |

Tabelle 20:

| Herbizide Wirkung von Verbindung Ia.33 und "Halosulfuron-methyl" (B2) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.33 | Halosulfuron-methyl | | |
| 7.8 | --- | 70 | --- |

Tabelle 20: (fortgesetzt)

| Herbizide Wirkung von Verbindung Ia.33 und "Halosulfuron-methyl" (B2) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.33 | Halosulfuron-methyl | | |
| --- | 7.8 | 80 | --- |
| 7.8 | 7.8 | 98 | 94 |

Tabelle 21:

| Herbizide Wirkung von Verbindung Ia.33 und "Nicosulfuron" (B2) auf Ipomoea lacunosa im Freiland (Nachauflaufbehandlung) | | | |
|---|---|---|---|
| Aufwandmenge (g/ha a.S.) | | Schädigung (%) | Colby-Wert E |
| Ia.33 | Nicosulfuron | | |
| 75 | --- | 69 | --- |
| --- | 35 | 39 | --- |
| 75 | 35 | 90 | 81 |

Tabelle 22:

| Herbizide Wirkung von Verbindung Ia.50 und "Nicosulfuron" (B2) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.50 | Nicosulfuron | | |
| 3.9 | --- | 10 | --- |
| --- | 1.9 | 65 | --- |
| 3.9 | 1.9 | 80 | 69 |

Tabelle 23:

| Herbizide Wirkung von Verbindung Ia.33 und "N-[[[4-Methoxy-6-(trifluoromethyl)-1,3,5-triazin-2-yl]amino]carbonyl]-2-(trifluoromethyl) -benzenesulfonamide" (B2) auf Setaria faberi im Freiland (Nachauflaufbehandlung) | | | |
|---|---|---|---|
| Aufwandmenge (g/ha a.S.) | | Schädigung (%) | Colby-Wert E |
| Ia.33 | N-[[[4-Methoxy-6-(trifluoromethyl)-1,3,5-triazin-2-yl]-amino]carbonyl]-2-(trifluoromethyl)-benzenesulfonamide | | |
| 75 | --- | 65 | --- |
| --- | 50 | 0 | --- |
| 75 | 50 | 73 | 65 |

Tabelle 24:

| Herbizide Wirkung von Verbindung Ia.3 und "2,4-D" (B4) auf Abutilon theophrasti im Gewächshaus (Nachauflaufbehandlung) | | | |
|---|---|---|---|
| Aufwandmenge (g/ha a.S.) | | Schädigung (%) | Colby-Wert E |
| Ia.3 | 2,4-D | | |
| 15.6 | --- | 70 | --- |
| --- | 62.5 | 40 | --- |
| 15.6 | 62.5 | 85 | 82 |

Tabelle 25:

| Herbizide Wirkung von Verbindung Ia.3 und "2,4-D" (B4) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.3 | 2,4-D | | |
| 15.6 | --- | 55 | --- |
| --- | 62.5 | 20 | --- |
| 15.6 | 62.5 | 70 | 64 |

Tabelle 26:

| Herbizide Wirkung von Verbindung Ia.3 und "2,4-D" (B4) auf Phalaris spec. im Freiland (Nachauflaufbehandlung) | | | |
|---|---|---|---|
| Aufwandmenge (g/ha a.S.) | | Schädigung (%) | Colby-Wert E |
| Ia.3 | 2,4-D | | |
| 75 | --- | 20 | --- |
| --- | 500 | 20 | --- |
| 75 | 500 | 43 | 36 |

Tabelle 27:

| Herbizide Wirkung von Verbindung Ia.3 und "Isoxaflutole" (B6) auf Ipomoea ssp. im Gewächshaus (Nachauflaufbehandlung) | | | |
|---|---|---|---|
| Aufwandmenge (g/ha a.S.) | | Schädigung (%) | Colby-Wert E |
| Ia.3 | Isoxaflutole | | |
| 31.2 | --- | 75 | --- |
| --- | 62.5 | 55 | --- |
| 31.2 | 62.5 | 90 | 89 |

Tabelle 28:

| Herbizide Wirkung von Verbindung Ia.3 und "Isoxaflutole" (B6) auf Setaria viridis im Gewächshaus (Nachauflaufbehandlung) | | | |
|---|---|---|---|
| Aufwandmenge (g/ha a.S.) | | Schädigung (%) | Colby-Wert E |
| Ia.3 | Isoxaflutole | | |
| 15.6 | --- | 80 | --- |
| --- | 31.2 | 30 | --- |
| 15.6 | 31.2 | 90 | 86 |

Tabelle 29:

| Herbizide Wirkung von Verbindung Ia.3 und "Sulcotrione" (B6) auf Ipomoea acuminata im Freiland (Nachauflaufbehandlung) | | | |
|---|---|---|---|
| Aufwandmenge (g/ha a.S.) | | Schädigung (%) | Colby-Wert E |
| Ia.3 | Sulcotrione | | |
| 75 | --- | 25 | --- |
| --- | 300 | 86 | --- |
| 75 | 300 | 98 | 90 |

Tabelle 30:

| Herbizide Wirkung von Verbindung Ia.50 und "Sulcotrione" (B6) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.50 | Sulcotrione | | |
| 31.2 | --- | 60 | --- |
| --- | 250 | 45 | --- |
| 31.2 | 250 | 80 | 78 |

Tabelle 31:

| Herbizide Wirkung von Verbindung Ia.3 und "Glyphosate" (B7) auf Geranium carolinianum im Freiland (Nachauflaufbehandlung) | | | |
|---|---|---|---|
| Aufwandmenge (g/ha a.S.) | | Schädigung (%) | Colby-Wert E |
| Ia.3 | Glyphosate | | |
| 150 | --- | 30 | --- |
| --- | 840 | 97 | --- |
| 150 | 840 | 100 | 98 |

Tabelle 32:

| Herbizide Wirkung von Verbindung Ia.33 und "Glyphosate" (B7) auf Sorghum halepense im Freiland (Nachauflaufbehandlung) | | | |
|---|---|---|---|
| Aufwandmenge (g/ha a.S.) | | Schädigung (%) | Colby-Wert E |
| Ia.33 | Glyphosate | | |
| 75 | --- | 78 | --- |
| --- | 840 | 74 | --- |
| 75 | 840 | 97 | 94 |

Tabelle 33:

| Herbizide Wirkung von Verbindung Ia.3 und "Glufosinate-ammonium" (B8) auf Digitaria adscendens im Freiland (Nachauflaufbehandlung) | | | |
|---|---|---|---|
| Aufwandmenge (g/ha a.S.) | | Schädigung (%) | Colby-Wert E |
| Ia.3 | Glufosinate-ammonium | | |
| 75 | --- | 90 | --- |
| --- | 400 | 75 | --- |
| 75 | 400 | 100 | 98 |

Tabelle 34:

| Herbizide Wirkung von Verbindung Ia.33 und "Glufosinate-ammonium" (B8) auf Echinochloa crus-galli im Gewächshaus (Nachauflaufbehandlung) | | | |
|---|---|---|---|
| Aufwandmenge (g/ha a.S.) | | Schädigung (%) | Colby-Wert E |
| Ia.33 | Glufosinate-ammonium | | |
| 15.6 | --- | 90 | --- |
| --- | 15.6 | 0 | --- |
| 15.6 | 15.6 | 98 | 90 |

Tabelle 35:

| Herbizide Wirkung von Verbindung Ia.3 und "Glufosinate-ammonium" (B8) auf Ipomoea acuminata im Freiland (Nachauflaufbehandlung) | | | |
|---|---|---|---|
| Aufwandmenge (g/ha a.S.) | | Schädigung (%) | Colby-Wert E |
| Ia.3 | Glufosinate-ammonium | | |
| 75 | --- | 25 | --- |
| --- | 400 | 75 | --- |
| 75 | 400 | 98 | 81 |

Tabelle 36:

| Herbizide Wirkung von Verbindung Ia.33 und "Glufosinate-ammonium" (B8) auf Setaria faberi im Gewächshaus (Nachauflaufbehandlung) | | | |
|---|---|---|---|
| Aufwandmenge (g/ha a.S.) | | Schädigung (%) | Colby-Wert E |
| Ia.33 | Glufosinate-ammonium | | |
| 7.8 | --- | 90 | --- |
| --- | 31.2 | 65 | --- |
| 7.8 | 31.2 | 98 | 96 |

Tabelle 37:

| Herbizide Wirkung von Verbindung Ia.3 und "Flufenacet" (B3) auf Digitaria adscendens im Freiland (Nachauflaufbehandlung) | | | |
|---|---|---|---|
| Aufwandmenge (g/ha a.S.) | | Schädigung (%) | Colby-Wert E |
| Ia.3 | Flufenacet | | |
| 75 | --- | 90 | --- |
| --- | 600 | 58 | --- |
| 75 | 600 | 100 | 96 |

Tabelle 38:

| Herbizide Wirkung von Verbindung Ia.3 und "Dimethenamid" (B9) auf Amaranthus retroflexus im Gewächshaus (Vorauflaufbehandlung) | | | |
|---|---|---|---|
| Aufwandmenge (g/ha a.S.) | | Schädigung (%) | Colby-Wert E |
| Ia.3 | Dimethenamid | | |
| 31.2 | --- | 40 | --- |
| --- | 125 | 80 | --- |
| 31.2 | 125 | 100 | 88 |

Tabelle 39:

| Herbizide Wirkung von Verbindung Ia.3 und "Dimethenamid" (B9) auf Cyperus iria im Gewächshaus (Vorauflaufbehandlung) | | | |
|---|---|---|---|
| Aufwandmenge | (g/ha a.S.) | Schädigung (%) | Colby-Wert E |
| Ia.3 | Dimethenamid | | |
| 31.2 | --- | 50 | --- |
| --- | 62.5 | 95 | --- |
| 31.2 | 62.5 | 100 | 98 |

Tabelle 40:

| Herbizide Wirkung von Verbindung Ia.3 und "Dimethenamid" (B9) auf Digitaria sanguinalis im Gewächshaus (Vorauflaufbehandlung) | | | |
|---|---|---|---|
| Aufwandmenge (g/ha a.S.) | | Schädigung (%) | Colby-Wert E |
| Ia.3 | Dimethenamid | | |
| 62.5 | --- | 60 | --- |
| --- | 125 | 80 | --- |
| 62.5 | 125 | 98 | 92 |

Tabelle 41:

| Herbizide Wirkung von Verbindung Ia.33 und "Dimethenamid" (B9) auf Panicum miliaceum im Freiland (Nachauflaufbehandlung) | | | |
|---|---|---|---|
| Aufwandmenge (g/ha a.S.) | | Schädigung (%) | Colby-Wert E |
| Ia.33 | Dimethenamid | | |
| 50 | --- | 87 | --- |
| --- | 841 | 23 | --- |
| 50 | 841 | 94 | 90 |

Tabelle 42:

| Herbizide Wirkung von Verbindung Ia.33 und "Dimethenamid" (B9) auf Sorghuum halepense im Freiland (Nachauflaufbehandlung) | | | |
|---|---|---|---|
| Aufwandmenge (g/ha a.S.) | | Schädigung (%) | Colby-Wert E |
| Ia.33 | Dimethenamid | | |
| 75 | --- | 78 | --- |
| --- | 1120 | 7 | --- |
| 75 | 1120 | 90 | 80 |

Tabelle 43:

| Herbizide Wirkung von Verbindung Ia.33 und "Dimethenamid" (B9) auf Veronica ssp. im Gewächshaus (Nachauflaufbehandlung) | | | |
|---|---|---|---|
| Aufwandmenge (g/ha a.S.) | | Schädigung (%) | Colby-Wert E |
| Ia.33 | Dimethenamid | | |
| 15.6 | --- | 60 | --- |
| --- | 500 | 70 | --- |
| 15.6 | 500 | 90 | 88 |

Tabelle 44:

| Herbizide Wirkung von Verbindung Ia.33 und "Acetochlor" (B9) auf Abutilon theophrasti im Gewächshaus (Nachauflaufbehandlung) | | | |
|---|---|---|---|
| Aufwandmenge (g/ha a.S.) | | Schädigung (%) | Colby-Wert E |
| Ia.33 | Acetochlor | | |
| 7.8 | --- | 90 | --- |
| --- | 31.2 | 0 | --- |
| 7.8 | 31.2 | 100 | 90 |

Tabelle 45:

| Herbizide Wirkung von Verbindung Ia.3 und "S-Metolachlor" (B9) auf Digitaria sanguinalis im Gewächshaus (Vorauflaufbehandlung) | | | |
|---|---|---|---|
| Aufwandmenge (g/ha a.S.) | | Schädigung (%) | Colby-Wert E |
| Ia.3 | S-Metolachlor | | |
| 62.5 | --- | 60 | --- |
| --- | 125 | 50 | --- |
| 62.5 | 125 | 85 | 80 |

Tabelle 46:

| Herbizide Wirkung von Verbindung Ia.3 und "S-Metolachlor" (B9) auf Echinochloa crus-galli im Gewächshaus (Vorauflaufbehandlung) | | | |
|---|---|---|---|
| Aufwandmenge (g/ha a.S.) | | Schädigung (%) | Colby-Wert E |
| Ia.3 | S-Metolachlor | | |
| 62.5 | --- | 60 | --- |
| --- | 62.5 | 65 | --- |
| 62.5 | 62.5 | 98 | 86 |

Tabelle 47:

| Herbizide Wirkung von Verbindung Ia.3 und "S-Metolachlor" (B9) auf Setaria viridis im Gewächshaus (Vorauflaufbehandlung) | | | |
|---|---|---|---|
| Aufwandmenge (g/ha a.S.) | | Schädigung (%) | Colby-Wert E |
| Ia.3 | S-Metolachlor | | |
| 15.6 | --- | 20 | --- |
| --- | 62.5 | 70 | --- |
| 15.6 | 62.5 | 85 | 76 |

Tabelle 48:

| Herbizide Wirkung von Verbindung Ia.33 und "S-Metolachlor" (B9) auf Ipomoea ssp. im Gewächshaus (Nachauflaufbehandlung) | | | |
|---|---|---|---|
| Aufwandmenge (g/ha a.S.) | | Schädigung (%) | Colby-Wert E |
| Ia.33 | S-Metolachlor | | |
| 62.5 | --- | 80 | --- |
| --- | 62.5 | 0 | --- |
| 62.5 | 62.5 | 90 | 80 |

Tabelle 49:

| Herbizide Wirkung von Verbindung Ia.33 und "S-Metolachlor" (B9) auf Veronica ssp. im Gewächshaus (Nachauflaufbehandlung) | | | |
|---|---|---|---|
| Aufwandmenge (g/ha a.S.) | | Schädigung (%) | Colby-Wert E |
| Ia.33 | S-Metolachlor | | |
| 62.5 | --- | 80 | --- |
| --- | 125 | 0 | --- |
| 62.5 | 125 | 98 | 80 |

Tabelle 50:

| Herbizide Wirkung von Verbindung Ia.16 und "Benthiocarb" (B9) auf Cyperus iria im Freiland (Nachauflaufbehandlung) | | | |
|---|---|---|---|
| Aufwandmenge (g/ha a.S.) | | Schädigung (%) | Colby-Wert E |
| Ia.16 | Benthiocarb | | |
| 75 | --- | 60 | --- |
| --- | 3000 | 50 | --- |
| 75 | 3000 | 92 | 80 |

Tabelle 51:

| Herbizide Wirkung von Verbindung Ia.3 und "Pendimethalin" (B10) auf Brachiaria plantaginea im Freiland (Nachauflaufbehandlung) | | | |
|---|---|---|---|
| Aufwandmenge (g/ha a.S.) | | Schädigung (%) | Colby-Wert E |
| Ia.3 | Pendimethalin | | |
| 75 | --- | 96 | --- |
| --- | 990 | 0 | --- |
| 75 | 990 | 98 | 96 |

Tabelle 52:

| Herbizide Wirkung von Verbindung Ia.3 und "Acifluorfen" (B11) auf Galium aparine im Freiland (Nachauflaufbehandlung) | | | |
|---|---|---|---|
| Aufwandmenge (g/ha a.S.) | | Schädigung (%) | Colby-Wert E |
| Ia.3 | Acifluorfen | | |
| 75 | --- | 60 | --- |
| --- | 100 | 48 | --- |
| 75 | 100 | 95 | 79 |

Tabelle 53:

| Herbizide Wirkung von Verbindung Ia.33 und "Carfentrazone-ethyl" (B11) auf Amaranthus retroflexus im Gewächshaus (Nachauflaufbehandlung) | | | |
|---|---|---|---|
| Aufwandmenge (g/ha a.S.) | | Schädigung (%) | Colby-Wert E |
| Ia.33 | Carfentrazone-ethyl | | |
| 1.9 | --- | 30 | --- |
| --- | 0.9 | 60 | --- |
| 1.9 | 0.9 | 90 | 72 |

Tabelle 54:

| Herbizide Wirkung von Verbindung Ia.3 und "Carfentrazone-ethyl" (B11) auf Anthemis mixta im Freiland (Nachauflaufbehandlung) | | | |
|---|---|---|---|
| Aufwandmenge (g/ha a.S.) | | Schädigung (%) | Colby-Wert E |
| Ia.3 | Carfentrazone-ethyl | | |
| 75 | --- | 68 | --- |
| --- | 30 | 0 | --- |
| 75 | 30 | 91 | 68 |

Tabelle 55:

| Herbizide Wirkung von Verbindung Ia.33 und "Cinidon-ethyl" (B11) auf Galium aparine im Freiland (Nachauflaufbehandlung) | | | |
|---|---|---|---|
| Aufwandmenge (g/ha a.S.) | | Schädigung (%) | Colby-Wert E |
| Ia.33 | Cinidon-ethyl | | |
| 1.9 | --- | 20 | --- |
| --- | 7.8 | 90 | --- |
| 1.9 | 7.8 | 100 | 92 |

Tabelle 56:

| Herbizide Wirkung von Verbindung Ia.3 und "Pyridate" (B12) auf Bidens pilosa im Freiland (Nachauflaufbehandlung) | | | |
|---|---|---|---|
| Aufwandmenge (g/ha a.S.) | | Schädigung (%) | Colby-Wert E |
| Ia.3 | Pyridate | | |
| 75 | --- | 25 | --- |
| --- | 450 | 25 | --- |
| 75 | 450 | 96 | 44 |

Tabelle 57:

| Herbizide Wirkung von Verbindung Ia.3 und "Pyridate" (B12) auf Setaria faberi im Freiland (Nachauflaufbehandlung) | | | |
|---|---|---|---|
| Aufwandmenge (g/ha a.S.) | | Schädigung (%) | Colby-Wert E |
| Ia.3 | Pyridate | | |
| 75 | --- | 99 | --- |
| --- | 450 | 0 | --- |
| 75 | 450 | 100 | 99 |

Tabelle 58:

| Herbizide Wirkung von Verbindung Ia.3 und "Bentazon" (B12) auf Richardia brasiliensis im Freiland (Nachauflaufbehandlung) | | | |
|---|---|---|---|
| Aufwandmenge (g/ha a.S.) | | Schädigung (%) | Colby-Wert E |
| Ia.3 | Bentazon | | |
| 75 | --- | 70 | --- |
| --- | 1440 | 77 | --- |
| 75 | 1440 | 99 | 93 |

Tabelle 59:

| Herbizide Wirkung von Verbindung Ia.3 und "Paraquat-dichlorid" (B12) auf Loleum perenne im Freiland (Nachauflaufbehandlung) | | | |
|---|---|---|---|
| Aufwandmenge (g/ha a.S.) | | Schädigung (%) | Colby-Wert E |
| Ia.3 | Paraquat-dichlorid | | |
| 75 | --- | 10 | --- |
| --- | 400 | 97 | --- |
| 75 | 400 | 100 | 97 |

Tabelle 60:

| Herbizide Wirkung von Verbindung Ia.33 und "Diuron" (B12) auf Alopecurus myocuroides im Gewächshaus (Nachauflaufbehandlung) | | | |
|---|---|---|---|
| Aufwandmenge (g/ha a.S.) | | Schädigung (%) | Colby-Wert E |
| Ia.33 | Diuron | | |
| 62.5 | --- | 40 | --- |

Tabelle 60: (fortgesetzt)

| Herbizide Wirkung von Verbindung Ia.33 und "Diuron" (B12) auf Alopecurus myocuroides im Gewächshaus (Nachauflaufbehandlung) | | | |
|---|---|---|---|
| Aufwandmenge (g/ha a.S.) | | Schädigung (%) | Colby-Wert E |
| Ia.33 | Diuron | | |
| --- | 250 | 80 | --- |
| 62.5 | 250 | 95 | 88 |

Tabelle 61:

| Herbizide Wirkung von Verbindung Ia.3 und "Isoproturon" (B12) auf Stellaria media im Freiland (Nachauflaufbehandlung) | | | |
|---|---|---|---|
| Aufwandmenge (g/ha a.S.) | | Schädigung (%) | Colby-Wert E |
| Ia.3 | Isoproturon | | |
| 75 | --- | 91 | --- |
| --- | 1000 | 94 | --- |
| 75 | 1000 | 100 | 99 |

Tabelle 62:

| Herbizide Wirkung von Verbindung Ia.3 und "Bromoxynil" (B12) auf Galium aparine im Freiland (Nachauflaufbehandlung) | | | |
|---|---|---|---|
| Aufwandmenge (g/ha a.S.) | | Schädigung (%) | Colby-Wert E |
| Ia.3 | Bromoxynil | | |
| 75 | --- | 60 | --- |
| --- | 470 | 84 | --- |
| 75 | 470 | 98 | 94 |

Tabelle 63:

| Herbizide Wirkung von Verbindung Ia.3 und "Chloridazon" (B12) auf Ipomoea purpurea var. diversifolia im Freiland (Nachauflaufbehandlung) | | | |
|---|---|---|---|
| Aufwandmenge (g/ha a.S.) | | Schädigung (%) | Colby-Wert E |
| Ia.3 | Chloridazon | | |
| 75 | --- | 94 | --- |
| --- | 1720 | 40 | --- |
| 75 | 1720 | 100 | 96 |

Tabelle 64:

| Herbizide Wirkung von Verbindung Ia.3 und "Atrazin" (B12) auf Abutilon theophrasti im Freiland (Nachauflaufbehandlung) | | | |
|---|---|---|---|
| Aufwandmenge (g/ha a.S.) | | Schädigung (%) | Colby-Wert E |
| Ia.3 | Atrazin | | |
| 75 | --- | 85 | --- |

Tabelle 64: (fortgesetzt)

| Herbizide Wirkung von Verbindung Ia.3 und "Atrazin" (B12) auf Abutilon theophrasti im Freiland (Nachauflaufbehandlung) | | | |
|---|---|---|---|
| Aufwandmenge (g/ha a.S.) | | Schädigung (%) | Colby-Wert E |
| Ia.3 | Atrazin | | |
| --- | 1120 | 32 | --- |
| 75 | 1120 | 96 | 90 |

Tabelle 65:

| Herbizide Wirkung von Verbindung Ia.3 und "Atrazin" (B12) auf Setaria faberi im Freiland (Nachauflaufbehandlung) | | | |
|---|---|---|---|
| Aufwandmenge (g/ha a.S.) | | Schädigung (%) | Colby-Wert E |
| Ia.3 | Atrazin | | |
| 75 | --- | 95 | --- |
| --- | 1120 | 20 | --- |
| 75 | 1120 | 99 | 96 |

Tabelle 66:

| Herbizide Wirkung von Verbindung Ia.33 und "Atrazin" (B12) auf Sorghum bicolor im Freiland (Nachauflaufbehandlung) | | | |
|---|---|---|---|
| Aufwandmenge (g/ha a.S.) | | Schädigung (%) | Colby-Wert E |
| Ia.33 | Atrazin | | |
| 75 | --- | 78 | --- |
| --- | 840 | 27 | --- |
| 75 | 840 | 90 | 84 |

Tabelle 67:

| Herbizide Wirkung von Verbindung Ia.3 und "Metribuzin" (B12) auf Bidens pilosa im Freiland (Nachauflaufbehandlung) | | | |
|---|---|---|---|
| Aufwandmenge (g/ha a.S.) | | Schädigung (%) | Colby-Wert E |
| Ia.3 | Metribuzin | | |
| 75 | --- | 25 | --- |
| --- | 200 | 38 | --- |
| 75 | 200 | 73 | 54 |

Tabelle 68:

| Herbizide Wirkung von Verbindung Ia.3 und "Metribuzin" (B12) auf Cyperus species im Freiland (Nachauflaufbehandlung) | | | |
|---|---|---|---|
| Aufwandmenge (g/ha a.S.) | | Schädigung (%) | Colby-Wert E |
| Ia.3 | Metribuzin | | |
| 75 | --- | 5 | --- |
| --- | 200 | 50 | --- |

Tabelle 68: (fortgesetzt)

| Herbizide Wirkung von Verbindung Ia.3 und "Metribuzin" (B12) auf Cyperus species im Freiland (Nachauflaufbehandlung) | | | |
|---|---|---|---|
| Aufwandmenge (g/ha a.S.) | | Schädigung (%) | Colby-Wert E |
| Ia.3 | Metribuzin | | |
| 75 | 200 | 75 | 53 |

Tabelle 69:

| Herbizide Wirkung von Verbindung Ia.3 und "MCPA" (B14) auf Cyperus species im Freiland (Nachauflaufbehandlung) | | | |
|---|---|---|---|
| Aufwandmenge (g/ha a.S.) | | Schädigung (%) | Colby-Wert E |
| Ia.3 | MCPA | | |
| 75 | --- | 0 | --- |
| --- | 600 | 5 | --- |
| 75 | 600 | 48 | 5 |

Tabelle 70:

| Herbizide Wirkung von Verbindung Ia.16 und "Dicamba" (B14) auf Amaranthus retroflexus im Freiland (Nachauflaufbehandlung) | | | |
|---|---|---|---|
| Aufwandmenge (g/ha a.S.) | | Schädigung (%) | Colby-Wert E |
| Ia.16 | Dicamba | | |
| 100 | --- | 96 | --- |
| --- | 280 | 25 | --- |
| 100 | 280 | 100 | 97 |

| Herbizide Wirkung von Verbindung Ia.33 und "Dicamba" (B14) auf Sorghum bicolor im Freiland (Nachauflaufbehandlung) | | | |
|---|---|---|---|
| Aufwandmenge (g/ha a.S.) | | Schädigung (%) | Colby-Wert E |
| Ia.33 | Dicamba | | |
| 75 | --- | 78 | --- |
| --- | 560 | 17 | --- |
| 75 | 560 | 89 | 81 |

Tabelle 72:

| Herbizide Wirkung von Verbindung Ia.3 und "Quinclorac" (B14) auf Ipomoea ssp. im Gewächshaus (Nachauflaufbehandlung) | | | |
|---|---|---|---|
| Aufwandmenge (g/ha a.S.) | | Schädigung (%) | Colby-Wert E |
| Ia.3 | Quinclorac | | |
| 31.2 | --- | 75 | --- |
| --- | 250 | 70 | -- |
| 31.2 | 250 | 100 | 93 |

Tabelle 73:

| Herbizide Wirkung von Verbindung Ia.3 und "Quinclorac" (B14) auf Veronica ssp. im Gewächshaus (Nachauflaufbehandlung) | | | |
|---|---|---|---|
| Aufwandmenge (g/ha a.S.) | | Schädigung (%) | Colby-Wert E |
| Ia.3 | Quinclorac | | |
| 31.2 | --- | 80 | --- |
| --- | 500 | 80 | --- |
| 31.2 | 500 | 100 | 96 |

Tabelle 74:

| Herbizide Wirkung von Verbindung Ia.3, "Nicosulfuron" (B2) und "Dicamba" (B14) auf Ipomoea acuminata im Freiland (Nachauflaufbehandlung) | | | |
|---|---|---|---|
| Aufwandmenge (g/ha a.S.) | | Schädigung (%) | Colby-Wert E |
| Ia.3 | Nicosulfuron + Dicamba | | |
| 75 | --- | 23 | --- |
| --- | 20 + 192 | 89 | --- |
| 75 | 20 + 192 | 97 | 92 |

Tabelle 75:

| Herbizide Wirkung von Verbindung Ia.3, "Diflufenzopyr" (B5) und "Dicamba" (B14) auf Echinochloa crus-galli im Freiland (Nachauflaufbehandlung) | | | |
|---|---|---|---|
| Aufwandmenge (g/ha a.S.) | | Schädigung (%) | Colby-Wert E |
| Ia.3 | Diflufenzopyr + Dicamba | | |
| 75 | --- | 98 | --- |
| --- | 56 + 140 | 5 | --- |
| 75 | 56 + 140 | 99 | 98 |

Tabelle 76:

| Herbizide Wirkung von Verbindung Ia.33, "Diflufenzo + pyr" (B5) und "Dicamba" (B14) auf Sorghum halepense im Freiland (Nachauflaufbehandlung) | | | |
|---|---|---|---|
| Aufwandmenge (g/ha a.S.) | | Schädigung (%) | Colby-Wert E |
| Ia.33 | Diflufenzopyr + Dicamba | | |
| 75 | --- | 78 | --- |
| --- | 60 + 150 | 27 | --- |
| 75 | 60 + 150 | 90 | 84 |

Tabelle 77:

| Herbizide Wirkung von Verbindung Ia.33, "Dimethenamid" (B9) und "Atrazin" (B12) auf Sorghum halepense im Freiland (Nachauflaufbehandlung) | | | |
|---|---|---|---|
| Aufwandmenge (g/ha a.S.) | | Schädigung (%) | Colby-Wert E |
| Ia.33 | Dimethenamid + Atrazin | | |
| 75 | --- | 78 | --- |
| --- | 840 + 960 | 5 | --- |
| 75 | 840 + 960 | 97 | 79 |

Tabelle 78:

| Herbizide Wirkung von Verbindung Ia.3, "Bentazon" (B12) und "Atrazin" (B12) auf Brachiaria plantaginea im Freiland (Nachauflaufbehandlung) | | | |
|---|---|---|---|
| Aufwandmenge (g/ha a.S.) | | Schädigung (%) | Colby-Wert E |
| Ia.3 | Bentazon + Atrazin | | |
| 75 | --- | 95 | --- |
| --- | 800 + 800 | 25 | --- |
| 75 | 800 + 800 | 98 | 96 |

Tabelle 79:

| Herbizide Wirkung von Verbindung Ia.33, "Atrazin" (B12) und "Dicamba" (B14) auf Ipomoea lacunosa im Freiland (Nachauflaufbehandlung) | | | |
|---|---|---|---|
| Aufwandmenge (g/ha a.S.) | | Schädigung (%) | Colby-Wert E |
| Ia.33 | Atrazin + Dicamba | | |
| 75 | --- | 69 | --- |
| --- | 920 + 480 | 83 | --- |
| 75 | 920 + 480 | 99 | 95 |

Tabelle 80:

| Herbizide Wirkung von Verbindung Ia.33, "Atrazin" (B12) und "Dicamba" (B12) auf Setaria faberi im Freiland (Nachauflaufbehandlung) | | | |
|---|---|---|---|
| Aufwandmenge (g/ha a.S.) | | Schädigung (%) | Colby-Wert E |
| Ia.33 | Atrazin + Dicamba | | |
| 75 | --- | 65 | --- |
| --- | 367 + 193 | 20 | --- |
| 75 | 367 + 193 | 89 | 72 |

Weitere Versuche zeigten, daß die erfindungsgemäßen Mischungen Kulturpflanzenselektivität zeigen (Tabelle 81).

Tabelle 81:

| Phytotoxizität von Verbindung Ia.33 und "S-Metolachlor" (B9) auf Zea mays im Gewächshaus (Nachauflaufbehandlung) | | |
|---|---|---|
| Aufwandmenge (g/ha a.S.) | | Phytotoxizität (%) |
| Ia.33 | S-Metolachlor | |
| 62.5 | --- | 0 |
| --- | 125 | 0 |
| 62.5 | 125 | 0 |

**Patentansprüche**

**1.** Synergistische herbizide Mischung, enthaltend

A) mindestens ein 3-heterocyclyl-substituiertes Benzoylderivat der Formel I

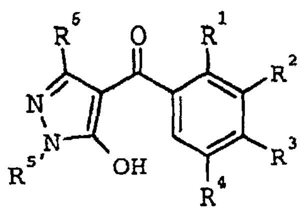

I

in der die Variablen folgende Bedeutung haben:

$R^1$, $R^3$ Wasserstoff, Halogen, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylthio, $C_1$-$C_6$-Alkylsulfinyl oder $C_1$-$C_6$-Alkylsulfonyl;

$R^2$ ein heterocyclischer Rest ausgewählt aus der Gruppe: Thiazol-2-yl, Thiazol-4-yl, Thiazol-5-yl, 4,5-Dihydroisoxazol-3-yl, 4,5-Dihydroisoxazol-4-yl und 4,5-Dihydroisoxazol-5-yl, wobei die sechs genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

$R^4$ Wasserstoff, Halogen oder $C_1$-$C_6$-Alkyl;

$R^5$ $C_1$-$C_6$-Alkyl;

$R^6$ Wasserstoff oder $C_1$-$C_6$-Alkyl;

oder eines seiner umweltverträglichen Salze; und

B) eine synergistisch wirksame Menge mindestens einer herbiziden Verbindung aus den Gruppen B1 bis B16:

B1 AcetylCoA-Carboxylase-Inhibitoren (ACC):

- Cyclohexenonoximether:
  Alloxydim, Clethodim, Cloproxydim, Cycloxydim, Sethoxydim, Tralkoxydim, Butroxydim, Clefoxydim oder Tepraloxydim;

  - Phenoxyphenoxypropionsäureester:
    Clodinafop-propargyl (und ggf. Cloquintocet), Cyhalofop-butyl, Diclofop-methyl, Fenoxaprop-ethyl, Fenoxaprop-P-ethyl, Fenthiapropethyl, Fluazifopbutyl, Fluazifop-P-butyl, Haloxyfop-ethoxyethyl, Haloxyfop-methyl, Haloxyfop-P-methyl, Isoxapyrifop, Propaquizafop, Quizalofop-ethyl, Quizalofop-P-ethyl oder Quizalofop-tefuryl; oder

- Arylaminopropionsäuren:
  Flamprop-methyl oder Flamprop-isopropyl;

B2 Acetolactatsynthase-Inhibitoren (ALS):

- Imidazolinone:
  Imazapyr, Imazaquin, Imazamethabenz-methyl (Imazame), Imazamoc, Imazapic, Imazethapyr oder Imazamethapyr;
- Pyrimidylether:
  Pyrithiobac-säure, Pyrithiobac-sodium, Bispyribac-sodium, KIH-6127 oder Pyribenzoxym;
- Sulfonamide:
  Florasulam, Flumetsulam oder Metosulam; oder
- Sulfonylharnstoffe:
  Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxysulfuron, Flazasulfuron, Halosulfuron-methyl, Imazosulfuron, Metsulfuron-methyl, Nicosulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, N-[[[4-methoxy-6-(trifluoromethyl)-1,3,5-triazin-2-yl]amino]carbonyl]-2-(trifluoromethyl)-benzenesulfonamide, Sulfosulfuron oder Idosulfuron;

B3 Amide:

- Allidochlor (CDAA), Benzoylprop-ethyl, Bromobutide, Chlorthiamid, Diphenamid, Etobenzanid (Benzchlomet), Fluthiamide, Fosamin oder Monalide;

B4 Auxin-Herbizide:

- Pyridincarbonsäuren:
  Clopyralid oder Picloram; oder
- 2,4-D oder Benazolin;

B5 Auxin-Transport-Hemmer:

- Naptalame oder Diflufenzopyr;

B6 Carotinoid-Biosynthese-Inhibitoren:

- Benzofenap, Clomazone (Dimethazone), Diflufenican, Fluorochloridone, Fluridone, Pyrazolynate, Pyrazoxyfen, Isoxaflutole, Isoxachlortole, Mesotrione, Sulcotrione (Chlormesulone), Ketospiradox, Flurtamone, Norflurazon oder Amitrol;

B7 Enolpyruvyl-Shikimat-3-Phosphat-Synthase-Inhibitoren (ESPS):

- Glyphosate oder Sulfosate;

B8 Glutamin-Synthetase-Inhibitoren:

- Bilanafos (Bialaphos) oder Glufosinate-ammonium;

B9 Lipidbiosynthese-Inhibitoren:

- Anilide:
  Anilofos oder Mefenacet;
- Chloracetanilide:
  Dimethenamid, S-Dimethenamid, Acetochlor, Alachlor, Butachlor, Butenachlor, Diethatyl-ethyl, Dimethachlor, Metazachlor, Metolachlor, S-Metolachlor, Pretilachlor, Propachlor, Prynachlor, Terbuchlor,

Thenylchlor oder Xylachlor;
- Thioharnstoffe:
  Butylate, Cycloate, Di-allate, Dimepiperate, EPTC, Esprocarb, Molinate, Pebulate, Prosulfocarb, Thiobencarb (Benthiocarb), Tri-allate oder Vernolate; oder
- Benfuresate oder Perfluidone;

B10 Mitose-Inhibitoren:

- Carbamate:
  Asulam, Carbetamid, Chlorpropham, Orbencarb, Pronamid (Propyzamid), Propham oder Tiocarbazil;
- Dinitroaniline:
  Benefin, Butralin, Dinitramin, Ethalfluralin, Fluchloralin, Oryzalin, Pendimethalin, Prodiamine oder Trifluralin;
- Pyridine:
  Dithiopyr oder Thiazopyr; oder
- Butamifos, Chlorthal-dimethyl (DCPA) oder Maleic hydrazide;

B11 Protoporphyrinogen-IX-oxidase-Inhibitoren:

- Diphenylether:
  Acifluorfen, Acifluorfen-sodium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;
- Oxadiazole:
  Oxadiargyl oder Oxadiazon;
- cyclische Imide:
  Azafenidin, Butafenacil, Carfentrazone-ethyl, Cinidon-ethyl, Flumiclorac-pentyl, Flumioxazin, Flumipropyn, Flupropacil, Fluthiacet-methyl, Sulfentrazone oder Thidiazimin; oder
- Pyrazole:
  ET-751, JV 485 oder Nipyraclofen;

B12 Photosynthese-Inhibitoren:

- Propanil, Pyridate oder Pyridafol;
- Benzothiadiazinone:
  Bentazon;
- Dinitrophenole:
  Bromofenoxim, Dinoseb, Dinoseb-acetat, Dinoterb oder DNOC;
- Dipyridylene:
  Cyperquat-chlorid, Difenzoguat-methylsulfat, Diquat oder Paraquat-dichlorid;
- Harnstoffe:
  Chlorbromuron, Chlorotoluron, Difenoxuron, Dimefuron, Diuron, Ethidimuron, Fenuron, Fluometuron, Isoproturon, Isouron, Linuron, Methabenzthiazuron, Methazole, Metobenzuron, Metoxuron, Monolinuron, Neburon, Siduron oder Tebuthiuron;
- Phenole:
  Bromoxynil oder Ioxynil;
- Chloridazon;
- Triazine:
  Ametryn, Atrazin, Cyanazine, Desmetryn, Dimethamethryn, Hexazinon, Prometon, Prometryn, Propazin, Simazin, Simetryn, Terbumeton, Terbutryn, Terbutylazin oder Trietazin;
- Triazinone:
  Metamitron oder Metribuzin;
- Uracile:
  Bromacil, Lenacil oder Terbacil; oder
- Biscarbamate:
  Desmedipham oder Phenmedipham;

B13 Synergisten:

- Oxirane:
  Tridiphane;

B14 Wuchsstoffe:

- Aryloxyalkansäuren:
  2,4-DB, Clomeprop, Dichlorprop, Dichlorprop-P (2,4-DP-P), Fluoroxypyr, MCPA, MCPB, Mecoprop, Mecoprop-P, oder Triclopyr;
- Benzoesäuren:
  Chloramben oder Dicamba; oder
- Chinolincarbonsäuren:
  Quinclorac oder Quinmerac;

B15 Zellwandsynthese-Inhibitoren:

- Isoxaben oder Dichlobenil;

B16 Verschiedene weitere Herbizide:

- Dichlorpropionsäuren:
  Dalapon;
- Dihydrobenzofurane:
  Ethofumesate;
- Phenylessigsäuren:
  Chlorfenac (Fenac); oder
- Aziprotryn, Barban, Bensulide, Benzthiazuron, Benzofluor, Buminafos, Buthidazole, Buturon, Cafenstrole, Chlorbufam, Chlorfenprop-methyl, Chloroxuron, Cinmethylin, Cumyluron, Cycluron, Cyprazine, Cyprazole, Dibenzyluron, Dipropetryn, Dymron, Eglinazin-ethyl, Endothall, Ethiozin, Flucabazone, Fluorbentranil, Flupoxam, Isocarbamid, Isopropalin, Karbutilat, Mefluidide, Monuron, Napropamide, Napropanilide, Nitralin, Oxaciclomefone, Phenisopham, Piperophos, Procyazine, Profluralin, Pyributicarb, Secbumeton, Sulfallate (CDEC), Terbucarb, Triazofenamid, Triaziflan oder Trimeturon;

oder deren umweltverträgliche Salze.

**2.** Synergistische herbizide Mischung nach Anspruch 1, enthaltend als Komponente A) ein 3-heterocyclyl-substituiertes Benzoylderivat der Formel I, wobei $R^4$ Wasserstoff bedeutet.

**3.** Synergistische herbizide Mischung nach den Ansprüchen 1 bis 2, enthaltend als Komponente A) ein 3-heterocyclyl-substituiertes Benzoylderivat der Formel I, wobei

$R^1$, $R^3$ Halogen, $C_1$-$C_6$-Alkyl, $C_1$-$C_6$-Alkylthio, $C_1$-$C_6$-Alkylsufinyl oder $C_1$-$C_6$-Alkylsulfonyl;

bedeuten.

**4.** Synergistische herbizide Mischung nach den Ansprüchen 1 bis 3, enthaltend als Komponente A) ein 3-heterocyclyl-substituiertes Benzoylderivat der Formel I, wobei

$R^2$ 4,5-Dihydroisoxazol-3-yl, das gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein kann;

bedeutet.

**5.** Synergistische herbizide Mischung nach den Ansprüchen 1 bis 4, enthaltend als Komponente A) ein 3-heterocyclyl-substituiertes Benzoylderivat der Formel I, wobei

$R^2$ 4,5-Dihydroisoxazol-3-yl, 5-Methyl-4,5-dihydroisoxazol-3-yl, 5-Ethyl-4,5-dihydroisoxazol-3yl oder 4,5-Dimethyl-4,5-dihydroisoxazol-3-yl;

bedeutet.

**6.** Synergistische herbizide Mischung nach den Ansprüchen 1 bis 5, enthaltend als Komponente A) 4-[2-Chlor-3-(4,5-dihydroisoxazol-3-yl)-4-methylsulfonyl-benzoyl]-1-methyl-5-hydroxy-1H-pyrazol.

**7.** Synergistische herbizide Mischung nach den Ansprüchen 1 bis 5, enthaltend als Komponente A) 4-[2-Methyl-3-(4,5-dihydroisoxazol-3-yl)-4-methylsulfonyl-benzoyl]-1-methyl-5-hydroxy-1H-pyrazol.

**8.** Synergistische herbizide Mischung nach den Ansprüchen 1 bis 3, enthaltend als Komponente A) ein 3-heterocyclyl-substituiertes Benzoylderivat der Formel I, wobei

$R^2$ ein heterocyclischer Rest ausgewählt aus der Gruppe: Thiazol-2-yl, Thiazol-4-yl, Thiazol-5-yl, 4,5-Dihydroisoxazol-4-yl und 4,5-Dihydroisoxazol-5-yl, wobei die fünf genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

bedeutet.

**9.** Synergistische herbizide Mischung nach den Ansprüchen 1 bis 8, enthaltend als Komponente B) mindestens eine herbizide Verbindung aus den Gruppen B1, B2, B4 bis B12 oder B14 wie in Anspruch 1 definiert.

**10.** Synergistische herbizide Mischung nach den Ansprüchen 1 bis 9, enthaltend als Komponente B) mindestens eine herbizide Verbindung aus folgenden Gruppen:

B1 AcetylCoA-Carboxylase-Inhibitoren (ACC):

- Cyclohexenonoximether:
  Alloxydim, Clethodim, Cloproxydim, Cycloxydim, Sethoxydim, Tralkoxydim, Butroxydim, Clefoxydim oder Tepraloxydim; oder
- Phenoxyphenoxypropionsäureester:
  Clodinafop-propargyl (und ggf. Cloquintocet), Cyhalofop-butyl, Diclofop-methyl, Fenoxaprop-ethyl, Fenoxaprop-P-ethyl, Fenthiapropethyl, Fluazifop-butyl, Fluazifop-P-butyl, Haloxyfop-ethoxyethyl, Haloxyfop-methyl, Haloxyfop-P-methyl, Isoxapyrifop, Propaquizafop, Quizalofop-ethyl, Quizalofop-P-ethyl oder Quizalofop-tefuryl;

B2 Acetolactatsynthase-Inhibitoren (ALS):

- Imidazolinone:
  Imazapyr, Imazaquin, Imazamethabenz-methyl (Imazame), Imazamoc, Imazapic, Imazethapyr oder Imazamethapyr;
- Pyrimidylether:
  Pyrithiobac-säure, Pyrithiobac-sodium, Bispyribac-sodium, KIH-6127 oder Pyribenzoxym;
- Sulfonamide:
  Florasulam, Flumetsulam oder Metosulam; oder
- Sulfonylharnstoffe:
  Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxysulfuron, Flazasulfuron, Halosulfuron-methyl, Imazosulfuron, Metsulfuron-methyl, Nicosulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, N-[[[4-methoxy-6-(trifluoromethyl)-1,3,5-triazin-2-yl]amino]carbonyl]-2-(trifluoromethyl)-benzenesulfonamide, Sulfosulfuron oder Idosulfuron;

B4 Auxin-Herbizide:

- Pyridincarbonsäuren:
  Clopyralid oder Picloram; oder
- 2,4-D;

B5 Auxin-Transport-Hemmer:

- Naptalame oder Diflufenzopyr;

B6 Carotinoid-Biosynthese-Inhibitoren:

- Benzofenap, Clomazone (Dimethazone), Diflufenican, Fluorochloridone, Fluridone, Pyrazolynate, Pyrazoxyfen, Isoxaflutole, Isoxachlortole, Mesotrione, Sulcotrione (Chlormesulone), Ketospiradox, Flurtamone, Norflurazon oder Amitrol;

B7 Enolpyruvyl-Shikimat-3-Phosphat-Synthase-Inhibitoren (ESPS):

- Glyphosate oder Sulfosate;

B8 Glutamin-Synthetase-Inhibitoren:

- Bilanafos (Bialaphos) oder Glufosinate-ammonium;

B9 Lipidbiosynthese-Inhibitoren:

- Chloracetanilide:
  Dimethenamid, S-Dimethenamid, Acetochlor, Alachlor, Butachlor, Butenachlor, Diethatyl-ethyl, Dimethachlor, Metazachlor, Metolachlor, S-Metolachlor, Pretilachlor, Propachlor, Prynachlor, Terbuchlor, Thenylchlor oder Xylachlor; oder
- Thioharnstoffe:
  Butylate, Cycloate, Di-allate, Dimepiperate, EPTC, Esprocarb, Molinate, Pebulate, Prosulfocarb, Thiobencarb (Benthiocarb), Tri-allate oder Vernolate;

B10 Mitose-Inhibitoren:

- Dinitroaniline:
  Benefin, Butralin, Dinitramin, Ethalfluralin, Fluchloralin, Oryzalin, Pendimethalin, Prodiamine oder Trifluralin;

B11 Protoporphyrinogen-IX-oxidase-Inhibitoren:

- Diphenylether:
  Acifluorfen, Acifluorfen-sodium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;
- Oxadiazole:
  Oxadiargyl oder Oxadiazon;
- cyclische Imide:
  Azafenidin, Butafenacil, Carfentrazone-ethyl, Cinidon-ethyl, Flumiclorac-pentyl, Flumioxazin, Flumipropyn, Flupropacil, Fluthiacet-methyl, Sulfentrazone oder Thidiazimin; oder
- Pyrazole:
  ET-751, JV 485 oder Nipyraclofen;

B12 Photosynthese-Inhibitoren:

- Pyridate oder Pyridafol;
- Benzothiadiazinone:
  Bentazon;
- Dipyridylene:
  Cyperquat-chlorid, Difenzoquat-methylsulfat, Diquat oder Paraquat-dichlorid;
- Harnstoffe:
  Chlorbromuron, Chlorotoluron, Difenoxuron, Dimefuron, Diuron, Ethidimuron, Fenuron, Fluometuron, Isoproturon, Isouron, Linuron, Methabenzthiazuron, Methazole, Metobenzuron, Metoxuron, Monolinuron, Neburon, Siduron oder Tebuthiuron;

- Phenole:
  Bromoxynil oder Ioxynil;
- Chloridazon;
- Triazine:
  Ametryn, Atrazin, Cyanazine, Desmetryn, Dimethamethryn, Hexazinon, Prometon, Prometryn, Propazin, Simazin, Simetryn, Terbumeton, Terbutryn, Terbutylazin oder Trietazin; oder
- Triazinone:
  Metamitron oder Metribuzin;

B14 Wuchsstoffe:

- Aryloxyalkansäuren:
  2,4-DB, Clomeprop, Dichlorprop, Dichlorprop-P (2,4-DP-P), Fluoroxypyr, MCPA, MCPB, Mecoprop, Mecoprop-P, oder Triclopyr;
- Benzoesäuren:
  Chloramben oder Dicamba; oder
- Chinolincarbonsäuren:
  Quinclorac oder Quinmerac;

**11.** Synergistische herbizide Mischung nach den Ansprüchen 1 bis 10, enthaltend als Komponente B) mindestens eine herbizide Verbindung aus folgenden Gruppen:

Cycloxydim, Sethoxydim, Clodinafop (und ggf. Cloquintocet), Fenoxaprop-ethyl, Fenoxaprop-P-ethyl, Imazopyr, Imazaquin, Imazamethabenz, Imazethapyr, Pyrithiobac-sodium, Metosulam, Halosulfuron-methyl, Nicosulfuron, N-[[[4-Methoxy-6-(trifluoromethyl)-1,3,5-triazin-2-yl]amino]carbonyl]-2-(trifluoromethyl)-benzenesulfonamide, Flufenacet, 2,4-D, Diflufenzopyr, Isoxaflutole, Sulcotrione, Glyphosate, Glufosinate-ammonium, Dimethenamid, S-Metolachlor, Benthiocarb, Pendimethalin, Acifluorfen, Carfentrazone-ethyl, Cinidon-ethyl, Pyridate, Bentazon, Paraquat-dichlorid, Diuron, Isoproturon, Bromoxynil, Chloridazon, Atrazin, Metribuzin, MCPA, Dicamba und Quinclorac.

**12.** Synergistische herbizide Mischung nach den Ansprüchen 1 bis 11, enthaltend als Komponente B) mindestens eine herbizide Verbindung aus der Gruppe:

Clodinafop (und ggf. Cloquintocet), Diflufenzopyr, Imazethapyr, Flumetsulam, Pyrithiobac-sodium, Nicosulfuron, N-[[[4-Methoxy-6-(trifluoromethyl)-1,3,5-triazin-2-yl]amino]-carbonyl]-2-(trifluoromethyl)-benzenesulfonamide, Clopyralid, 2,4-D, Isoxaflutole, Glyphosate, Glufosinate-ammonium, Dimethenamid, S-Dimethenamid, Acetochlor, Metolachlor, S-Metolachlor, Pendimethalin, Carfentrazone-ethyl, Pyridate, Bentazon, Diuron, Bromoxynil, Atrazin, Terbutylazin, Metribuzin und Dicamba.

**13.** Synergistische herbizide Mischung nach den Ansprüchen 1 bis 3, 9 bis 12, enthaltend als Komponente A) ein 3-heterocyclyl-substituiertes Benzoylderivat der Formel I, wobei

$R^2$ ein heterocyclischer Rest aus der Gruppe: 4,5-Dihydroisoxazol-3-yl, 4,5-Dihydroisoxazol-4-yl und 4,5-Dihydroisoxazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

bedeutet.

**14.** Synergistische herbizide Mischung nach den Ansprüchen 1 bis 3, 9 bis 12, enthaltend als Komponente A) ein 3-heterocyclyl-substituiertes Benzoylderivat der Formel I, wobei

$R^2$ ein heterocyclischer Rest aus der Gruppe: Thiazol-2-yl, Thiazol-4-yl und Thiazol-5-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;

bedeutet.

**15.** Synergistische herbizide Mischung nach den Ansprüchen 13 bis 14, enthaltend als Komponente B) mindestens eine herbizide Verbindung aus den Gruppen B1, B2, B4 bis B11 oder B14 wie in Anspruch 1 definiert.

**16.** Synergistische herbizide Mischung nach den Ansprüchen 13 oder 14, enthaltend als Komponente B) mindestens eine herbizide Verbindung aus den Gruppen B12 wie in Anspruch 1 definiert.

**17.** Synergistische herbizide Mischung nach den Ansprüchen 13 bis 14, enthaltend als Komponente B) mindestens eine herbizide Verbindung aus der folgenden Gruppe:

Propanil, Pyridate, Pyridafol, Dinitrophenole, Dipyridylene, Triazinone, Uracile oder Biscarbamate.

**18.** Synergistische herbizide Mischung nach den Ansprüchen 1 bis 17 enthaltend als Komponente A) ein 3-heterocyclyl-substituiertes Benzoylderivat der Formel I und als Komponente B eine herbizide Verbindung wie in den Ansprüchen 1 bis 17 definiert.

**19.** Synergistische herbizide Mischung nach den Ansprüchen 1 bis 17 enthaltend als Komponente A) ein 3-heterocyclyl-substituiertes Benzoylderivat der Formel I und als Komponente B zwei herbizide Verbindungen wie in den Ansprüchen 1 bis 17 definiert.

**20.** Synergistische herbizide Mischung nach den Ansprüchen 1 bis 10 enthaltend ein 3-heterocyclyl-substituiertes Benzoylderivat der Formel I und als Komponente B eine herbizide Verbindungen wie in den Ansprüchen 1 bis 10 definiert und eine herbizide Verbindung aus den Gruppen B12 und B14.

**21.** Synergistische herbizide Mischung nach den Ansprüchen 1 bis 20, **dadurch gekennzeichnet, daß** die Komponente A) und die Komponente B) in einem Gewichtsverhältnis von 1:0,002 bis 1:800 vorliegen.

**22.** Synergistische herbizide Mischung nach Anspruch 21, **dadurch gekennzeichnet, daß** die Komponente A) und die Komponente B) in einem Gewichtsverhältnis von 1:0,003 bis 1:160 vorliegen.

**23.** Herbizides Mittel, enthaltend eine herbizid wirksame Menge einer synergistischen herbiziden Mischung gemäß den Ansprüchen 1 bis 20, mindestens einen inerten flüssigen und/oder festen Trägerstoff und gewünschtenfalls mindestens einen grenzflächenaktiven Stoff.

**24.** Herbizide Mittel nach Anspruch 23, **dadurch gekennzeichnet, daß** die Komponente A) und die Komponente B) in einem Gewichtsverhältnis von 1:0,002 bis 1:800 vorliegen.

**25.** Herbizides Mittel nach Anspruch 24, **dadurch gekennzeichnet, daß** die Komponente A) und die Komponente B) in einem Gewichtsverhältnis von 1:0,003 bis 1:160 vorliegen.

**26.** Verfahren zur Herstellung von herbiziden Mitteln nach Anspruch 23, **dadurch gekennzeichnet, daß** man Komponente A, Komponente B, mindestens einen inerten flüssigen und/oder festen Trägerstoff und gewünschtenfalls einen grenzflächenaktiven Stoff mischt.

**27.** Verfahren zur Bekämpfung unerwünschten Pflanzenwuchses, **dadurch gekennzeichnet, daß** man eine synergistische herbizide Mischung gemäß den Ansprüchen 1 bis 20 vor, während und/oder nach dem Auflaufen von unerwünschten Pflanzen ausbringt, wobei die herbizid wirksamen Verbindungen der Komponenten A) und B) gleichzeitig oder nacheinander appliziert werden können.

**28.** Verfahren zur Bekämpfung unerwünschten Pflanzenwuchses gemäß Anspruch 27, **dadurch gekennzeichnet, daß** man die Blätter der Kulturpflanzen und der unerwünschten Pflanzen behandelt.

## Revendications

**1.** Mélange herbicide synergique, contenant

A) au moins un dérivé de benzoyle 3-hétérocyclyl-substitué de formule I

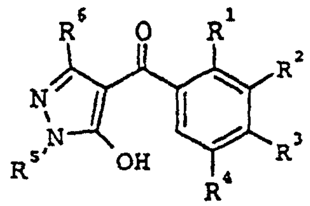

I

dans laquelle les variables ont la signification suivante:

$R^1$, $R^3$ hydrogène, halogéno, alkyle en $C_1$-$C_6$, halogénoalkyle en $C_1$-$C_6$, alcoxy en $C_1$-$C_6$, halogénoalcoxy en $C_1$-$C_6$, alkylthio en $C_1$-$C_6$, alkylsulfinyle en $C_1$-$C_6$ ou alkylsulfonyle en $C_1$-$C_6$;

$R^2$ un reste hétérocyclique choisi dans le groupe: thiazole-2-yle, thiazole-4-yle, thiazole-5-yle, 4,5-dihdyroisoxazole-3-yle, 4,5-dihdyroisoxazole-4-yle et 4,5-dihdyroisoxazole-5-yle, tandis que les six restes susdits peuvent être éventuellement substitués une ou plusieurs fois par des groupes halogène, alkyle en $C_1$-$C_4$, alcoxy en $C_1$-$C_4$, halogénoalkyle en $C_1$-$C_4$, halogénoalcoxy en $C_1$-$C_4$ ou alkylthio $C_1$-$C_4$;

$R^4$ hydrogène, halogéno ou alkyle en $C_1$-$C_6$;

$R^5$ alkyle en $C_1$-$C_6$;

$R^6$ hydrogène ou alkyle en $C_1$-$C_6$;

ou un de ses sels acceptables pour l'environnement;
et

B) une quantité à efficacité synergique d'un composé herbicide choisi dans les groupes B1 à B16:

B1 inhibiteurs d'acétylCoA-carboxylase (ACC):

- éthers de cyclohexèneoxime:
  alloxydime, clethodime, cloproxydime, cycloxydime, séthoxydime, tralkoxydime, butroxydime, clefoxydime ou tépraloxydime;
- esters d'acide phénoxyphénoxypropionique:
  clodinafop-propargyle (et éventuellement cloquintocet), cythalofop-butyle, diclofop-méthyle, fénoxaprop-éthyle, fénoxaprop-P-éthyl, fenthiapropéthyle, fluazifop-butyle, fluazifop-P-butyle, haloxyfop-éthoxyéthyle, haloxyfop-méthyle, haloxyfop-P-méthyle, isoxapyrifop, propaquizafop, quizalofop-éthyle, quizalofop-P-éthyle ou quizalofop-téfuryle; ou
- acides arylaminopropioniques:
  flamprop-méthyle ou flamprop-isopropyle;

B2 inhibiteurs d'acétolactate-synthase (ALS):

- imidazolinones
  imazapyr, imazaquine, imazaméthabenz-méthyle (imazame), imazamoc, imazapic, imazethapyr ou imazaméthapyr;
- éthers de pyrimidyle:
  acide pyrithiobac, pyrithiobac de sodium, bispyribac-sodium, KIH-6127 ou pyribenzoxyme;
- sulfonamides:
  florasulam, flumetsulam ou métosulam; ou
- sulfonylurées:
  amidosulfuron, azimsulfuron, bensulfuron-méthyle, chlorimuron-éthyle, chlorsulfuron, cinosulfuron, cyclosulfamuron, éthanesulfuron-méthyle, éthoxysulfuron, flazasulfuron, halosulfuron-méthyle, imazo-sulfuron, métsulfuron-méthyle, nicosulfuron, primisulfuron-méthyle, prosulfuron, pyrazosulfuron-éthyle, rimsulfuron, sulfométuron-méthyle, thifénsulfuron-méthyle/ triasulfuron, tribéuron-méthyle, trifluosulfuron-méthyle, N-[[[4-méthoxy-6-(trifluoro-méthyl)-1,3,5-triazine-2-yl]amino]carbonyl]-2-(trifluoro-méthyl)-benzènesulfonamide, sulfosulfuron ou idosulfuron;

B3 amides:

- allidochlor (CDAA), benzoylprop-éthyle, bromobutide, chlorthiamide, diphénamide, étobenzanide (benzchlomet), fluthiamide, fosamine ou monalide;

B4 herbicides auxine:

- acides pyridinecarboxyliques:
  clopyralide ou picloram; ou
- 2,4-D ou benazoline;

B5 inhibiteur de transport d'auxine:

- naptalames ou diflufenzopyr;

B6 inhibiteurs de biosynthèse des caroténoïdes:

- benzofenap, clomazone (diméthazone), diflufénican, fluorochloridone, fluridone, pyrazolynate, pyrazoxyfène, isoxaflutole, isoxachlortole, mésotriome, sulcotrione (chlormésulone), cétospiradox, flurtamone, norfuzaeon ou amitrol;

B7 inihibiteurs d'énolpyruvyl-shikimate-3-phosphate-synthase (ESPS):

- glyphosates ou sulfosates;

B8 inhibiteurs de glutamine-synthétase:

- bilanafos (bialaphos) ou glufosinate-ammonium;

B9 inhibiteurs de biosynthèse des lipides:

- anilides:
  anilofos ou méfénacet;
- chloroacétanilides:
  diméthèneamide, S-diméthèneamide, acétochlor, alachlor, butachlor, buténachlor, diéthatyl-éthyle, diméthachlor, métazachlor, métolachlor, S-métolachlor, prétilachlor, propachlor, prynachlor, terbuchlor, thénylchlor ou xylachlor;
- thiourées:
  butylate, cycloate, di-allate, dimépipérate, EPTC, esprocarb, molinates, pébulates, prosulfocarb, thiobencarb (benthiocarb), tri-allates ou vemolates; ou
- benfurésates ou perfluidones;

B10 inhibiteurs de mitose:

- carbamates:
  asulam, carbétamide, chlorpropham, orbéncarb, pronamide (propyzamide), propham ou tiocarbazil;
- dinitroanilines:
  bénéfine, butraline, dinitramine, éthalfluraline, fluchloraline, oryzaline, pendiméthaline, prodiamines ou trifluraline;
- pyridines:
  dithiopyr ou thazopyr; ou
- butamifos, chlorthal-diméthyle (DCPA) ou hydrazide maléique;

B11 inhibiteurs de protoporphyrinogéne-IX-oxydase:

- diphényléthers:
  acifluorfène, acifluorfène-sodium, aclonifène, bifénox, chlornitrofène (CNP), éthoxyfène, fluorodifène, fuoroglycofène-éthyle, fomésafène, furyloxyfène, lactofène, nitrofène, nitrofluorfène ou oxyfluorfène;
- oxadiazoles:
  oxadiargyle ou oxadiazon;
- imides cycliques:
  azafénidine,butafénacil, carfentrazone-éthyle, cinidon-éthyle, flumiclorac-pentyle, flumioxazaine, flumipropyne, flupropacil, fluthiacet-méthyle, sulfentrazone ou thidiazimine; ou
- pyrazoles:
  ET-751, JV 485 ou nipyraclofène;

B12 inhibiteurs de photosynthèse:

- propanil, pyridates ou pyridafol;
- benzothiadiazinones:
  bentazon;
- dinitrophénols:
  bromofénoxime, dinoseb, dinoseb-acétate, dinoterb ou DNOC;
- dipyridylènes:
  cyperquat-chlorure, difenzoquat-méthylsulfate, diquat ou paraquat-dichlorure;
- urées:
  chlorbromuron, chlortoluron, difénoxuron, diméfuron, diuron, éthidimuron, fénuron, fuométuron, isoproturon, isouron, linuron, méthabenzthiazuron, méthazoles, métobenzuron, métoxuron, monolinuron, néburon, siduron ou tébuthiuron;
- phénols:
  bromoxynil ou ioxynil;
- chloridazon;
- triazines:
  amétryne, atrazine, cyanazine, desmétryne, diméthaméthryne, hexazinone, prométone, prométryne, propazine, simazine, simétryne, terbuméton, terbutryne, terbutylazine ou triétazine;
- triazinones:
  métamitron ou métribuzine;
- uraciles:
  bromacil, lénaci ou terbacil; ou
- biscarbamates:
  desmédipham ou phénmédipham;

B13 agents synergiques:

- oxirannes:
  tridiphane;

B14 substances de croissance:

- acides paryloxyalcanoïques:
  2,4-DB, clopéprop, dichlorprop, dichlorprop-P (2,4-DPP), fluoroxypyr, MCPA, MCPB, mécoprop, mécoprop-P ou triclopyr;
- acides benzoïques:
  chloramben ou dicamba; ou
- acides quinoléinecarboxyliques:
  quinclorac ou quinmérac;

B15 inhibiteurs de synthèse des parois cellulaires:

- isoxaben ou dichlobénil;

B16 différents autres herbicides:

- acides dichloropropioniques: dalapon;
- dihydrobenzofurannes: éthofumésate;
- acides phénylacétiques: chlorfénac (fénac); ou
- aziprotryne, barbane, bensulides, benzthiazurone, benzofluor, buminafos, buthidazoles, buturon, cafénstroles, chlorbufam, chlorfenprop-méthyle, chloroxuron, cinméthyline, cumyluron, cycluron, cyprazines, cyprazoles, dibenzyluron, dipropétryne, dymron, églinazine-éthyle, endothall, éthiozine, flucabazone, fluorbentranil, flupoxam, isocarbamide, isopropaline, carbutilate, méfluidide, monuron, napropamides, naproanilides, nitraine, oxacycloméfones, phénisopham, pipérophos, procyazines, profluraline, pyributicarb, secbuméton, sulfallate (CDEC), terbucarb, triazofénamide, triaziflanne ou triméturon;

ou leurs sels acceptables pour l'environnement.

**2.** Mélange herbicide synergique selon la revendication 1, contenant comme composant A) un dérivé de benzoyle 3-hétérocyclyl-substitué de formule I, où $R^4$ désigne l'hydrogène.

**3.** Mélange herbicide synergique selon les revendications 1 à 2, contenant comme composant A) un dérivé de benzoyle 3-hétérocyclyl-substitué de formule I, où

$R^1$, $R^3$ représentent un halogène ou un groupe alkyle en $C_1$-$C_6$, alkylthio en $C_1$-$C_6$, alkylsulfinyle en $C_1$-$C_6$ ou alkylsulfonyle en $C_1$-$C_6$.

**4.** Mélange herbicide synergique selon les revendications 1 à 3, contenant comme composant A) un dérivé de benzoyle 3-hétérocyclyl-substitué de formule I, où

$R^2$ désigne le 4,5-dihydroisoxazole-3-yle, qui peut éventuellement être substitué une ou plusieurs fois par un halogène ou un groupe alkyle en $C_1$-$C_4$, alcoxy en $C_1$-$C_4$, halogénoalkyle en $C_1$-$C_4$, halogénoalcoxy en $C_1$-$C_4$ ou alkylthio en $C_1$-$C_4$.

**5.** Mélange herbicide synergique selon les revendications 1 à 4, contenant comme composant A) un dérivé de benzoyle 3-hétérocyclyl-substitué de formule I, où

$R^2$ désigne le 4,5-dihydroisoxazole-3-yle, le 5-méthyl-4,5-dihydroisoxazole-3-yle, le 5-éthyl-4,5-dihydroisoxazole-3-yle ou le 4,5-diméthyl-4,5-dihydroisoxazole-3-yle.

**6.** Mélange herbicide synergique selon les revendications 1 à 5, contenant comme composant A) le 4-[2-chloro-3-(4,5-dihydroisoxazole-3-yl)-4-méthylsulfonyl-benzoyl]-1-méthyl-5-hydroxy-1H-pyrazole.

**7.** Mélange herbicide synergique selon les revendications 1 à 5, contenant comme composant A) le 4-[2-méthyl-3-(4,5-dihydroisoxazole-3-yl)-4-méthylsulfonyl-benzoyl]-1-méthyl-5-hydroxy-1H-pyrazole.

**8.** Mélange herbicide synergique selon les revendications 1 à 3, contenant comme composant A) un dérivé de benzoyle 3-hétérocyclyl-substitué de formule I, où

$R^2$ désigne un reste hétérocyclique choisi dans le groupe: thiazole-2-yle, thiazole-4-yle, thiazole-5-yle, 4,5-dihydroisoxazole-4-yle et 4,5-dihydroisoxazole-5-yle, tandis que les cinq restes mentionnés peuvent être éventuellement substitués une ou plusieurs fois par un halogène ou un groupe alkyle en $C_1$-$C_4$, alcoxy en $C_1$-$C_4$, halogénoalkyle en $C_1$-$C_4$, halogénoalcoxy en $C_1$-$C_4$ ou alkylthio en $C_1$-$C_4$.

**9.** Mélange herbicide synergique selon les revendications 1 à 8, contenant comme composant B) au moins un composé herbicide choisi dans le groupe B1, B2, B4 à B12 ou B14, tel que défini dans la revendication 1.

**10.** Mélange herbicide synergique selon les revendications 1 à 9, contenant comme composant B) au moins un composé herbicide choisi dans les groupes suivants:

B1 inhibiteurs d'acétylCoA-carboxylase (ACC):

- éthers de cyclohexèneoxime:
  alloxydime, clethodime, cloproxydime, cycloxydime, séthoxydime, tralkoxydime, butroxydime, clefoxydime ou tépraloxydime; ou
- esters d'acide phénoxyphénoxypropionique:
  clodinafop-propargyle (et éventuellement cloquintocet), cythalofop-butyle, diclofop-méthyle, fénoxaprop-éthyle, fénoxaprop-P-éthyl, fenthiapropéthyle, fluazifop-butyle, fluazifop-P-butyle, haloxyfop-éthoxyéthyle, haloxyfop-méthyle, haloxyfop-P-méthyle, isoxapyrifop, propaquizafop, quizalofop-éthyle, quizalofop-P-éthyle ou quizalofop-téfuryle;

B2 inhibiteurs d'acétolactate-synthase (ALS):

- imidazolinones
  imazapyr, imazaquine, imazaméthabenz-méthyle (imazame), imazamoc, imazapic, imazethapyr ou imazaméthapyr;
- éthers de pyrimidyle:
  acide pyrithiobac, pyrithiobac de sodium, bispyribac-sodium, KIH-6127 ou pyribenzoxyme;
- sulfonamides:
  florasulam, flumetsulam ou métosulam; ou
- sulfonylurées:
  amidosulfuron, azimsulfuron, bensulfuron-méthyle, chlorimuron-éthyle, chlorsulfuron, cinosulfuron, cyclosulfamuron, éthanesulfuron-méthyle, éthoxysulfuron, flazasulfuron, halosulfuron-méthyle, imazosulfuron, métsulfuron-méthyle, nicosulfuron, primisulfuron-méthyle, prosulfuron, pyrazosulfuron-éthyle, rimsulfuron, sulfométuron-méthyle, thifénsulfuron-méthyle, triasulfuron, tribéuron-méthyle, trifluosulfuron-méthyle, N-[[[4-méthoxy-6-(trifluoro-méthyl)-1,3,5-triazine-2-yl]amino]carbonyl]-2-(trifluoro-méthyl)-benzènesulfonamide, sulfosulfuron ou idosulfuron;

B4 herbicides auxine:

- acides pyridinecarboxyliques:
  clopyralide ou picloram; ou
- 2,4-D;

B5 inhibiteur de transport d'auxine:

- naptalames ou diflufenzopyr;

B6 inhibiteurs de biosynthèse des caroténoïdes:

- benzofenap, clomazone (diméthazone), diflufénican, fluorochloridone, fluridone, pyrazolynate, pyrazoxyfène, isoxaflutole, isoxachlortole, mésotriome, sulcotrione (chlormésulone), cétospiradox, flurtamone, norfuzaeon ou amitrol;

B7 inihibiteurs d'énolpyruvyl-shikimate-3-phosphate-synthase (ESPS):

- glyphosates ou sulfosates;

B8 inhibiteurs de glutamine-synthétase:

- bilanafos (bialaphos) ou glufosinate-ammonium;

B9 inhibiteurs de biosynthèse des lipides:

- chloroacétanilides:
  diméthèneamide, S-diméthèneamide, acétochlor, alachlor, butachlor, buténachlor, diéthatyl-éthyle, diméthachlor, métazachlor, métolachlor, S-métolachlor, prétilachlor, propachlor, prynachlor, terbuchlor, thénylchlor ou xylachlor; ou

- thiourées:
  butylate, cycloate, di-allate, dimépipérate, EPTC, esprocarb, molinates, pébulates, prosulfocarb, thiobencarb (benthiocarb), tri-allates ou vernolates;

B10 inhibiteurs de mitose:

- dinitroanilines:
  bénéfine, butraline, dinitramine, éthalfluraline, fluchloraline, oryzaline, pendiméthaline, prodiamines ou trifluraline;

B11 inhibiteurs de protoporphyrinogène-IX-oxydase:

- diphényléthers:
  acifluorfène, acifluorfène-sodium, aclonifène, bifénox, chlornitrofène (CNP), éthoxyfène, fluorodifène, fuoroglycofène-éthyle, fomésafène, furyloxyfène, lactofène, nitrofène, nitrofluorfène ou oxyfluorfène;
- oxadiazoles:
  oxadiargyle ou oxadiazon;
- imides cycliques:
  azafénidine,butafénacil, carfentrazone-éthyle, cinidon-éthyle, flumiclorac-pentyle, flumioxazaine, flumipropyne, flupropacil, fluthiacet-méthyle, sulfentrazone ou thidiazimine; ou
- pyrazoles:
  ET-751, JV 485 ou nipyraclofène;

B12 inhibiteurs de photosynthèse:

- propanil, pyridates ou pyridafol;
- benzothiadiazinones:
  bentazon;
- dipyridylènes:
  cyperquat-chlorure, difenzoquat-méthylsulfate, diquat ou paraquat-dichlorure;
- urées:
  chlorbromuron, chlortoluron, difénoxuron, diméfuron, diuron, éthidimuron, fénuron, fuométuron, isoproturon, isouron, linuron, méthabenzthiazuron, méthazoles, métobenzuron, métoxuron, monolinuron, néburon, siduron ou tébuthiuron;
- phénols:
  bromoxynil ou ioxynil;
- chloridazon;
- triazines:
  amétryne, atrazine, cyanazine, desmétryne, diméthaméthryne, hexazinone, prométone, prométryne, propazine, simazine, simétryne, terbuméton, terbutryne, terbutylazine ou triétazine;
- triazinones:
  métamitron ou métribuzine;

B14 substances de croissance:

- acides paryloxyalcanoïques:
  2,4-DB, clopéprop, dichlorprop, dichlorprop-P (2,4-DPP), fluoroxypyr, MCPA, MCPB, mécoprop, mécoprop-P ou triclopyr;
- acides benzoïques:
  chloramben ou dicamba; ou
- acides quinoléinecarboxyliques:
  quinclorac ou quinmérac.

**11.** Mélange herbicide synergique selon les revendications 1 à 10, contenant comme composant B) au moins un composé herbicide choisi dans les groupes suivants:

cycloxydime, séthoxydime, clodinafop (et éventuellement cloquintocet), fénoxaprop-éthyle, fénoxaprop-P-éthyl, imazopyr, imazaquine, imazaméthabenz, iimazethapyr, pyrithiobac-sodium, métosulam, halosulfuron-méthyle, nicosulfuron, N-[[[4-méthoxy-6-(trifluorométhyl)-1,3,5-triazine-2-yl]amino]carbonyl]-2-(trifluorométhyl)-benzènesulfonamide, flufenacet, 2,4-D, diflufenzopyr, isoxaflutole, sulcotrione, glyphosates, glufosinate-ammonium, diméthèneamide, S-métolachlor, benthiocarb, pendiméthaline, acifluorfène, carfentrazone-éthyle, cinidon-éthyle, pyridates, bentazon, paraquat-dichlorure, diuron, isoproturon, bromoxynil, chloridazon, atrazine, métribuzine, MCPA, dicamba et quinclorac.

**12.** Mélange herbicide synergique selon les revendications 1 à 11, contenant comme composant B) au moins un composé herbicide choisi dans les groupes suivants:

clodinafop (et éventuellement cloquintocet), diflufénzopyr, imazéthapyr, flumetsulam, pyrithiobac-sodium, nicosulfuron, N-[[[4-méthoxy-6-(trifluorométhyl)-1,3,5-triazine-2-yl]amino]carbonyl]-2-(trifluoro-méthyl)-benzènesulfonamide, clopyralide, 2,4-D, isoxaflutole, glyphosates, glufosinate-ammonium, diméthèneamide, S-diméthèneamide, acétochlor, métolachlor, S-métolachlor, pendiméthaline, carfentrazone-éthyle, pyridates, bentazon, diuron, isoproturon, bromoxynil, atrazine, tertbutylazine, métribuzine et dicamba.

**13.** Mélange herbicide synergique selon les revendications 1 à 3, 9 à 12, contenant comme composant A) un dérivé de benzoyle 3-hétérocyclyl-substitué de formule I, où

$R^2$ désigne un reste hétérocyclique choisi dans le groupe: 4,5-dihydroisoxaazole-3-yle, 4,5-dihydroisoxaazole-4-yle, 4,5-dihydroisoxaazole-5-yle, tandis que les trois restes mentionnés peuvent être éventuellement substitués une ou plusieurs fois par un halogène ou un groupe alkyle en $C_1$-$C_4$, alcoxy en $C_1$-$C_4$, halogénoalkyle en $C_1$-$C_4$, halogénoalcoxy en $C_1$-$C_4$ ou alkylthio en $C_1$-$C_4$.

**14.** Mélange herbicide synergique selon les revendications 1 à 3, 9 à 12, contenant comme composant A) un dérivé de benzoyle 3-hétérocyclyl-substitué de formule I, où

$R^2$ désigne un reste hétérocyclique choisi dans le groupe: thiazole-2-yle, thiazole-4-yle et thiazole-5-yle, tandis que les trois restes mentionnés peuvent être éventuellement substitués une ou plusieurs fois par un halogène ou un groupe alkyle en $C_1$-$C_4$, alcoxy en $C_1$-$C_4$, halogénoalkyle en $C_1$-$C_4$, halogénoalcoxy en $C_1$-$C_4$ ou alkylthio en $C_1$-$C_4$.

**15.** Mélange herbicide synergique selon les revendications 13 à 14, contenant comme composant B) au moins un composé herbicide choisi dans le groupe B1, B2, B4 à B11 ou B14, tel que dfini dans la revendication 1.

**16.** Mélange herbicide synergique selon les revendications 13 ou 14, contenant comme composant B) au moins un composé herbicide choisi dans le groupe B12 tel que défini dans la revendication 1.

**17.** Mélange herbicide synergique selon les revendications 13 à 14, contenant comme composant B) au moins un composé herbicide choisi dans le groupe suivant: propanil, pyridates, pyridafol, dinitrophénols, dipyridylène, triazinone, uracile ou biscarbamate.

**18.** Mélange herbicide synergique selon les revendications 1 à 17, contenant comme composant A) un dérivé de benzoyle 3-hétérocyclyl-substitué de formule I et comme composant B) un composé herbicide tel que défini dans les revendications 1 à 17.

**19.** Mélange herbicide synergique selon les revendications 1 à 17, contenant comme composant A) un dérivé de benzoyle 3-hétérocyclyl-substitué de formule I et comme composant B) deux composés herbicides tels que dfinis dans les revendications 1 à 17.

**20.** Mélange herbicide synergique selon les revendications 1 à 10, contenant un dérivé de benzoyle 3-hétéro-cyclyl-substitué de formule I et comme composant B) un composé herbicide tel que défini dans les revendications 1 à 10 et un composé herbicide des groupes B12 et B14.

**21.** Mélange herbicide synergique selon les revendications 1 à 20, **caractérisé par le fait que** le composant A) et le composant B) sont dans un rapport en poids de 1:0,002 à 1:800.

**22.** Mélange herbicide synergique selon la revendication 21, **caractérisé par le fait que** le composant A) et le composant B) sont dans un rapport en poids de 1:0,003 à 1:160.

**23.** Produit herbicide, contenant une quantité à efficacité herbicide d'un mélange herbicide synergique selon les revendications 1 à 20, au oins un support inerte liquide et/ou solide et en option au moins une substance tensioactive.

**24.** Produit herbicide selon la revendication 23, **caractérisé par le fait que** le composant A) et le composant B) sont dans un rapport en poids de 1:0,002 à 1:800.

**25.** Produit herbicide selon la revendication 24, **caractérisé par le fait que** le composant A) et le composant B) sont dans un rapport en poids de 1:0,003 à 1:160.

**26.** Procédé pour la préparation de produits herbicides selon la revendication 23, **caractérisé par le fait qu'**on mélange le composant A, le composant B, au moins un support inerte liquide et/ou solide et en option une substance tensioactive.

**27.** Procédé pour la lutte contre la croissance indésirable des plantes, **caractérisé par le fait qu'**on élabore un mélange herbicide synergique selon les revendications 1 à 20, avant, pendant et/ou après la levée de plantes indésirables, tandis que les composés à activité herbicide des composants A) et B) peuvent être appliqués simultanément ou successivement.

**28.** Procédé pour la lutte contre la croissance indésirable des plantes selon la revendication 27, **caractérisé par le fait qu'**on traite les feuilles des plantes cultivées et des plantes indésirables.

## Claims

**1.** A synergistic herbicidal mixture comprising

A) at least one 3-heterocyclyl-substituted benzoyl derivative of the formula I

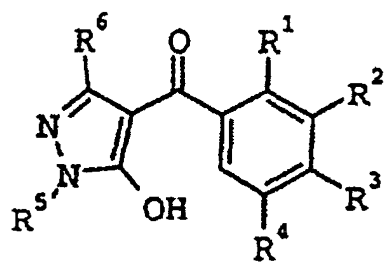

I

in which the variables have the following meanings:

$R^1$, $R^3$ are hydrogen, halogen, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylthio, $C_1$-$C_6$-alkylsulfinyl or $C_1$-$C_6$-alkylsulfonyl;

$R^2$ is a heterocyclic radical selected from the group: thiazol-2-yl, thiazol-4-yl, thiazol-5-yl, 4,5-dihydroisoxazol-3-yl, 4,5-dihydroisoxazol-4-yl and 4,5-dihydroisoxazol-5-yl, it being possible for the six abovementioned radicals to be optionally mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R_4$ is hydrogen, halogen or $C_1$-$C_6$-alkyl;

$R_5$ is $C_1$-$C_6$-alkyl;

$R_6$ is hydrogen or $C_1$-$C_6$-alkyl;

or one of its environmentally acceptable salts;

and

B) a synergistically effective amount of at least one herbicidal compound from among groups B1 to B16:

B1 acetyl-CoA carboxylase inhibitors (ACCs):

- cyclohexenone oxime ethers:
  alloxydim, clethodim, cloproxydim, cycloxydim, sethoxydim, tralkoxydim, butroxydim, clefoxydim or tepraloxydim;
- phenoxyphenoxypropionic esters:
  clodinafop-propargyl (and, if appropriate, cloquintocet), cyhalofop-butyl, diclofop-methyl, fenoxaprop-ethyl, fenoxaprop-P-ethyl, fenthiaprop-ethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-terfuryl; or
- arylaminopropionic acids:
  flamprop-methyl or flamprop-isopropyl;

B2 acetolactate synthase inhibitors (ALSs):

- imidazolinones:
  imazapyr, imazaquin, imazamethabenz-methyl (imazame), imazamoc, imazapic, imazethapyr or imazamethapyr;
- pyrimidyl ethers:
  pyrithiobac-acid, pyrithiobac-sodium, bispyribac-sodium, KIH-6127 or pyribenzoxym;
- sulfonamides:
  florasulam, flumetsulam or metosulam; or
- sulfonylureas:
  amidosulfuron, azimsulfuron, bensulfuron-methyl, chlorimuron-ethyl, chlorsulfuron, cinosulfuron, cyclosulfamuron, ethametsulfuron-methyl, ethoxy-sulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]-amino]carbonyl]-2-(trifluoromethyl)-benzenesulfonamide, sulfosulfuron or iodosulfuron;

B3 amides:

- allidochlor (CDAA), benzoylprop-ethyl, bromobutide, chlorthiamid, diphenamid, etobenzanid (benzchlomet), fluthiamide, fosamin or monalide;

B4 auxin herbicides:

- pyridinecarboxylic acids:
  clopyralid or picloram; or
- 2,4-D or benazolin;

B5 auxin transport inhibitors:

- naptalame or diflufenzopyr;

B6 carotenoid biosynthesis inhibitors:

- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;

B7 enolpyruvylshikimate-3-phosphate synthase inhibitors (ESPS):

- glyphosate or sulfosate;

B8 glutamine synthetase inhibitors:

- bilanafos (bialaphos) or glufosinate-ammonium;

B9 lipid biosynthesis inhibitors:

- anilides:
  anilofos or mefenacet;
- chloroacetanilides:
  dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
- thioureas:
  butylate, cycloate, di-allate, dimepiperate, EPTC, esprocarb, molinate, pebulate, prosulfocarb, thiobencarb (benthiocarb), tri-allate or vernolate; or
- benfuresate or perfluidone;

B10 mitosis inhibitors:

- carbamates:
  asulam, carbetamid, chlorpropham, orbencarb, pronamid (propyzamid), propham or tiocarbazil;
- dinitroanilines:
  benefin, butralin, dinitramin, ethalfluralin, fluchloralin, oryzalin, pendimethalin, prodiamine or trifluralin;
- pyridines:
  dithiopyr or thiazopyr; or
- butamifos, chlorthal-dimethyl (DCPA) or maleic hydrazide;

B11 protoporphyrinogen IX oxidase inhibitors:

- diphenyl ethers:
  acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
- oxadiazoles:
  oxadiargyl or oxadiazon;
- cyclic imides:
  azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or
- pyrazoles:
  ET-751, JV 485 or nipyraclofen;

B12 photosynthesis inhibitors:

- propanil, pyridate or pyridafol;
- benzothiadiazinones:
  bentazone;
- dinitrophenols:
  bromofenoxim, dinoseb, dinoseb acetate, dinoterb or DNOC;
- dipyridylenes:
  cyperquat chloride, difenzoquat methylsulfate, diquat or paraquat dichloride;
- ureas:
  chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols:
  bomoxynil or ioxynil;
- chloridazon;
- triazines:
  ametryn, atrazine, cyanazine, desmetryn, dimethamethryn, hexazinon, prometon, prometryn, propazine, simazine, simetryn, terbumeton, terbutryn, terbutylthazine or trietazine;
- triazinones:

metamitron or metribuzin;

- uracils:
bromacil, lenacil or terbacil; or
- biscarbamates:
desmedipham or phenmedipham;

B13 synergists:

- oxiranes:
tridiphane;

B14 growth regulators:

- aryloxyalkanoic acids:
2,4-DB, clomeprop, dichlorprop, dichlorprop-P (2,4-DP-P), fluroxypyr, MCPA, MCPB, mecoprop, mecoprop-P or triclopyr;
- benzoic acids:
chloramben or dicamba; or
- quinolinecarboxylic acids:
quinclorac or quinmerac;

B15 cell wall synthesis inhibitors:

- isoxaben or dichlobenil;

B16 various other herbicides:

- dichloropropionic acids:
dalapon;
- dihydrobenzofurans:
ethofumesate;
- phenylacetic acids:
chlorfenac (fenac); or
- aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazine-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triazofenamid, triaziflan or trimeturon;

or their environmentally acceptable salts.

**2.** A synergistic herbicidal mixture as claimed in claim 1, comprising, as component A), a 3-heterocyclyl-substituted benzoyl derivative of the formula I where $R^4$ is hydrogen.

**3.** A synergistic herbicidal mixture as claimed in claim 1 or 2, comprising, as component A), a 3-heterocyclyl-substituted benzoyl derivative of the formula I, where

$R^1$, $R^3$ are halogen, $C_1$-$C_6$-alkyl, $C_1$-$C_6$-alkylthio, $C_1$-$C_6$-alkylsulfinyl or $C_1$-$C_6$-alkylsulfonyl.

**4.** A synergistic herbicidal mixture as claimed in any of claims 1 to 3, comprising, as component A), a 3-heterocyclyl-substituted benzoyl derivative of the formula I, where

$R^2$ is 4,5-dihydroisoxazol-3-yl which can be optionally mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**5.** A synergistic herbicidal mixture as claimed in any of claims 1 to 4, comprising, as component A), a 3-heterocyclyl-substituted benzoyl derivative of the formula I, where

$R^2$ is 4,5-dihydroisoxazol-3-yl, 5-methyl-4,5-dihydroisoxazol-3-yl, 5-ethyl-4,5-dihydroisoxazol-3-yl or 4,5-dimethyl-4,5-dihydroisoxazol-3-yl.

**6.** A synergistic herbicidal mixture as claimed in any of claims 1 to 5 comprising, as component A), 4-[2-chloro-3-(4,5-dihydroisoxazol-3-yl)-4-methylsulfonylbenzoyl]-1-methyl-5-hydroxy-1H-pyrazole.

**7.** A synergistic herbicidal mixture as claimed in any of claims 1 to 5 comprising, as component A), 4-[2-methyl-3-(4,5-dihydroisoxazol-3-yl)-4-methylsulfonylbenzoyl]-1-methyl-5-hydroxy-1H-pyrazole.

**8.** A synergistic herbicidal mixture as claimed in any of claims 1 to 3, comprising, as component A), a 3-heterocyclyl-substituted benzoyl derivative of the formula I, where

$R^2$ is a heterocyclic radical selected from the group thiazol-2-yl, thiazol-4-yl, thiazol-5-yl, 4,5-dihydroisoxazol-4-yl and 4,5-dihydroisoxazol-5-yl, where the five abovementioned radicals can be optionally mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**9.** A synergistic herbicidal mixture as claimed in any of claims 1 to 8 comprising, as component B), at least one herbicidal compound from among groups B1, B2, B4 to B12 or B14 as defined in claim 1.

**10.** A synergistic herbicidal mixture as claimed in any of claims 1 to 9 comprising, as component B), at least one herbicidal compound from among the following groups:

B1 acetyl-CoA carboxylase inhibitors (ACCs) :

- cyclohexenone oxime ethers:
  alloxydim, clethodim, cloproxydim, cycloxydim, sethoxydim, tralkoxydim, butroxydim, clefoxydim or tepraloxydim; or
- phenoxyphenoxypropionic esters:
  clodinafop-propargyl (and, if appropriate, cloquintocet), cyhalofop-butyl, diclofop-methyl, fenoxaprop-ethyl, fenoxaprop-P-ethyl, fenthiaprop-ethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-terfuryl;

B2 acetolactate synthase inhibitors (ALSs):

- imidazolinones:
  imazapyr, imazaquin, imazamethabenz-methyl (imazame), imazamoc, imazapic, imazethapyr or imazamethapyr;
- pyrimidyl ethers:
  pyrithiobac-acid, pyrithiobac-sodium, bispyribac-sodium, KIH-6127 or pyribenzoxym;
- sulfonamides:
  florasulam, flumetsulam or metosulam; or
- sulfonylureas:
  amidosulfuron, azimsulfuron, bensulfuron-methyl, chlorimuron-ethyl, chlorsulfuron, cinosulfuron, cyclosulfamuron, ethametsulfuron-methyl, ethoxy-sulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]-amino]carbonyl]-2-(trifluoromethyl)-benzenesulfonamide, sulfosulfuron or iodosulfuron;

B4 auxin herbicides:

- pyridinecarboxylic acids:
  clopyralid or picloram; or
- 2,4-D;

B5 auxin transport inhibitors:

- naptalame or diflufenzopyr;

B6 carotenoid biosynthesis inhibitors:

- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;

B7 enolpyruvylshikimate-3-phosphate synthase inhibitors (ESPS):

- glyphosate or sulfosate;

B8 glutamine synthetase inhibitors:

- bilanafos (bialaphos) or glufosinate-ammonium;

B9 lipid biosynthesis inhibitors:

- chloroacetanilides:
  dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor; or
- thioureas:
  butylate, cycloate, di-allate, dimepiperate, EPTC, esprocarb, molinate, pebulate, prosulfocarb, thiobencarb (benthiocarb), tri-allate or vernolate;

B10 mitosis inhibitors:

- dinitroanilines:
  benefin, butralin, dinitramin, ethalfluralin, fluchloralin, oryzalin, pendimethalin, prodiamine or trifluralin;

B11 protoporphyrinogen IX oxidase inhibitors:

- diphenyl ethers:
  acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
- oxadiazoles:
  oxadiargyl or oxadiazon;
- cyclic imides:
  azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or
- pyrazoles:
  ET-751, JV 485 or nipyraclofen;

B12 photosynthesis inhibitors:

- pyridate or pyridafol;
- benzothiadiazinones:
  bentazone;
- dipyridylenes:
  cyperquat chloride, difenzoquat methylsulfate, diquat or paraquat dichloride;
- ureas:
  chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols:
  bomoxynil or ioxynil;
- chloridazon;

- triazines:
ametryn, atrazine, cyanazine, desmetryn, dimethamethryn, hexazinon, prometon, prometryn, propazine, simazine, simetryn, terbumeton, terbutryn, terbutylthazine or trietazine; or
- triazinones:
metamitron or metribuzin;

B14 growth regulators:

- aryloxyalkanoic acids:
2,4-DB, clomeprop, dichlorprop, dichlorprop-P (2,4-DP-P), fluroxypyr, MCPA, MCPB, mecoprop, mecoprop-P or triclopyr;
- benzoic acids:
chloramben or dicamba; or
- quinolinecarboxylic acids:
quinclorac or quinmerac.

**11.** A synergistic herbicidal mixture as claimed in any of claims 1 to 10 comprising, as component B, at least one herbicidal compound from among the following groups:

cycloxydim, sethoxydim, clodinafop (and, if appropriate, cloquintocet), fenoxaprop-ethyl, fenoxaprop-P-ethyl, imazopyr, imazaquin, imazamethabenz, imazethapyr, pyrithiobac-sodium, metosulam, halosulfuron-methyl, nicosulfuron, N-[[[4-methoxy-6-(trifluoromethyl)-1,3,5-triazin-2-yl]amino]carbonyl]-2-(trifluoromethyl)benzene-sulfonamide, flufenacet, 2,4-D, diflufenzopyr, isoxaflutole, sulcotrione, glyphosate, glufosinate-ammonium, dimethenamid, S-metolachlor, benthiocarb, pendimethalin, acifluorfen, carfentrazone-ethyl, cinidon-ethyl, pyridate, bentazon, paraquat dichloride, diuron, isoproturon, bromoxynil, chloridazon, atrazine, metribuzin, MCPA, dicamba and quinclorac.

**12.** A synergistic herbal mixture as claimed in any of claims 1 to 11 comprising, as component B), at least one herbicidal compound selected from the group:

clodinafop (and, if appropriate, cloquintocet), diflufenzopyr, imazethapyr, flumetsulam, pyrithiobac-sodium, nicosulfuron, N-[[[4-methoxy-6-(trifluoromethyl)-1,3,5-triazin-2-yl]amino]-carbonyl]-2-(trifluoromethyl)benzenesulfonamide, clopyralid, 2,4-D, isoxaflutole, glyphosate, glufosinate-ammonium, dimethenamid, S-dimethenamid, acetochlor, metolachlor, S-metolachlor, pendimethalin, carfentrazone-ethyl, pyridate, bentazon, diuron, bomoxynil, atrazine, terbutylazin, metribuzin and dicamba.

**13.** A synergistic herbicidal mixture as claimed in any of claims 1 to 3, 9 to 12 comprising, as component A), a 3-heterocyclyl-substituted benzoyl derivative of the formula I, where

$R^2$ is a heterocyclic radical selected from the group 4,5-dihydroisoxazol-3-yl, 4,5-dihydroisoxazol-4-yl and 4,5-dihydroisoxazol-5-yl, it being possible for the three abovementioned radicals to be optionally mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**14.** A synergistic herbicidal mixture as claimed in any of claims 1 to 3, 9 to 12 comprising, as component A), a 3-heterocyclyl-substituted benzoyl derivative of the formula I, where

$R^2$ is a heterocyclic radical selected from the group: thiazol-2-yl, thiazol-4-yl and thiazol-5-yl, it being possible for the three abovementioned radicals to be optionally mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**15.** A synergistic herbicidal mixture as claimed in claim 13 or 14 comprising, as component B), at least one herbicidal compound from among groups B1, B2, B4 to B11 or B14 as defined in claim 1.

**16.** A synergistic herbicidal mixture as claimed in claim 13 or 14 comprising, as component B), at least one herbicidal compound from among group B12 as defined in claim 1.

**17.** A synergistic herbicidal mixture as claimed in claim 13 or 14 comprising, as component B), at least one herbicidal compound from among the following groups:

propanil, pyridate, pyridafol, dinitrophenols, dipyridylenes, triazinones, uracils or biscarbamates.

**18.** A synergistic herbicidal mixture as claimed in any of claims 1 to 17 comprising, as component A), a 3-heterocyclyl-substituted benzoyl derivative of the formula I and, as component B, a herbicidal compound as defined in claims 1 to 17.

**19.** A synergistic herbicidal mixture as claimed in any of claims 1 to 17 comprising, as component A), a 3-heterocyclyl-substituted benzoyl derivative of the formula I and, as component B, two herbicidal compounds as defined in claims 1 to 17.

**20.** A synergistic herbicidal mixture as claimed in any of claims 1 to 10 comprising a 3-heterocyclyl-substituted benzoyl derivative of the formula I and, as component B, a herbicidal compound as defined in claims 1 to 10 and a herbicidal compound from among groups B12 and B14.

**21.** A synergistic herbicidal mixture as claimed in any of claims 1 to 20, wherein component A) and component B) are present in a weight ratio of from 1:0.002 to 1:800.

**22.** A synergistic herbicidal mixture as claimed in claim 21, wherein component A) and component B) are present in a weight ratio of from 1:0.003 to 1:160.

**23.** A herbicidal composition comprising a herbicidally effective amount of a synergistic herbicidal mixture as claimed in any of claims 1 to 20, at least one inert liquid and/or solid carrier and, if desired, at least one surface-active substance.

**24.** A herbicidal composition as claimed in claim 23, wherein component A) and component B) are present in a weight ratio of from 1:0.002 to 1:800.

**25.** A herbicidal composition as claimed in claim 24, wherein component A) and component B) are present in a weight ratio of from 1:0.003 to 1:160.

**26.** A process for the preparation of herbicidal compositions as claimed in claim 23, wherein component A, component B, at least one inert liquid and/or solid carrier and, if desired, a surface-active substance are mixed.

**27.** A method of controlling undesired vegetation, which comprises applying a synergistic herbicidal mixture as claimed in any of claims 1 to 20 before, during and/or after the emergence of undesired plants, it being possible for the herbicidally effective compounds of components A) and B) to be applied simultaneously or in succession.

**28.** A method for controlling undesired vegetation as claimed in claim 27, wherein the leaves of the crop plants and of the undesired plants are treated.